(19) Europäisches Patentamt
European Patent Office
Office européen des brevets

(11) Veröffentlichungsnummer: **0 261 261**
**B1**

(12) # EUROPÄISCHE PATENTSCHRIFT

(45) Veröffentlichungstag der Patentschrift: **01.08.90**

(51) Int. Cl.⁵: **B23Q 3/157**

(21) Anmeldenummer: **86113064.9**

(22) Anmeldetag: **23.09.86**

(54) **Bearbeitungsmaschine.**

(43) Veröffentlichungstag der Anmeldung: **30.03.88 Patentblatt 88/13**

(45) Bekanntmachung des Hinweises auf die Patenterteilung: **01.08.90 Patentblatt 90/31**

(84) Benannte Vertragsstaaten: **AT BE CH DE FR GB IT LI LU NL SE**

(73) Patentinhaber: **Hüller Hille GmbH, Schwieberdinger Strasse 80, D-7140 Ludwigsburg(DE)**

(72) Erfinder: **Jaissle, Hans-Ulrich, Imbröder Strasse 34, D-7140 Ludwigsburg(DE)**
Erfinder: **Dietrich, Geiger, Kirchstrasse 7, D-7141 Grossbottwar(DE)**
Erfinder: **Hofmann, Manfred, Rechbergstrasse 5, D-7141 Möglingen(DE)**

(74) Vertreter: **Beyer, Rudi, Patentanwalt Dipl.-Ing. Rudi Beyer Am Dickelsbach 8, D-4030 Ratingen 6 (Hösel)(DE)**

(56) Entgegenhaltungen:
**EP-A- 0 133 456**
**EP-A- 0 137 117**
**EP-A- 0 193 465**
**BE-A- 874 891**
**DE-A- 2 026 221**
**DE-A- 2 055 562**
**DE-A- 2 617 608**
**DE-A- 2 630 047**
**FR-A- 2 568 802**
**GB-A- 2 056 350**
**GB-A- 2 151 954**
**US-A- 3 286 595**

**WERKSTATT UND BETRIEB, Jahrgang 119, Nr. 6 Juni 1986, Seiten 437-440; Carl Hanser Velag, München, DE B. GRÜN et al.: "Flexibles Fertigungssystem zur Komplettbearbeitung von LKW-Getriebegehäusen."**
**WERKSTATT UND BETRIEB, Jahrgang 117, Nr. 8,**

(56) Entgegenhaltungen: (Fortsetzung)
**August 1984, Seiten A40,A41;**
**MAUSER-TECHNOLOGIE-INFORMATION: "Flexible Fertigungszelle MAUSER TMC 1000 mit Bohrkopfwechsler für Werkstücke bis 1000x1000x1000 mm."**
**MACHINES PRODUCTION, 7 November 1985, Seiten 27,31,33-38; Sofetec, Boulogne, FRA. "Formage: enfin la flexibilité."**
**PATENT ABSTRACTS OF JAPAN, Seite 4483M77 & JP-A-52 071 776 (TOSHIBA KIKAI K.K.) 15-06-1977**
**PATENT ABSTRACTS OF JAPAN, Band 7, Nr. 92, (M-208)(1237), 16 April 1983 & JP-A-58 015 651 (NIIGATA TEKKOSHO K.K.) 29-01-1983**
**WERKSTATT UND BETRIEB, Jahrgang 117, Nr. 8, August 1984, Seiten 471-476; München, DE H.HAMMER: "Konzeptionen flexibler Fertigungssysteme für den Fahrzeugbau."**
**WERKSTATTTECHNIK; Zeitschrift für Industrielle Fertigung; Jahrgang 74, Nr. 11, November 1984, Seiten 633, 634; Springer Verlag, Berlin, DE "Baukasten für flexible Systeme um Bohrkopfwechselsystem ergänzt."**

**EP 0 261 261 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Bearbeitungsmaschine mit einem auf einem Unterbau zwischen einer Bearbeitungsstellung und einer Werkzeugwechselstellung längsverschieblichen Schlitten, mit einem auf diesem Schlitten angeordneten und relativ zu diesem in derselben Richtung längsverschieblichen Hilfsschlitten, mit einer als Wechselring ausgebildeten, auf dem Hilfsschlitten um eine vertikale Achse motorisch drehbar angeordneten Werkzeugwechselvorrichtung, die an deren Umfang mindestens zwei Aufnahmekupplungen zum An- und Abkuppeln von gegeneinander austauschbaren Werkzeugträgern aufweist, mit einer auf dem Schlitten angeordneten Antriebseinheit, die wenigstens eine Energiezuführvorrichtung für den Antrieb des in Arbeitsstellung befindlichen Werkzeugträgers und mindestens ein Aufnahme- und Spannelement zum Fixieren und Spannen des in Arbeitsstellung befindlichen Werkzeugträgers aufweist, und die vom Wechselring ringförmig umschlossen ist, und mit einem auf dem Unterbau angebrachten Widerlager, das bei einer Rückzugbewegung von der Bearbeitungsstellung in die Werkzeugwechselstellung bewirkt, daß der Wechselring derart angehalten wird, daß er gemeinsam mit dem in Arbeitsstellung befindlichen Werkzeugträger durch eine Relativbewegung gegenüber der weiter zurückfahrenden Antriebseinheit stehenbleibt und dabei den Werkzeugträger von der Antriebseinheit löst, wobei nutartige Kurven im Hilfsschlitten angebracht sind, die mit Führungselementen am Schlitten zusammenwirken und beim weiteren Zurückführen der Antriebseinheit eine vertikale Hubbewegung des Wechselringes bewirken, derart, daß die abgestellten Werkzeugträger von Ablagen durch den Wechselring abgehoben werden, um anschließend durch eine Drehbewegung des Wechselringes den zuvor betriebenen Werkzeugträger gegen einen anderen Werkzeugträger auszuwechseln, der daraufhin bei entgegengesetzter Stellbewegung der Antriebseinheit in umgekehrter Reihenfolge an diese angekoppelt wird.

Des weiteren betrifft die Erfindung eine Bearbeitungsmaschine mit einem auf einem Unterbau zwischen einer Bearbeitungsstellung und einer Werkzeugwechselstellung längsverschieblichen Schlitten, mit einem auf diesem Schlitten angeordneten und relativ zu diesem in derselben Richtung längsverschieblichen Hilfsschlitten, mit einer als Wechselring ausgebildeten, auf dem Hilfsschlitten um eine vertikale Achse motorisch drehbar angeordneten Werkzeugwechselvorrichtung, die an deren Umfang mindestens zwei Aufnahmekupplungen zum An- und Abkuppeln von gegeneinander austauschbaren Werkzeugträgern aufweist, mit einer auf dem Schlitten angeordneten Antriebseinheit, die wenigstens eine Energiezuführvorrichtung für den Antrieb des in Arbeitsstellung befindlichen Werkzeugträgers aufweist, und die vom Wechselring ringförmig umschlossen ist, mit Mitteln zur Fixierung und Spannung des in Arbeitsstellung befindlichen Werkzeugträgers an die Antriebseinheit, und mit einem auf dem Unterbau angebrachten Widerlager, das bei einer Rückzugbewegung von der Bearbeitungsstellung in die Werkzeugwechselstellung bewirkt, daß der Wechselring derart angehalten wird, daß er gemeinsam mit dem in Arbeitsstellung befindlichen Werkzeugträger durch eine Relativbewegung gegenüber der weiter zurückfahrenden Antriebseinheit stehenbleibt und dabei den Werkzeugträger von der Antriebseinheit löst, wobei nutartige Kurven im Hilfsschlitten angebracht sind, die mit Führungselementen am Schlitten zusammenwirken und beim weiteren Zurückführen der Antriebseinheit eine vertikale Hubbewegung des Wechselringes bewirken, derart, daß die abgestellten Werkzeugträger von Ablagen durch den Wechselring abgehoben werden, um anschließend durch eine Drehbewegung des Wechselringes den zuvor betriebenen Werkzeugträger gegen einen anderen Werkzeugträger auszuwechseln, der daraufhin bei entgegengesetzter Stellbewegung der Antriebseinheit in umgekehrter Reihenfolge an diese angekoppelt wird.

Die Erfindung betrifft außerdem eine Bearbeitungsmaschine mit einem auf einem Unterbau zwischen einer Bearbeitungsstellung und einer Werkzeugwechselstellung längsverschieblichen Schlitten, mit einem auf diesem Schlitten angeordneten und relativ zu diesem in derselben Richtung längsverschieblichen Hilfsschlitten, mit einer als Wechselring ausgebildeten, auf dem Hilfsschlitten um eine vertikale Achse motorisch drehbar angeordneten Werkzeugwechselvorrichtung, die an deren Umfang mindestens zwei Aufnahmekupplungen zum An- und Abkuppeln von gegeneinander austauschbaren Werkzeugträgern aufweist, mit einer auf dem Schlitten angeordneten Antriebseinheit, die wenigstens eine Energiezuführvorrichtung für den Antrieb des in Arbeitsstellung befindlichen Werkzeugträgers aufweist, und die vom Wechselring ringförmig umschlossen ist, und mit einem auf dem Unterbau angebrachten Widerlager, das bei einer Rückzugbewegung von der Bearbeitungsstellung in die Werkzeugwechselstellung bewirkt, daß der Wechselring derart angehalten wird, daß er gemeinsam mit dem in Arbeitsstellung befindlichen Werkzeugträger durch eine Relativbewegung gegenüber der weiter zurückfahrenden Antriebseinheit stehenbleibt und dabei den Werkzeugträger von der Antriebseinheit löst, wobei nutartige Kurven im Hilfsschlitten angebracht sind, die mit Führungselementen am Schlitten zusammenwirken und beim weiteren Zurückführen der Antriebseinheit eine vertikale Hubbewegung des Wechselringes bewirken, derart, daß die abgestellten Werkzeugträger von Ablagen durch den Wechselring abgehoben werden, um anschließend durch eine Drehbewegung des Wechselringes den zuvor betriebenen Werkzeugträger gegen einen anderen Werkzeugträger auszuwechseln, der daraufhin bei entgegengesetzter Stellbewegung der Antriebseinheit in umgekehrter Reihenfolge an diese angekoppelt wird.

Weiter betrifft die Erfindung eine Bearbeitungsmaschine auf einem mit einem Unterbau zwischen einer Bearbeitungsstellung und einer Werkzeugwechselstellung längsverschieblichen Schlitten, mit einem auf diesem Schlitten angeordneten und relativ zu diesem in derselben Richtung längsverschieblichen Hilfsschlitten, mit einer als Wechselring ausgebildeten, auf dem Hilfsschlitten um eine vertikale Achse motorisch drehbar angeordneten Werkzeugwechselvorrichtung, die an deren Umfang mindestens zwei Aufnahmekupplungen zum An- und Abkuppeln von gegeneinander austauschbaren Werkzeugträgern aufweist, mit einer auf dem Schlitten angeordneten Antriebseinheit, die wenigstens eine Energiezuführvorrichtung für den Antrieb des in Arbeitsstellung befindlichen Werkzeugträgers aufweist, und die vom Wechselring ringförmig umschlossen ist, mit Mitteln zur Fixierung und Spannung des in Arbeitsstellung befindlichen Werkzeugträgers an die Antriebseinheit, und mit Stellgliedern, die bei einer Rückzugbewegung von der Bearbeitungsstellung in die Werkzeugwechselstellung bewirken, daß der Wechselring derart angehalten wird, daß er gemeinsam mit dem in Arbeitsstellung befindlichen Werkzeugträger durch eine Relativbewegung gegenüber der Antriebseinheit stehenbleibt und dabei den Werkzeugträger von der Antriebseinheit löst, wobei zwischen dem Schlitten und dem Hilfsschlitten wirkende Mittel angeordnet sind, die eine vertikale Hubbewegung des Wechselringes bewirken, derart, daß die abgestellten Werkzeugträger von Ablagen durch den Wechselring abgehoben werden, um anschließend durch eine Drehbewegung des Wechselringes den zuvor betriebenen Werkzeugträger gegen einen anderen Werkzeugträger auszuwechseln, der daraufhin bei entgegengesetzter Stellbewegung der Antriebseinheit in umgekehrter Reihenfolge an diese angekoppelt wird.

Schließlich betrifft die Erfindung eine Bearbeitungsmaschine mit einem auf einem Unterbau zwischen einer Bearbeitungsstellung und einer Werkzeugwechselstellung längsverschieblichen Schlitten, mit einem auf diesem Schlitten angeordneten und relativ zu diesem in derselben Richtung längsverschieblichen Hilfsschlitten, mit einer als Wechselring ausgebildeten, auf dem Hilfschlitten um eine vertikale Achse motorische drehbar angeordneten Werkzeugwechselvorrichtung, die an deren Umfang mindestens zwei Aufnahmekupplungen zum An- und Abkuppeln von gegeneinander austauschbaren Werkzeugträgern aufweist, mit einer auf dem Schlitten angeordneten Antriebseinheit die wenigsten eine Energiezuführvorrichtung für den Antrieb des in Arbeitsstellung befindlichen Werkzeugträgers und mindestens ein Aufnahme- und Spannelement zum Fixieren und Spannen des in Arbeitsstellung befindlichen Werkzeugträgers aufweist, und die vom Wechselring ringförmig umschlossen ist, und mit einem auf dem Unterbau angebrachten Widerlager, das bei einer Rückzugbewegung von der Bearbeitungsstellung in die Werkzeugwechselstellung bewirkt, daß der Wechselring derart angehalten wird, daß er gemeinsam mit dem in Arbeitsstellung befindlichen Werkzeugträger durch eine Relativbewegung gegenüber der weiter zurückfahrenden Antriebseinheit stehenbleibt und dabei den Werkzeugträger von der Antriebseinheit (10) löst, wobei in der Werkzeugwechselstellung Ablagen für die abgestellte Werkzeugträger mit Mitteln zu deren Höhenverstellung vorgesehen sind, die mit dem Wechselring derart zusammenwirken, daß die abgestellten Werkzeugträger durch Senken der Ablagen vom Wechselring aufgenommen werden, um anschließend durch eine Drehbewegung des Wechselringes den zuvor betriebenen Werkzeugträger gegen einen anderen Werkzeugträger auszuwechseln, der daraufhin bei entgegengesetzter Stellbewegung der Antriebseinheit in umgekehrter Reihenfolge an diese angekoppelt wird.

Durch die DE-A 0 137 117 ist eine Bearbeitungsmaschine mit einer Vorrichtung gemäß den Oberbegriffen der Patentansprüche 1 bis 5 vorbekannt. Diese Vorveröffentlichung geht auf die Anmelderin zurück. Die Werkzeugträger sind z.B jeweils nur durch Gewichtskraft in Aufnahmekupplungen in den Werkzeugträgeraufnahmen am Wechselring halterbar. Die Werkzeugträger könnten allerdings auch kraftschlüssig in den Aufnahmekupplungen gehaltert sein. Außerdem sind die Werkzeugträger vom Wechselring in zwei oder mehreren, senkrecht zueinander stehenden Bewegungsrichtungen aufnehmbar. Die Widerlager am Werkzeugträger dienen sowohl zur Aufnahme im Wechselring als auch ggf. in einem Magazin. Unterhalb des Wechselringes ist mindestens ein Winkelhebel mit wenigstens einer Rolle angeordnet, wobei der Winkelhebel mit einer Koppelstange mit einem dem Schlitten zugeordneten, zu diesem längsverschieblich geführten Hilfsschlitten verbunden ist, wobei die Rolle in eine Steuerkurve in einer Endstellung einläuft, derart, daß in einer vorbestimmten Endstellung der Hilfsschlitten den Wechselring relativ zur Verschieberichtung des Schlittens durch entgegengesetzte Bewegung des Hilfsschlittens örtlich stillstehen läßt, wobei dem Wechselring durch zweckmäßig angeordnete nutartige Kurven im Hilfsschlitten o. dgl. mit örtlich angebrachten Führungselementen, z.B. Rollen, eine Hubbewegung in zwei entgegengesetzten Richtungen erteilt wird, wobei jeweils zwei oder mehrere nutartige Kurven über einen Teil ihrer Länge, insbesondere unter 45 Grad, parallel zueinander angeordnet sind. Der Antriebseinheit ist eine als Y-Achse dienende Vertikalführung zugeordnet.

Die vorbeschriebene Bearbeitungsmaschine paßt sich je nach Bearbeitungsaufgabe, Werkstückspektrum und Jahresproduktion unterschiedlichen Flexibilitätsanforderungen an. Sie ist ausbaubar und umbaufähig, was sowohl für die Maschine selbst als auch für ihrer Steuerung und Verkettung gilt. Eine erfindungsgemäße Vorrichtung läßt sich demgemäß als Einzelmaschine oder innerhalb eines verketteten Systems oder als Baugruppe, z. B. innerhalb einer Transferstraße, integrieren.

Im Unterschied zu einem sogenannten Bearbeitungszentrum ist in der Grundkonzeption der vorbeschriebenen Bearbeitungsmaschine keine Einzelspindel zum Einwechseln verschiedener Werkzeuge in die Antriebseinheit vorgesehen. Vielmehr werden komplette Werkzeugträger eingewechselt, deren Auslegung der Bearbeitungsaufgabe angepaßt ist. Zum Beispiel Fräsköpfe mit kräftiger Lagerung und starrer Werkzeugaufnahme für Messerköpfe oder aber Plandrehköpfe, wobei Spindel, Plandrehkopf, Planschiebeantrieb und Wegmessung in diesem Kopf untergebracht sind. Aber auch Einzelspindelköpfe zum automatischen Wechseln von Einzelwerkzeugen lassen sich bei einer erfindungsgemäßen Vorrichtung verwenden.

Die Werkzeugträger können automatisch innerhalb eines Bearbeitungszyklus oder halbautomatisch oder manuell beim Umrüsten, je nach der gestellten Anforderung, einwechselbar sein. Dabei ist keine Systembegrenzung auf eine bestimmte Anzahl von Werkzeugträgern gegeben. Das Wechselsystem ist unabhängig von der Größe der Werkzeugträger und deren Anzahl an sich offen bzw. unbegrenzt. Wichtig sind dabei in allen Fällen die kurzen Zugriffszeiten und kurzen Span-Zu-Span-Zeiten.

Vorteilhaft ist weiter die gute Zugänglichkeit für den Werkzeugwechsel sowie die gute Zugänglichkeit für die Instandhaltung.

Da sich immer nur ein Werkzeugträger in Arbeitsstellung zu befinden braucht, braucht die Energie- oder Medienzuführung nur einmal für den in Arbeitsstellung befindlichen Werkzeugträger vorgesehen zu werden.

Insgesamt läßt sich eine solche Vorrichtung sehr kompakt bauen, wobei es ohne weiteres möglich ist, die Vorrichtung auch zum Bearbeiten in der X- und in der Y-Achse einzurichten. Darüberhinaus sind mit einer derartigen Vorrichtung Tiefbohroperationen, Plandrehoperationen und Prüfvorgänge möglich.

An das Wechselsystem werden keine hohe Genauigkeitsanforderungen gestellt, weil nur ein bestimmter, in Arbeitsstellung befindlicher Werkzeugträger von der Antriebseinheit aufgenommen und angekoppelt wird. Deshalb braucht nur in dieser Position die erforderliche Genauigkeit hergestellt zu werden, nicht dagegen für die Werkzeugträger, die sich in Ablagestellung, z. B. rund um die Antriebseinheit, befinden.

Dadurch, daß der Wechselring die Antriebseinheit ringförmig umschließt, baut die Vorrichtung außerordentlich kompakt. Durch die besondere Art der Hub- und Schiebebewegung, die beim Wechseln von Werkzeugträgern mit einer derartigen Vorrichtung durchgeführt werden, ergeben sich außerordentlich kurze Nebenzeiten, so daß sich eine solche Vorrichtung in der Großserienfertigung mit besonderem Vorteil, beispielsweise in der Automobilindustrie, einsetzen läßt.

Bei der Bearbeitungseinheit gemäß der EP-A 0 137 117 ist somit folgende Konstruktion vorhanden:

1.1. Der Wechselring ist
1.1.1 um die Antriebseinheit ringförmig diese umschließend herum angeordnet;
1.1.2 mitfahrend mit der Antriebseinheit und deren Antriebsmotor, d. h. nicht ortsfest;
1.1.3 nicht über der Antriebseinheit, sondern in deren unteren Bereich befindlich angeordnet;
1.2 Der Wechselring übernimmt drei Funktionen:
1.2.1 Schwenken
1.2.2 Horizontale Relativbewegung zur Antriebseinheit;
1.2.3 Vertikale Relativbewegung zur Antriebseinheit;
1.3 Die beiden Relativbewegungen 1.2.2 und 1.2.3
1.3.1 werden mechanisch abgeleitet vom Hub eines Schlittens;
1.4 Der Wechselring hat Aufnahmen für z. B. vier Werkzeugträger.
1.5 Wechelring und Werkzeugträger können folgende Relativbewegungen zueinander ausführen:
1.5.1 Seitlich vorbeifahren;
1.5.2 Stirnseitig unterfahren;
1.5.3 Von unten hochfahren und dabei den oder die Werkzeugträger mit den am Wechselring vorhandenen Kupplungen aufnehmen;
1.5.4 Der Werkzeugträger kann nach oben herausgefahren werden;
1.6 Über den Wechselring werden keine Bearbeitungskräfte übertragen

**Zusammenfassung der Vorteile:**

a) Planes Ankuppeln/Abkuppeln des Werkzeugträgers an die/von der Antriebseinheit. Dabei werden gleichzeitig gekuppelt/entkuppelt:
- Hauptantrieb
- Zusatzantrieb
- Spannung
- Medienzuführung
- Messeinrichtungen
- Datenübertragungssystem

ohne zusätzliche Anstellelemente.

b) Absetzen der Werkzeugträger in ein Magazin bzw. Aufnehmen der Werkzeugträger aus dem Magazin.

c) Y-Achse möglich;

d) X-Achse möglich;

e) Es sind zwei bis vier Werkzeugträger ohne Magazin am Wechselring aufnehmbar.

f) Beliebig viele Werkzeugträger mit Zusatzmagazin verwendbar.

g) Nicht zur Bearbeitung benötigte Werkzeugträger werden abgesetzt und fahren nicht mit.

h) Gute Zugänglichkeit zu den Werkzeugen, da diese ebenerdig angeordnet sind und Spindel nach außen gerichtet sind.

i) Hohe Steifigkeit durch die Bauform Schlitten-Antriebs(träger)-Einheit-Werkzeugträger.

j) Keine Schwenkachse unter der Trägereinheit (Antriebseinheit).

k) Hohe Genauigkeit, da keine Schwenkachse unter der Trägereinheit (Antriebseinheit) angeordnet ist, sondern nur eine Werkzeugträgeraufnahme an der Antriebseinheit vorgesehen ist; keine Revolverkopfausführung.

l) Kurze Nebenzeiten; während eines Eilganges zurück wird die Werkzeugträgerspannung gelöst, d.h. der Werkzeugträger hängt jetzt am Wechselring. Im letzten Teil des Schlittenhubes wird der Werkzeugträger entkuppelt und von der Trägereinheit (Antriebseinheit) abgezogen. Anschließend wird – ebenfalls vor der Endposition – der Wechselring angehoben, und dann werden die im Magazin oder auf Ablagen befindlichen Köpfe angehoben und am Wechselring an dessen Kupplungen aufgenommen. Der Wechselring und die Werkzeugträger sind dann bereit zum Schwenken. Alle Bewegungen erfolgen während des Rückfahrens des Schlittens.

m) Mechanische Ableitung der Relativbewegungen, und zwar ohne zusätzliche elektrische oder hydraulische Zusatzbetätigung und ohne Schaltzeiten. Beim Vorwärtsfahren der Einheit Wechselring-Antriebseinheit-Motor-Werkzeugträger gilt entsprechend die umgekehrte Reihenfolge.

n) Abgestellte Werkzeugträger werden ohne Zusatzbewegungen der . Werkzeugträger selbst frei von den Aufnahmen des Wechselringes aufgenommen.

Diese Konzeption einer Bearbeitungseinheit hat sich inzwischen im In- und Ausland hervorragend bewährt.

Der Erfindung liegt die Aufgabe zugrunde, eine Bearbeitungseinheit gemäß den Oberbegriffen der Patentansprüche 1 bis 5 zu verbessern oder weiter auszugestalten. Insbesondere soll die technische Anwendungspalette vergrößert und erfindungsgemäß weitere Lösungen aufgezeigt werden.

Ausgehend von einer Bearbeitungsmaschine der gattungsgemäß vorausgesetzten Art wird diese Aufgabe erfindungsgemäß durch die jeweils in den Patentansprüchen 1 bis 5 wiedergegebenen Merkmale gelöst.

Bei Ausgestaltung gemäß Patentanspruch 1 oder **2** wird vor Erreichung der Endstellung der Werkzeugträger von der Antriebseinheit automatisch abgekoppelt und von Aufnahmehaltern des Wechselringes übernommen. Beim Verfahren des Schlittens in Richtung der Endstellung stößt der Hilfsschlitten gegen einen festen Anschlag, der z. B. als Rolle, Kugel, Stößel, Puffer, Schockabsorber, Stoßdämpfer o.dgl. ausgebildet sein kann wobei der Hilfsschlitten unter Federspannung immer in die Endstellung gedrückt wird. Am Hilfsschlitten sind auf einer oder auf beiden Seiten kulissenartige Führungsnuten mit horizontal verlaufenden Abschnitten und unter 45 Grad dazu nach unten mündende Teile vorgesehen, in die am Schlitten befestigte Rollen o.dgl. eingreifen. Stößt nun der Hilfsschlitten gegen den ungedämpften (starren) oder gedämpften Anschlag, dann wird der Hilfsschlitten gegen die Federkraft eines z.B. als Druckfeder ausgebildeten Federelementes verschoben. Sobald die Rollen in die nach unten unter einem spitzen Winkel verlaufenden Kulissen einlaufen, wird der Wechselring angehoben und hebt dadurch über seine Kupplungen auch die ihm zugeordneten Werkzeugträger an und ist danach bereit zum Schwenken. Um eine schabende oder sonstige schädliche Bewegung zwischen Anschlag und Hilfsschlitten zu vermeiden, können die aufeinander geleiteten Oberflächen mit einem reibungsmindernden Belag oder mindestens ein Teil mit einer Rolle, einer Kugel o. dgl. ausgestattet sein, so daß auch der vertikalen Hubbewegung des Hilfsschlittens in bezug auf den festen oder gedämpften Anschlag keine nennenswerten Reibungskräfte entgegenstehen und keine Beschädigungen erfolgen. Da der Hilfsschlitten mit dem Wechselring gekuppelt ist, sind die Bewegungen so aufeinander abgestimmt, daß der Wechselring relativ still stehen bleibt, sobald er gegen den starren oder gegen den in Endstellung befindlichen gedämpften Anschlag angelaufen ist.

Sofern der Anschlag am Hilfsschlitten über ein Dämpfungsglied über den Hilfsschlitten erfolgt, fährt bei geöffneter Werkzeugträgerspannung der Hilfsschlitten gegen den Anschlag der eingebauter Dämpfung. Über eine einstellbare bzw. gesteuerte (geregelte) Dämpfung wird der Hilfsschlitten mit Wechselring und Werkzeugträger langsam bis zum Stillstand verzögert abgebremst. Die weitere Bewegung des Bearbeitungsschlittens bewirkt eine vertikale Hubbewegung des Hilfsschlittens über die schon beschriebenen Kulissenkurven.

Sofern die Relativbewegung nicht mehr über den Schlittenhub und über Anschläge sowie Führungsnuten am Hilfsschlitten erfolgt (Patentanspruch 1 oder 2), werden diese Relativbewegungen nunmehr gemäß Patentanspruch 3 separat eingeleitet über Stellglieder, die eine horizontale Relativbewegung, z. B. über eine Kolben-Zylinder-Einheit und über den Längsverschiebbaren Hilfsschlitten und eine vertikale Relativbewegung des Hilfsschlittens und des Wechselringes über ein anderes Stellglied, z. B. eine weitere Kolben-Zylinder-Einheit und Winkelhebel, bewirken. Bei der zum Stande der Technik zählenden Bearbeitungsmaschine, die auf die Anmelderin zurückgeht, waren bei einer Ausführungsform sechzehn Aufnahmekupplungen vorhanden, während nach der Erfindung z. B. nur noch acht solcher Aufnahmekupplungen, insbesondere in der Ausführungsform nach Patentanspruch 2 vorhanden sein können. Bisher hatte man vier Elemente zum Spannen, Fixieren und als Anlage vorgesehen. Erfindungsgemäß kommt man z. B. auch nur mit zwei Elementen zum Spannen und mit vier Elementen zum Fixieren und als Anlage aus.

Bei der in Patentanspruch 4 beschriebenen Lösung erfolgt die horizontale Relativbewegung über einen festen oder gedämpften Anschlag des längsverschiebbaren Hilfsschlittens und die vertikale Relativbewegung des Wechselringes und des Hilfsschlittens in bezug auf die Werkzeugträger nur noch durch Anheben bzw. Absenken der Werkzeugträger selbst und/oder der Werkzeugträgerablagen, also nicht mehr durch einen Hub des Wechselringes mit dessen Hilfsschlitten. Bei der Ausführungsform nach Patentanspruch 4 kann der Wechselring selbst ohne Vertikalhub ausgebildet sein.

Bei Ausgestaltung gemäß Patentanspruch 5 erfolgt die Spannung des Werkzeugträgers an die Antriebseinheit direkt über den Wechselring, wobei die Spannkräfte über die Wechselringlagerung gehen.

In Patentanspruch 6 ist eine vorteilhafte Ausführungsform der Erfindung beschrieben, bei welcher mehrere Antriebskupplungen für den jeweils in Arbeitsstellung befindlichen Werkzeugträger vorgesehen sind, Solche können z.B. vorteilhaft sein, um z.B. einen Planschieber anzutreiben und/oder eine Pinole einzuschieben, und/oder eine Prüfeinrichtung einzuschwenken.

Durch Schwenken von Ablagen ist es möglich, daß alle nicht zur Bearbeitung einsetzbaren Köpfe in oder auf Ablagen abgestellt werden. Auf diese Weise ist es möglich, an der Peripherie z. B. sechs Werkzeugträger anzusetzen, aber in Arbeitsstellung nur einen Werkzeugträger mitzuführen, der fixiert, gespannt und mit Energie versorgt wird, während alle anderen Werkzeugträger auf einem Kreisbogen liegend angeordnet sind, allerdings die beiden jeweils vorderen Ablagen mit den auf ihnen ruhenden Werkzeugträgern nach außen geklappt bzw. weggeschwenkt werden, damit der Wechselring mit der Antriebseinheit und dem in Arbeitsstellung fixierten und gespannten Werkzeugträger sich vorbeibewegen kann (Patentanspruch 7).

Patentanspruch 8 beschreibt eine Ausführungsform, bei welcher dem Wechselring ein Magazin mit z.B. zehn Werkzeugträgern zugeordnet ist, die über Rollenbahnen gesteuert dem Wechselring zugeführt werden. Der Wechselring unterfährt den betreffenden Werkzeugträger, hängt ihn ein und hebt ihn ab. Das Werkstück kann auf einer Palette auf einem Schlitten von Palettenabstellplätzen zugeführt werden.

Bei der Ausführungsform nach Patentanspruch 9 ist dem Wechselring ein Einzelmagazin mit z.B. zehn Werkzeugträgern zugeordnet. Das Einzelmagazin kann aber auch als Mehrfachmagazin mit der gleichen oder einer unterschiedlichen Werkzeugträgeranzahl vorgesehen sein Dieses Mehrfachmagazin kann auf einer Seite – kopfseitig – vom Wechselring vorgesehen sein, während auf der diametral gegenüberliegenden Seite ein Schlitten mit Schlittenantrieb um Palettenabstellplätzen vorgesehen sind, auf denen die Werkstücke dem Werkzeugträgern zugeführt werden.

Bei der Ausführungsform nach Patentanspruch 10 ist ein Einfachmagazin quer angebaut und z.B. mit acht Werkzeugträgern im Magazin und zehn bis zwölf Werkzeugträgern insgesamt vorgesehen, Der Rücklauf kann direkt hinter der Bearbeitungsmaschine erfolgen. Außerdem ist diese Konstruktion z.B. in ein Doppelmagazin ausbaufähig.

Patentanspruch 11 beschreibt eine Variante mit einem Doppelmagazin, quer angebaut, mit 2 x 8 = 16 Werkzeugträgern, während bei der Ausführungsform nach Patentanspruch 12 ein Einfachmagazin, längs angebaut, mit acht Werkzeugträgern im Magazin und zwölf Werkzeugträgern insgesamt vorgesehen ist.

Patentanspruch 13 beschreibt ein als Doppelmagazin ausgebildete Magazin, längs angebaut, mit 2 x 8 = 16 Werkzeugträgern, während Patentanspruch 14 ein Rundmagazin mit wahllosem Zugriff beinhaltet. Es kann ein Schalttisch mit 6 x 60° für sechs Werkzeugträger vorgesehen sein,

Patentanspruch 15 beinhaltet ein umlaufendes Ovalmagazin für z.B. sechzehn, insgesamt zwanzig Werkzeugträger und wahllosem Zugriff auf die Werkzeugträger.

Patentanspruch 16 beschreibt ein quer angebautes Ovalmagazin für wahlweisen Zugriff.

Während bei der Ausführungsform nach Patentanspruch 17 ein Doppelmagazin für z.B. zweiunddreißig oder insgesamt 36 Werkzeugträger vorgesehen ist, mit einem verfahrbaren Umsetzer.

In Patentanspruch 18 ist ein Dreifachmagazin für z.B. 48, insgesamt 52 Werkzeugträger und einem verfahrbaren Umsetzer beschrieben.

Patentanspruch 19 beschreibt ein Hochregal mit einem Regalförderer und einem Zwischenspeicher im Zusammenwirken mit einer erfindungsgemäßen Bearbeitungsmaschine. Diese Ausführungsform funktioniert allerdings auch ohne Zwischenspeicher.

Bei der Ausführungsform nach Patentanspruch 20 ist ein beidseitiges Hochregal vorgesehen, zwischen dem ein Regalförderer angeordnet ist, mit einem Zwischenspeicher.

In Patentanspruch 21 ist ein beidseitiges Hochregal mit einem mittigen Regalförderer und einer Schwenk- und Schiebestation sowie einem Zwischenspeicher einer erfindungsgemäßen Bearbeitungsmaschine zugeordnet, während bei der Ausführungsform nach Patentanspruch 22 ein Hochregalsystem zum Umrüsten von verschiedenen Magazinen der zuvor beschriebenen Bauformen vorgesehen ist.

Bei der Ausführungsform nach Patentanspruch 23 ist ein Hochregal mit einem Regalfahrzeug vorhanden mit zwischen einer erfindungsgemäßen Bearbeitungsmaschine und dem Regalfahrzeug zwischengeschalteten Magazinen, wobei diese Magazine aus dem Hochregallager durch automatisches Auswechseln von Werkzeugträgern umgerüstet werden können.

In Patentanspruch 24 ist ein längsangebautes Magazin mit Rangierbahnen und zusätzlichen Abstellplätzen vorhanden. Auf den zusätzlichen Abstellplätzen können beispielsweise Werkzeugträger gekühlt oder beheizt absetzbar sein, beispielsweise um sehr genaue Abstandmaße beim mehrspindeligen Feindrehen einhalten zu können.

In Patentanspruch 25 ist eine erfindungsgemäße Bearbeitungsmaschine mit einem quer angebauten Magazin mit zwei zusätzlichen Abstellplätzen vorhanden.

In der Zeichnung ist die Erfindung – teils schematisch – an mehreren Ausführungsbeispielen veranschaulicht.

Es zeigen:

Fig. 1 eine flexible Bearbeitungsmaschine in der Seitenansicht;

Fig. 2 eine Draufsicht zu Fig. 1;

Fig. 3 eine Ansicht in Richtung des Pfeiles F in Fig. 1;

Fig. 4 eine ausschnittsweise Darstellung aus Fig. 1, wobei sich die Bearbeitungsmaschine in Bearbeitungsstellung befindet;

Fig. 5 eine ausschnittsweise Draufsicht zu Fig. 4;

Fig. 6 eine teilweise Seitenansicht zu Fig. 4;

Fig. 7 eine Darstellung entsprechend Fig. 4, wobei sich die Bearbeitungsmaschine in Schwenkstellung befindet;

Fig. 8 eine Teildraufsicht zu Fig. 7;

Fig. 9 eine teilweise Seitenansicht zu Fig. 7;

Fig. 10 eine weitere Ausführungsform der Erfindung mit einem Anschlag am Hilfsschlitten und Vorspannung über ein Federelement, wobei der Hilfsschlitten soeben den festen Anschlag berührt;

Fig. 11 die aus Fig. 10 ersichtliche Bearbeitungsmaschine in anderer Stellung der Teile (angehobener Wechselring, bereit zum Schwenken);

Fig. 12 eine weitere Ausführungsform der Erfindung, wobei der Anschlag am Hilfsschlitten und die Vorspannung am Hydraulikzylinder sowie die Spannung der Werkzeugträger über den Wechselring mit demselben Hydraulikzylinder erfolgt und die Spannkräfte über die Wechselringlagerung verlaufen, wobei Hilfsschlitten soeben den festen Anschlag berührt;

Fig. 13 die aus Fig. 9 ersichtliche Bearbeitungsmaschine in anderer Stellung der Teile (angehobener Wechselring);

Fig. 14 eine weitere Ausführungsform der Erfindung, ebenfalls in der Seitenansicht, wobei der Anschlag am Hilfsschlitten und die Vorspannung und die Werkzeugträgerspannung unmittelbar über dem Wechselring von der Schlitteneinheit aus erfolgt und nur die aus den Spannkräften resultierenden Reaktionskräfte über die Wechselringlagerung verlaufen, wobei der Hilfsschlitten soeben den einen festen Anschlag berührt;

Fig. 15 die aus Fig. 13 ersichtliche Bearbeitungsmaschine, gleichfalls in der Seitenansicht und abgebrochen dargestellt, in anderer Stellung der Teile, wobei der Hilfsschlitten seine horizontale Bewegung soeben beendet hat und der Hub des Wechselringes eingeleitet wird, bei Endstellung des Dämpfungselementes;

Fig. 16 die aus den Figuren 14 und 15 ersichtliche Bearbeitungsmaschine, ebenfalls in der Seitenansicht und abgebrochen dargestellt, bei angehobenem Wechselring mit anhängenden Werkzeugträgern;

Fig. 17 eine weitere Ausführungsform der Erfindung, ebenfalls in ausschnittsweiser Seitenansicht, wobei die Relativbewegungen zwischen Hilfsschlitten und Schlitteneinheit und damit zwischen dem Wechselring und dessen Antriebseinheit nicht mehr über den Hub des Hilfsschlittens und einen Anschlag sowie Führungskurven am Hilfsschlitten erfolgen, sondern separat eingeleitet werden über ein Stellglied und den längsverschiebbaren Hilfsschlitten, während die vertikale Relativbewegung über ein weiteres Stellglied und Winkelhebel zum Anheben des Hilfsschlittens erfolgt;

Fig. 18 die aus Fig. 17 ersichtliche Bearbeitungsmaschine, ebenfalls in ausschnittsweiser Darstellung, wobei der Hilfsschlitten horizontal verschoben ist und die Spannung des in Arbeitsstellung befindlichen Werkzeugträgers bereits gelöst ist;

Fig. 19 die aus den Figuren 17 und 18 ersichtliche Bearbeitungsmaschine, gleichfalls in schematischer Seitenansicht und abgebrochen dargestellt, wobei der Wechselring mit dem Hilfsschlitten und den am Wechselring anhängenden Werkzeugträgern angehoben dargestellt ist;

Fig. 20 eine weitere Ausführungsform der Erfindung, wobei die horizontale Relativbewegung des längsverschiebbaren Hilfsschlittens über einen festen oder gedämpften Anschlag erfolgt und die vertikale Relativbewegung nicht mehr durch den Wechselring mit seiner Antriebseinheit, sondern durch Anheben oder Absenken der Werkzeugträger und/oder der Werkzeugträgerauflagen vorgenommen wird;

Fig. 21 die aus Fig. 20 ersichtliche Bearbeitungsmaschine, ebenfalls in schematischer Seitenansicht abgebrochen dargestellt, wobei der in Fig. 20 noch angekuppelte Werkzeugträger bereits von der Antriebseinheit abgekuppelt dargestellt und der Hilfsschlitten bis zu einem Anschlag horizontal verschoben worden ist;

Fig. 22 die aus den Figuren 20 und 21 ersichtliche Bearbeitungsmaschine, ebenfalls in schematisch abgebrochener Seitenansicht, wobei die Werkzeugträger am Wechselring hängen und die Ablage oder die Ablagen relativ zum Wechselring und zur Bearbeitungseinheit abgesenkt werden;

Fig. 23 eine weitere Ausführungsform einer Bearbeitungsmaschine gemäß der Erfindung in Ansicht von vorn mit geändertem Wechselring und einer oder mehreren Antriebskupplungen für den in jeweiliger Bearbeitungsstellung befindlichen Werkzeugträger;

Fig. 24 eine weitere Ausführungsform der Erfindung in schematischer Draufsicht mit geändertem Wechselring;

Fig. 25 eine weitere Ausführungsform der Erfindung in schematischer Draufsicht, wobei dem Wechselring sechs Werkzeugträger zugeordnet sind und die nicht zur Bearbeitung eingesetzten Werkzeugträger nicht abgesetzt, sondern am Wechselring angekuppelt verbleiben;

Fig. 26 eine weitere Ausführungsform der Erfindung in schematischer Draufsicht mit sechs Werkzeugträgern und auf diametral gegenüberliegenden Seiten angeordneten, in horizontaler Ebene schwenkbaren Ablagen, um den zur Bearbeitung eingewechselten Werkzeugträger in Bearbeitungsstellung zu verfahren, während alle anderen Werkzeugträger auf Ablagen abgesetzt werden;

Fig. 27 eine weitere Ausführungsform der Erfindung in schematischer Draufsicht, wobei der Wechselring mit den angehängten Werkzeugträgern als einheitliche Baueinheit komplett, z.B. mittels eines nicht dargestellten Hebezeuges, auswechselbar ist;

Fig. 28 eine weitere Ausführungsform der Erfindung mit einem mit zehn Werkzeugträgern zu bestückenden Magazin, Palettenabstellplätzen und Schlitten mit Schlittenantrieb;

Fig. 29 eine weitere Ausführungsform der Erfindung mit Einzelmagazinen mit jeweils zehn Werkzeugträgern, die auch als Mehrfachmagazine angesetzt werden können, mit Palettenabstellplätzen;

Fig. 30 eine weitere Ausführungsform mit einem quer angebauten Einfachmagazin mit acht Werkzeugträgern im Magazin und zehn bzw. zwölf Werkzeugträgern insgesamt, in schematischer Draufsicht;

Fig. 31 eine Ausführungsform mit einem quer angebauten Doppelmagazin mit 2 x 8 = 16 Werkzeugträgern mit Palettenabstellplätzen, in der Draufsicht;

Fig. 32 eine weitere Ausführungsform, ebenfalls in schematischer Draufsicht mit einem längsangebauten Einfachmagazin und acht Werkzeugträgern im Magazin bzw. zwölf Werkzeugträgern insgesamt und Palettenabstellplätzen;

Fig. 33 eine weitere Ausführungsform in schematischer Draufsicht mit einem längsangebauten Doppelmagazin und 2 x 8 = 16 Werkzeugträgern und Palettenabstellplätzen;

Fig. 34 eine weitere Ausführungsform in schematischer Draufsicht mit einem zum wahllosen Zugriff dienenden Rundmagazin und Palettenabstellplätzen mit einem Schalttisch 6 x 60° für jeweils sechs Werkzeugträger und einem Umsetzer 180°;

Fig. 35 eine weitere Ausführungsform in schematischer Draufsicht mit einem dem wahllosen Zugriff dienenden Ovalmagazin, das umlaufend ist für bei der dargestellten Ausführungsform sechzehn Werkzeugträger und einem Umsetzer 180°;

Fig. 36 eine weitere Ausführungsform in schematischer Draufsicht mit einem quer angebauten Ovalmagazin für wahllosen Zugriff und einen Umsetzer 180°;

Fig. 37 eine schematische Seitenansicht zu Fig. 35;

Fig. 38 eine weitere Ausführungsform in schematischer Draufsicht mit einem Doppelmagazin für zweiunddreißig Werkzeugträger mit zwei ovalen Umlaufmagazinen für 2 x 16 = 32 Werkzeugträger und einem verfahrbaren Umsetzer und Palettenabstellplätzen;

Fig. 39 eine weitere Ausführungsform in schematischer Draufsicht mit einem Dreifachmagazin für achtundvierzig Werkzeugträger, einem Umsetzer und Palettenabstellplätzen;

Fig. 40 eine weitere Ausführungsform in schematischer Draufsicht mit einem Hochregal zum Absetzen von Werkzeugträgern und einem Regalförderzeug und einem Zwischenspeicher mit Palettenabstellplätzen;

Fig. 41 eine weitere Ausführungsform in schematischer Draufsicht mit einem beiderseitigen Hochregal und einem dazwischen angeordneten Regalförderzeug und einem Zwischenspeicher mit Palettenabstellplätzen;

Fig. 42 eine weitere Ausführungsform in schematischer Draufsicht mit einem beiderseitigen Hochregal, und einem mittigen Regalförderzeug und einer Schwenk- und Schiebestation mit Zwischenspeicher und Palettenabstellplätzen;

Fig. 43 eine weitere Ausführungsform in schematischer Draufsicht mit einem Hochregalsystem zum Umrüsten von quer ausgebauten Magazinen;

Fig. 44 eine weitere Ausführungsform in schematischer Draufsicht mit einem Regalfahrzeug und einem Hochregal zum Umrüsten von längsangebauten Magazinen;

Fig. 45 eine weitere Ausführungsform in schematischer Draufsicht mit Rangierbahnen und zusätzlichen Abstellplätzen, z.B. zum Kühlen oder Beheizen von Werkzeugträgern mit Längsmagazinen und Rangierbahnen und

Fig. 46 eine weitere Ausführungsform in schematischer Draufsicht mit einem symmetrischen Quermagazin mit zwei zusätzlichen Abstellplätzen.

In den Figuren 1 bis 9 sind Ausführungsformen gemäß der EP-A 0137 117 also nach dem Stand der Technik, dargestellt und nachfolgend beschrieben, um die Weiterentwicklungen und erfinderischen Verbesserungen besser verstehen zu können.

Mit dem Bezugszeichen 1 ist eine bei der dargestellten Ausführungsform horizontal angeordnete Schlittenführung bezeichnet, bei welcher in Richtung D bzw. E ein Schlitten 2 längsverschieblich (Hub) geführt ist. Die Schlittenführung 1 und Schlitten 2 bilden eine Schlitteneinheit. Mit dem Bezugszeichen 62 ist ein gegenüber dem Schlitten 2 in dessen Längsrichtung relativ zu diesem beweglicher Hilfsschlitten angeordnet.

Das Bezugszeichen 3 bezeichnet ein bei der dargestellten Ausführungsform ortsfesten Unterbau, auf dem die Schlittenführung 1 angeordnet ist.

Mit dem Bezugszeichen 4, 5 und 6 sind drei Werkzeugträgerablagen bezeichnet, die an dem Unterbau 3 angeordnet sind. Wie die Fig. 2 erkennen läßt, ist die eine Werkzeugträgerablage 5 in dem einen Endbereich der Schlittenführung 1 angeordnet, während sich je eine der Werkzeugträgerablagen 4 und 6 auf diametral einander gegenüberliegenden Seiten der Schlittenführung 1, und zwar außerhalb der senkrechten Projektion des Schlittens 2, jedoch in unmittelbarer Nähe desselben, befinden.

Bei der aus den Figuren 1 bis 9 ist auf der Werkzeugträgerablage 5 und auf der Werkzeugträgerablage 6 je ein Werkzeugträger 7 bzw. 8 angeordnet, während die Werkzeugträgerablage 4 bei dieser Ausführungsform (Fig. 2) in dem angenommen Beispielsfall gerade keinen Werkzeugträger aufnimmt. Hier kann aber ebenfalls ein Werkzeugträger 50 angeordnet sein.

Ein weiterer Werkzeugträger 9 befindet sich in Arbeitsstellung an einer Antriebseinheit 10, der bei der dargestellten Ausführungsform ein Gleichstromantrieb 11 zugeordnet ist.

Werkzeugträger 9 und Antriebseinheit 10 mit Gleichstromantrieb 11 bilden zusammen eine insgesamt bewegliche Gruppe oder Baueinheit.

Mit strichpunktierten Linien sind bei der aus den Figuren 1 bis 9 ersichtlichen Ausführungsformen Werkzeuge angedeutet und mit 12, 13 und 14 bezeichnet. Diese können z.B. Bohrer oder Fräser sein. Es kann eine an sich beliebige Anzahl solcher Werkzeuge vorgesehen werden, so daß die Werkzeugträger 7, 8, 9 und 50 Mehrspindelköpfe, z.B. Mehrspindelbohrköpfe, darstellen können. Die Zeichnung läßt außerdem erkennen, daß die Werkzeugträger 7, 8, 9 und 50 blockförmig und als insgesamt austauschfähige Baueinheiten ausgebildet sind, die bei sämtlichen dargestellten Ausführungsformen in der Draufsicht eine etwa rechteckförmige Gestalt aufweisen, aber auch z.B. quadratisch, würfelförmig oder in sonstiger geeigneter Weise, z. B. polygonförmig, geformt sein können. Ein Werkzeugträger kann z.B. ein Gewicht von einer oder mehr Tonnen aufweisen.

Unterhalb der Antriebseinheit 10 und der Werkzeugträger 7, 8, 9 und 50 ist ein Wechselring 15 mit vertikaler Drehachse 16 angeordnet. Der Wechselring 15 weist bei der aus den Figuren 1 bis 9 ersichtlichen Ausführungsform einstückig mit ihm verbundene, senkrecht nach oben hervorstehende, parallel zur Drehachse 16 sich erstreckende Aufnahmehalter 17, 18, 19 und 20 auf, die bei dieser Ausführungsform in der Draufsicht eine etwa dreieckförmige Gestalt aufweisen und sich etwa bis zur Oberkante der Antriebseinheit 10 erstrecken. Wechselring 15 und Aufnahmehalter 17, 18, 19 und 20 sind bei diesem Ausführungsbeispiel materialmäßig einstückig gestaltet und bestehen aus einem metallischen Werkstoff, insbesondere aus Stahl oder Guß. Die Aufnahmehalter 17, 18, 19 und 20 weisen in jeweils 90 Grad zueinander versetzten, nach außen weisenden Ebenen mehrere Aufnahmekupplungen auf, von denen lediglich die Kupplungen 21 bis 31 mit Bezugszeichen versehen sind. Deutlich lassen die Figuren 1 bis 9 erkennen, daß an jedem Aufnahmehalter 17 bis 20 mehrere Kupplungen – vorliegend paarweise – in unterschiedlichen Höhenbereichen angeordnet sind. Diese Aufnahmekupplungen 21 bis 31 korrespondieren mit geeigneten Widerlagern, die an der Werkzeugträgern 7, 8, 9 und 50 vorgesehen sind. Von diesen Widerlagern wurden aus Gründen der besseren Übersicht in Fig. 1 lediglich die Widerlager 32 mit Bezugszeichen versehen. Die übrigen Widerlager 32 der Werkzeugträger 7, 8, 9 können entsprechend ausgebildet sein, derart, daß sie mit den zugeordneten Aufnahmekupplungen 21 bis 31 in- und außer Eingriff bringbar sind.

Aus Fig. 3 geht außerdem hervor, daß die Antriebseinheit 10 eine zentrale Energiezuführung 33 aufweist, über welche der jeweils in Arbeitstellung befindliche Werkzeugträger, vorliegend der Werkzeugträger 9 und dessen Werkzeuge 14, mit Antriebsenergie zu versorgen sind. Weiter weist die Antriebseinheit 10 Aufnahme- und Fixierelemente 34, 35, 36 und 37 für die Werkzeugträger auf, über welche der jeweils in Arbeitsstellung befindliche Werkzeugträger, vorliegend 9, fixiert und gespannt ist.

Mit dem Bezugszeichen 38 ist ein motorischer Antrieb für den Wechselring 15 bezeichnet. Der motorische Antrieb 38 treibt ein im einzelnen nicht dargestelltes Ritzel an, das mit einem mit dem Wechselring 15 einstückig verbundenen Zahnkranz 39 kämmt, derart, daß der Wechselring 15 in beiden Drehrichtungen unendlich antreibbar ist. Der Wechselring 15 ist am Umfang durch bei der dargestellten Ausführungsform vertikale Drehachsen aufweisende Rollen geführt, von denen aus Fig. 1 die Rollen 40 und 41 ersichtlich sind. Über den Umfang des Wechselringes 15 können mehrere solcher Rollen 40 und 41 verteilt zueinander angeordnet sein.

Das Bezugszeichen 42 bezeichnet in Fig. 1 einen Winkelhebel, dessen einer Hebelarm über eine Achse 43 am Schlitten 2 in vertikaler Ebene schwenkbeweglich gelagert ist. Mit dem Winkelhebel 42 ist eine Koppelstange 44 über eine Achse 45, ebenfalls in vertikaler Ebene, schwenkbeweglich gekuppelt. Die Koppelstange 44 ist an ihren dem Winkelhebel 42 abgekehrten Ende über eine Schwenkachse 46 mit einer Kupplung 47 verbunden, die dem Hilfsschlitten 62 zugeordnet ist.

Bei der aus den Figuren 1 bis 9 ersichtlichen Ausführungsform ist nur auf einer Seite der Vorrichtung eine solche aus Winkelhebel 42, Koppelstange 44 und Schwenkachse 46 und einer Kupplung 47 bestehende Anordnung vorgesehen. Es steht dem nichts im Wege, auf der anderen Seite der Vorrichtung eine entsprechende Anordnung zu treffen.

Mit dem Bezugszeichen 49 ist eine am Ende des Winkelhebels 42 angeordnete, über den Schlitten 2 hervorragende Rolle bezeichnet. Mit 48 und 48a sind schräg unter 45 Grad ansteigende kulissenartige Führungsnuten bezeichnet, die auf beiden Seiten des Hilfsschlittens 62 angeordnet sind und die auf jeder Seite der Vorrichtung am Schlitten 2 angeordnete Rollen eingreifen, von denen aus Fig. 1 die Rollen 60 und 61 erkennbar sind. Mit 63 ist eine nach unten gekrümmt verlaufende Steuerkurve mit erweitertem Einlauf bezeichnet, in die die Rolle 49 einzulaufen vermag.

Der Winkelhebel 42 ermöglicht zusammen mit de r Steuerkurve 63 und den Führungsnuten 48 und 48a ein Aufnehmen bzw. ein Auseinanderbewegen der Werkzeugträger 7, 8, 9 und 50 zur Antriebseinheit 10 oder ein Ablegen an den Ablagestationen für die Werkzeugträger mit Hilfe des Wechselringes 15. Wenn die Rolle 49 in die Steuerkurve 63 einläuft, wird sie bei Erreichen des nach unten gekrümmten Kurventeils abwärtsgeschwenkt, wodurch der Hilfsschlitten 62 über den Winkelhebel 42, die Koppelstange 44 entgegengesetzt zur Bewegungsrichtung E, also relativ zum Schlitten 2, verschoben wird. Über die horizontalen Kurvenabschnitte oder Führungsnuten 48, 48a erfolgt zunächst eine horizontale Bewegung des Wechselringes 15, während bei Erreichen des schräg verlaufenden Kurventeils der Führungsnuten 48 und 48a der Wechselring 15 in Richtung A bewegt wird, also einen vertikalen Hub nach oben ausführt. Dabei ist die Anordnung so getroffen, daß beim Einlaufen in den schrägen, unter 45 Grad bei der dargestellten Ausführungsform verlaufenden Kurventeil der Wechselring 15 in Bezug auf die Werkzeugträgerablagen 4, 5 und 6 für die Werkzeugträger 7, 8 und 9 bzw. 50 stillsteht.

Die Wirkungsweise der aus den Figuren 1 bis 9 ersichtlichen Ausführungsformen ist folgende:

Um die Leistungsfähigkeit der aus den Figuren 1 bis 9 ersichtlichen flexiblen Bearbeitungsmaschine besonders deutlich zu machen, wird angenommen, daß auch auf der Werkzeugträgerablage 4 ein Werkzeugträger aufruht, der mit strichpunktierten Linien dargestellt und mit dem Bezugszeichen 50 bezeichnet ist.

Ausgangslage für die Bearbeitungsfolge ist die Darstellung gemäß Fig. 1, bei welcher der Werkzeugträger 9 sich in einer Bearbeitungsstellung befindet.

Zum Wechseln des Werkzeugträgers 9 ergibt sich folgende Arbeitsfolge:

1. Die Werkzeugträger 7, 8 und 50 befinden sich in ihren Ablagestellungen auf den Werkzeugträgerablagen 4, 5 und 6.
2. Schlitten 2 und Hilfsschlitten 62 werden motorisch in Richtung E (Fig. 1) mit dem Werkzeugträger 9, der Antriebseinheit 10 und dem Wechselring 15 zurückgefahren. Antriebseinheit 10 mit Gleichstromantrieb 11 und Wechselring 15 bilden also stets eine gemeinsam bewegliche Baueinheit, wobei der Wechselring 15 den unteren Teil die Antriebseinheit 10 ringförmig umschließt, so daß sich eine besonders kompakte Bauform von relativ geringer Höhe ergibt.
3. Vor Erreichen der Endstellung wird der Werkzeugträger 9 von der Antriebseinheit 10 automatisch abgekoppelt und von zwei der Aufnahmehalter 17 bis 20 des Wechselringes 15 übernommen. Beim Verfahren des Schlittens 2 in Richtung E gelangt die Rolle 49 in die Steuerkurve 63, wodurch der Winkelhebel 42 in Richtung C nach unten geschwenkt wird. Dies hat eine entsprechende Verschiebung der Koppelstange 44 in Richtung D und damit eine entsprechende Verschiebung des Hilfsschlittens 62 in Richtung D zur Folge. Da der Hilfsschlitten 62 mit dem Wechselring 15 gekoppelt ist, sind die Bewegungen so aufeinander abgestimmt, daß der Wechselring 15 relativ zur Bewegung des Schlittens 2 stillstehen bleibt. Anschließend wird der Wechselring 15 in vertikaler Richtung A angehoben, wobei der Wechselring 15 während seines Hubes A die in Ablagestellung auf den Werkzeugträgerablagen 4 bis 6 befindlichen Werkzeugträger 7, 8 und 50 über seine Aufnahmekupplungen 21 bis 31 aufnimmt und ebenfalls anhebt, so daß die Werkzeugträger 7, 8 und 50 von ihren Werkzeugträgerablagen 4, 5 und 6 freikommen.

4. Alsdann wird der Wechselring 15 einschließlich der Werkzeugträger 7, 8, 9 und 50 um z.B. 90 Grad motorisch gedreht, und zwar um die Drehachse 16.

5. Daran anschließend wird der Schlitten 2 in Richtung D motorisch bewegt, wobei der Wechselring 15 während dieser Bewegung in Richtung D des Schlittens 2 einen Hub nach unten, also in Richtung T, durchführt, wobei z.B. die Werkzeugträger 7, 8, 9 auf den Werkzeugträgerablagen 4, 5 und 6 abgelegt werden, während der Werkzeugträger 50 zum Aufnehmen abgesenkt wird. Bei einer weiteren Vorwärtsbewegung des Schlittens 2 mit Wechselring 15 in Richtung D wird der Werkzeugträger 50 von der Antriebseinheit 10 übernommen, d.h. fixiert, gespannt und angekuppelt. Daraufhin befindet sich der Werkzeugträger 50 in Arbeitsstellung.

Die Figuren 4, 5 und 6 zeigen nochmal die anschaulich sogenannte Bearbeitungsstellung der Bearbeitungsmaschine und in Arbeitsstellung angekuppeltem Werkzeugträger, während die Figuren 7 bis 9 die gleiche Bearbeitungsmaschine veranschaulichen, und zwar in einer Stellung, in der der Wechselring 15 die Werkzeugträger 7, 8, 9, 50 angekuppelt und angehoben hat, d.h. der Wechselring 15, die Antriebseinheit 10 und der Gleichstrom antrieb 11 sowie die angekuppelten Werkzeugträger 7, 8, 9 und 50 haben einen vertikalen Hub A nach oben durchgeführt, so daß diese gesamte Einheit nunmehr in der einen oder anderen Richtung drehbar, (schwenkbar) ist. Dies bedeutet also, daß in den Figuren 7 bis 9 die Schwenkstellung der Bearbeitungsmaschine veranschaulicht ist.

Zusammenfassend kann dieser Stand der Technik wie folgt gekennzeichnet werden:

Der Wechselring diente maximal zur Aufnahme von vier Werkzeugträgern 7, 8, 9 und 50. Es ist ein Hilfsschlitten 62 mit Wechselringlagerung über Rollen 40, 41 vorhanden. Der Wechselring 15 ist relativ zur Antriebseinheit 10 sowie horizontal und vertikal über Einfahrkurven (Kulissen) mittels Hebeln und Schubstangen sowie Führungskurven im Hilfsschlitten 62 verschiebbar. Die Vorspannung des Hilfsschlittens 62 relativ zum Schlitten 2 erfolgt durch Gasdruckfedern. Es ist eine horizontale Relativbewegung zum Ab- und Ankuppeln der Werkzeugträger 7, 8, 9 und 50 vorhanden, und der Antriebe, der Medienzuführung (Kühlwasser, Luft, Öl usw.) sowie der Signal- und Datenübertragungssysteme. Es erfolgt eine vertikale Relativbewegung (Hub) zum Anheben der Werkzeugträger 7, 8, 9 und 50 von denWerkzeugträgerablagen 4, 5, 6 und ein Wechseln der Werkzeugträger 7, 8, 50 mittels des Wechselringes 15 durch Drehbewegung um die Trägereinheit 10 in beiden Richtungen. Die Spannung der Werkzeugträger 7, 8, 50 erfolgte durch vier Spannelemente (Aufnahmekupplungen) von der Antriebseinheit 10 aus.

Bei der aus Fig. 10 ersichtlichen Bearbeitungsmaschine wurden für Teile gleicher Funktion die gleichen Bezugszeichen verwendet. Bei dieser Ausführungsform ist mit dem Unterbau 3 ein senkrecht angeordnetes Widerlager 65 verbunden, das einen Anschlag 66 mit einer Rolle 67 o. dgl. aufweist, die in einem nicht näher bezeichneten Käfig des Anschlages 66 beliebig drehbar angeordnet ist und in Richtung auf den Hilfsschlitten 62 hervorspringt. Der Hilfsschlitten 62 wird durch ein lediglich schematisch angedeutetes Federelement 68 ständig nach hinten, also in Richtung E, gedrückt und vorgespannt.

Das Federelement 68 stützt sich mit einem anderen Ende am Schlitten 2 ab. Das Federelement 68 kann eine Gasdruckfeder, eine Tellerfeder, eine Schraubenfeder sein oder aus mehreren Federelementen bestehen. Wie ersichtlich ist, wird die Relativbewegung des Wechselringes 15 und der Antriebseinheit 10 mit dem nicht dargestellten Gleichstromantrieb 11 in Bezug auf den Schlitten 2 und in Bezug auf die Werkzeugträgerablagen 3, 4, 5 und 6 anders erzeugt. In Fig. 10 befinden sich die Werkzeugträger 7, 8, 50 ebenfalls auf ihren Werkzeugträgerablagen 4, 5, 6. Schlitten 2 und Hilfsschlitten 62 werden ebenfalls motorisch in Richtung E wie bei der Ausführungsform nach den Figuren 1 bis 9 mit dem angekuppelten Werkzeugträger 9, der Antriebseinheit 10 und dem Wechselring 15 zurückgefahren. Vor Erreichen der Endstellung wird der Werkzeugträger 9 von der Antriebseinheit 10 automatisch abgekoppelt und von zwei Aufnahmehaltern 17 bis 20 des Wechselringes 15 übernommen, was in Fig. 10 veranschaulicht ist. Beim Verfahren des Schlittens 2 in Richtung E schlägt der Hilfsschlitten 62 gegen die Rolle 67 des Anschlages 66 an, wodurch der Hilfsschlitten 62 gegenüber dem Schlitten 2 relativ verschoben wird, derart, daß der Wechselring 15 mit der Antriebseinheit 10 und dem Gleichstrommotor 11 und dem angekuppelten Werkzeugträger 9 stillstehen bleibt. Dabei gleiten die Rollen 60, 61 in den zugeordneten kulissenartigen Führungsnuten 48 und 48a, und zwar in deren horizontalen Abschnitten (Fig. 10). Der anschließende vertikale Hub des Wechselringes 15 in Richtung A mit den angekuppelten Werkzeugträger 7, 8, 9 und 50 erfolgt, sobald die Rollen 40, 41 in die unter einem spitzen Winkel zu den horizontalen Führungsnuten 48 und 48a angeordneten Führungsnutenabschnitten einlaufen. Dabei wird das Federelement 68 bis zu der aus Fig. 11 ersichtlichen Stellung zusammengedrückt. Hierbei erfolgt eine vertikale Relativbewegung zwischen dem Kugelkörper 67 und dem Hilfsschlitten 62. Auch das Federelement 68 kann sich über eine Führungshülse 69 und eine in dieser angeordneten Rolle 70 am Hlfsschlitten 62 rollend abstützen, da bei dem vertikalen Hub in Richtung A bzw. T auch hier eine Relativbewegung auftritt, die möglichst reibungsarm gestaltet sein soll. Nachdem der maximale vertikale Hub in Richtung A erreicht ist, wird der Wechselring 15 wie bei der Ausführungsform nach den Figuren 1 bis 9 einschließlich Werkzeugträger 7, 8, 9 und·50 um 90 Grad motorisch gedreht.

Daran anschließend wird der Schlitten 2 in Richtung D motorisch zurückbewegt, wobei der Wechselring 15 während dieser Bewegung in Richtung D des Schlittens 2 einen Hub nach unten, also in Richtung T ausführt, wobei z.B. die Werkzeugträger 7, 8, 9 auf den Werkzeugträgerablagen 4, 5 und 6 abgelegt werden, während der Werkzeugträger 50 zum Aufnehmen abgesenkt wird. Bei einer weiteren Vorwärtsbewegung des Schlittens 2 mit Wechselring 15 in Richtung D wird der Werkzeugträger 50 von der Antriebseinheit 10 übernommen, d.h. fixiert, gespannt und angekuppelt. Darauf befindet sich dieser Werkzeugträger 50 in Arbeitsstellung wie bei der Ausführungsform nach den Figuren 1 bis 9. Während dieser Bewegung gleiten die Rollen 60 und 61 in den Führungsnuten 48 und 48a wiederum nach oben und anschließend in die waagerechten Abschnitte (Fig. 10), wobei auch zwischen dem Hilfsschlitten 62 und dem Anschlag 66 bzw. dem Kugelkörper 67 einerseits und zwischen dem Kugelkörper 70 und dem Hilfsschlitten 62 andererseits eine vertikale Relativbewegung stattfindet (Figuren 10 und 11). Wie ersichtlich ist, sind somit bei dieser Ausführungsform zur Erzeugung der horizontalen und vertikalen Relativbewegungen keine Koppelstangen und Winkelhebel mehr erforderlich. Mit den Bezugszeichen 71 und 72 sind Auflagen bezeichnet. In der aus Fig. 10 und 11 ersichtlichen Darstellungen können für jeden Werkzeugträger 7, 8, 9 und 50 jeweils zwei solcher Auflagen – paarweise – hintereinander angeordnet sein, was aus den Figuren 10 und 11 allerdings nicht deutlich erkennbar ist.

Bei der Ausführungsform aus den Figuren 12 und 13 sind ebenfalls für Teile gleicher Funktionen die gleichen Bezugszeichen wie bei der Ausführungsform nach den Figuren 1 bis 9 verwendet worden. Diese Ausführungsformen unterscheiden sich von den zuvor beschriebenen Ausführungsformen dadurch, daß wiederum ein Widerlager 65 vorgesehen ist, das einen Anschlag 66 mit einer Rolle 67 aufweist, gegen den der Hilfsschlitten 62 in seiner Endstellung anstoßen kann, so daß eine horizontale Relativbewegung zwischen Schlitten 2 und Hilfsschlitten 62 erfolgt. Zwischen Hilfsschlitten 62 und Schlitten 2 ist ein abwechselnd beidseitig mit Druckmitteldruck, insbesondere mit Hydrauliköl, beaufschlagbare Kolben-Zylinder-Einheit 73 eingeschaltet, deren Zylinder 75 über eine horizontale Schwenkachse 74 mit dem Hilfsschlitten 62 gekuppelt ist, deren Längsachse quer, d.h. normal zur Bewegungsrichtung D-E des Schlittens 2 (rechtwinklig) verläuft. Ein Kolben 76 ist längsverschieblich und dichtend in dem Zylinder 75 geführt. Eine Kolbenstange 77 ist abgedichtet aus dem Zylinder 75 herausgeführt und über eine Schwenkachse 78, deren Längsachse parallel zur Längsachse der Achse 74 verläuft und mit einem am Schlit ten 2 fest angeordneten Widerlager verbunden, so daß die Kolben-Zylinder-Einheit 73 in vertikaler Ebene schwenkbeweglich angeordnet ist. Die horizontale Relativbewegung, die die Einheit aus Wechselring 15, Antriebseinheit 10, Gleichstromantrieb 11 und Werkzeugträger beispielsweise 9, relativ zum Schlitten 2 stillstehen läßt, kommt wiederum durch Anschlag des Hilfsschlitten 62 an der Rolle 67 zustande. Beim Eintritt der Rollen 60 und 61 in die schräg nach unten verlaufenden Führungsnuten 48 und 48a erfolgt der senkrechte Hub des Wechselringes 15 mit den angekuppelten Werkzeugträgern, 8, 9 und 50. Daraufhin kann die Schwenk-(Dreh-) bewegung um die Drehachse 16 erfolgen. Bei der Bewegung D erfolgt zunächst das Absetzen der nicht benötigten Werkzeugträger auf den zugeordneten Werkzeugträgerablagen und das Aufnehmen eines neuen Werkzeugträgers sowie dessen Zentrierung, Fixierung und Spannung, im wesentlichen in der vorbeschriebenen Art und Weise. Mit dem Bezugszeichen 79, 79a, 79b, und 79c sind wiederum einige Indexierungen und Auflagen am Wechselring 15 angedeutet. Es sind jeweils zwei solcher Indexierungen pro aufgenommenem Werkzeugträger, beispielsweise 9, vorhanden, was aus der Zeichnung allerdings nicht in einzelnen hervorgeht. Die Werkzeugträger 9 weisen – soweit Indexierungen vorhanden sind – bei allen Ausführungsformen entsprechende Aufnahmebohrungen zum Eintritt dieser Indexierungen auf.

Die Vorspannung der Werkzeugträger 7, 8, 9 und 50 erfolgt über eine Kolben- Zylinder-Einheit 73 durch entsprechende Druckmittelbeaufschlagung, wobei die Spannung der Werkzeugträger, beispielsweise des Werkzeugträgers 9, über den Wechselring 15 selbst erfolgt, und zwar über dieselbe Kolben-Zylinder-Einheit 73. Die Spannkräfte gehen dabei über die Lagerung des Wechselringes 15, also über die Rollen 40 und 41 und die nicht dargestellten Rollen, die in der anderen Zeichnungsebene liegen und die den Wechselring 15 führen.

Des weiteren weist der Wechselring 15 paarweise angeordnete, rechtwinklig nach oben gerichtete Klauen auf, von denen aus den Figuren 12 und 13 lediglich die Klauen 80, 81, 82 und 83 ersichtlich sind. An jedem Aufnahmehalter 17, 18, 19 können mit Abstand zueinander sowie parallel zueinander verlaufend jeweils zwei solcher Klauen 80 bis 83 angeordnet sein, die in entsprechende Widerlager eingreifen, von denen aus der Zeichnung lediglich die Widerlager 84 und 85 der Werkzeugträger 8 und 9 ersichtlich sind. Diese Klauen 80 bis 83 usw. und die Widerlager 84 und 85 usw. ersetzen die bisherigen Aufnahmekupplungen 21 bis 31 an den Aufnahmehaltern 17 bis 20. In Fig. 13 ist der Werkzeugträger 9 bereits von der Energiezufuhr abgekuppelt und angehoben. Der Wechselring 15 ist in dieser Stellung bereit zum Schwenken. Man erkennt aus Fig. 13, daß die Werkzeugträger 9 und 8 an den Klauen 80, 84 und 83, 85 hängen. Die Kolben-Zylinder-Einheit 73 bildet bei dieser Ausführungsform gleichzeitig einen Vorspannzylinder für den Hilfsschlitten 2 und Spannzylinder für den in Arbeitsstellung befindlichen Werkzeugträger 9 o.dgl.

Bei der Ausführungsform nach den Figuren 14 bis 16 sind wiederum für Teile gleicher Funktion die gleichen Bezugszeichen verwendet worden. Diese Ausführungsform unterscheidet sich von den zuvor beschriebenen Ausführungsformen dadurch, daß dem Widerlager 65 eine Dämpfungsvorrichtung 96 zugeordnet ist, die· aus einer Kolben-Zylinder-Einheit 95 besteht und die einen Zylinder 97 mit einem darin längsverschieblich und dichtend geführten Kolben 98 gebildet ist. Dem Zylinder ist eine Drosselöffnung 97a zugeordnet, an die eine nicht dargestellte, zu einem Tank o. dgl. führende Leitung angeschlossen ist. Die Drossel 97a kann gesteuert oder geregelt ausgebildet sein. Der Kolben 98 kann in seiner Ausgangslage gemäß Fig. 14 mit Druckmitteldruckbeaufschlagung zurückgeführt werden. Mit einer Kolbenstange 99 ist eine Rolle 100 verbunden, die an der Stirnseite des Hilfsschlittens 62 anliegt und in vertikaler Richtung A bzw. T an der entsprechenden Seitenwandung des Hilfsschlittens 62 abzurollen vermag, wie dies ein Vergleich der Figuren 14 bis 16 zeigt.

Mit dem Bezugszeichen 101 ist eine weitere Kolben-Zylinder-Einheit bezeichnet, deren Zylinder 102 abwechselnd beidseitig mit Druckmitteldruck, insbesondere Hydrauliköl, zu beaufschlagen ist. Ein Kolben 103 ist längsverschieblich und dichtend in dem Zylinder 102 geführt. Dem Kolben 103 ist eine Kolbenstange 104 zugeordnet, die sich über eine Rolle o.dgl. 105 gegen die Innenwandung des Hilfsschlittens 62 abstützt und diesen vorspannt.

Die Spannung der Werkzeugträger 9 und folgende, die sich jeweils in Arbeitsstellung befinden, erfolgt über eine oder zwei Spannpratzen 106, die an der Antriebseinheit 10 angeordnet sind. Die Spannpratzen 106 sind als zweiarmige Hebel ausgebildet, die eine Spannase 107 aufweisen, die jeweils in eine Spannöffnung 108 von Spannhaken 109 eingreifen. Es können jeweils zwei solcher Spannhaken 109 und je einer Spannöffnung 108 parallel sowie mit Abstand nebeneinander angeordnet sein, was aus den Figuren 16 bis 18 allerdings nicht hervorgeht.

Die Spannpratzen 106 sind um horizontal verlaufende Achsen 110 schwenkbeweglich gelagert und werden über eine Spndelmutter 111 und eine Spindel 112 über einen Motor 113 in beiden Richtungen zum Spannen und Lösen angetrieben. In Fig. 16 ist mit strichpunktierten Linien die Spannstellung der Spannpratzen 106 und mit ausgezogenen Linien die geöffnete Stellung dargestellt. Der herausgebrochene Teil zeigt die Spannstellung, links, in Fig. 16. Die Indexierungen sind mit den gleichen Bezugszeichen wie bei den vorbeschriebenen Ausführungsformen bezeichnet worden. Ein weiterer Spanhaken ist mit dem Bezugszeichen 114 bezeichnet worden.

Beim Anlaufen des Hilfsschlittens 62 gegen die Rolle 100 wird der Kolben 98 unter Verdrängung des im Zylinderraum befindlichen Öls über die Drosselöffnung 97a verschoben, bis der Hilfsschlitten 62 sanft zum Stillstand gelangt. Die Rollen 60 und 61 bewegen sich dabei in dem jeweiligen horizontalen Abschnitt der kulissenartigen Führungsnuten 48 und 48a. Die Vorspannung des Hilfsschlittens 62 erfolgt über die Kolben-Zylinder-Einheit 101. Sobald die Rollen 60 und 61 in die unter einem spitzen Winkel verlaufenden Abschnitte der Führungsnuten 48 und 48a eintauchen, erfolgt wiederum der Hub des Wechselringes 15 in vertikaler Richtung A nach oben mit den angehängten Werkzeugträger 9 und folgende. Die Fig. 17 zeigt den Beginn des Eintretens der Rollen 60 und 61 in diese unter einem spitzen Winkel verlaufenden kulissenartigen Führungsnuten 48 und 48a, wobei der Dämpfungskolben 68 bereits seine Endstellung erreicht hat.

In Fig. 16 sind die Rollen 60 und 61 in diese unter einem spitzen Winkel verlaufenden Abschnitte der Führungsnuten 48 und 48a bereits eingetreten. Der Wechselring 15 hat sich in Richtung A nach oben bewegt mit den angehängten Werkzeugträgern, z.B. 8 und 9. Deutlich erkennt man durch einen Vergleich der Figuren 16 und 18, daß sich der Hilfsschlitten 62 entlang den Rollen 100 und 105 in vertikaler Richtung bewegt hat. In Fig. 18 ist der Wechselring 15 bereit zum Drehen (Schwenken) um seine Drehachse 16.

Die Verschiebung in Richtung D geschieht wie bereits beschrieben. Dabei wird der Wechselring 15 in Richtung T bewegt, also abgesenkt, der in Arbeitsstellung befindliche, neue Werkzeugträger fixiert, gespannt und an die Energiezufuhr angeschlossen. Der Motor 113 spannt über die Spannpratzen 107 und folgende den in Arbeitsstellung befindlichen Werkzeugträger.

Bei geöffneter Spannung des Werkzeugträgers (Fig. 14) ist somit der Hilfsschlitten 62 gegen den Anschlag 100 mit der Dämpfungsvorrichtung 96 gefahren. Über die einstellbare bzw. gesteuerte oder geregelte Dämpfung wird der Hilfsschlitten 62 mit Wechselring 15 und Werkzeugträger 9 o.dgl. langsam bis zum Stillstand verzögert.

Bei der Ausführungsform nach den Figuren 17 bis 19 werden die Relativbewegungen des Hilfsschlittens 62 und des diesem zugeordneten Wechselringes 15 mit Antriebseinheit 10 und Gleichstrommotor 11 nicht mehr über den Schlittenhub und einem Anschlag sowie Führungskurven am Hilfsschlitten 62 erzeugt, sondern separat eingeleitet über Stellglieder. Die horizontale Relativbewegung wird über eine Kolben-Zylinder-Einheit 115, bestehend aus einem Hydraulikzylinder 116 mit darin längsverschieblich und dichtend geführtem Kolben 117 und dichtend aus dem Zylinder 116 herausgeführter Kolbenstange 118 eingeleitet. Der Hydraulikzylinder 116 ist über eine horizontale Schwenkachse 119 am Hilfsschlitten 62 in vertikaler Ebene schwenkbeweglich gelagert. Die Kolbenstange 118 ist über eine parallel zur Schwenkachse 119 verlaufende weitere Schwenkachse 120 am Schlitten 2 über einen Lagervorsprung 121 schwenkbeweglich angeordnet.

Die vertikale Relativbewegung des Wechselringes 15 erfolgt über eine weitere Kolben-Zylinder-Einheit 122. In einem Zylinder 123, der abwechselnd beidseitig mit Druckmitteldruck, insbesondere Hydrauliköl, zu beaufschlagen ist, ist längsverschieblich und dichtend ein Kolben 124 angeordnet, dessen Kolbenstange 125 dichtend aus dem Zylinder 123 herausgeführt ist. Mit der Kolbenstange 125 sind mit Abstand sowie durch parallel zueinander verlaufende Schwenkachsen 126 und 127 Winkelhebel 128 und 129 in vertikaler Ebene schwenkbeweglich gekuppelt, wobei die Winkelhebel 128 und 129 und parallel zueinander verlaufende Schwenkachsen 132 und 133 am Schlitten 2 in vertikaler Ebene schwenkbeweglich gelagert sind. Mit Achsen 130 und 131 ist der Hilfsschlitten 62 in nicht näher dargestellter Weise getrieblich gekuppelt, so daß er beim Verschieben des Kolbens 124 und der Kolbenstange 125 anhebbar und absenkbar ist.

Die Spannung des jeweils in Arbeitsstellung befindlichen Werkzeugträgers, z.B. des Werkzeugträgers 9, erfolgt über den Wechselring 15 über eine Kolben-Zylinder-Einheit 134 mit Zylinder 135 in dem längsverschieblich und dichtend ein Kolben 136 verschiebbar ist, der mit einer Kolbenstange 137 gekuppelt ist, die über eine Schwenkachse 138 und ein Langloch mit einen Spannhebel 139 gekuppelt ist, dessen Spannase 140 gegen den Außenumfang des Wechselrings 15 einzuwirken vermag. Fig. 19 zeigt die Spannstellung, Fig. 20 und 21 die Entspannungsstellung. Dies erfolgt durch entsprechende abwechselnde Druckmittelbeaufschlagung der Kolben-Zylinder-Einheit 134, insbesondere durch Hydrauliköl.

Die Wirkungsweise ist so, daß bei Erreichen der Endstellung durch Druckmittelbeaufschlagung der Kolben-Zylinder-Einheit 115 der Hilfsschlitten 62 relativ zum Schlitten 2 in Richtung D bewegt wird, so daß der Wechselring 15 mit der Antriebseinheit 10 und den angekuppelten Werkzeugträger 9 stillsteht. Durch eine Folgesteuerung o.dgl. wird dann durch Druckmittelbeaufschlagung der Kolben-Zylinder-Einheit 122 der Wechselring mit angekuppelten Werkzeugträgern, beispielsweise mit den Werkzeugträgern 8 und 9 in Richtung A angehoben. Daraufhin ist der Wechselring 15 wiederum bereit zum Drehen um die Achse 16. Das Absenken und Wiederaufnehmen, Fixieren und Spannen eines neuen Werkzeugträgers erfolgt wie oben beschrieben.

Bei der Ausführungsform nach den Figuren 20 bis 22 sind wiederum für Teile gleicher Funktion die gleichen Bezugszeichen verwendet worden.

Die horizontale Relativbewegung des Hilfsschlittens 62 erfolgt über einen festen oder gedämpften Anschlag 141 gegen den Hilfsschlitten 62, während die Vorspannung über eine Kolben-Zylinder-Einheit 142 erfolgt, die aus einem Zylinder 143 und einem darin längsverschieblich und dichtend geführten Kolben 144 mit dichtend aus dem Zylinder 143 herausgeführter Kolbenstange 145 besteht, die unter Druckmitteldruck, insbesondere Hydraulikdruckbeaufschlagung, gegen die Innenwandung des Hilfsschlittens 62 anliegt.

Aufnehmeklauen und Indexierungen sind wie bei den oben beschriebenen Ausführungsformen, insbesondere wie bei den Ausführungsbeispielen nach den Figuren 12, 13, 17, 18, 19 vorhanden.

Die vertikale Relativbewegung erfolgt nicht mehr über den Wechselring 15, sondern durch Anheben bzw. Absenken der Werkzeugträger und/oder der Werkzeugträgerablagen, und zwar bei der dargestellten Ausführungsform dadurch, daß die Werkzeugträgerablagen 4, 5 und 6 durch einen motorischen Antrieb, insbesondere durch einen Spindeltrieb 146 mit Motor 147 und Zahnradvorgelege 148 in Richtung A bzw. T, also in vertikaler Richtung, heb- und senkbar ausgebildet sind.

Der Hilfsschlitten 62 ist z.B. über ein Kolben-Zylinder-Einheit 142 mit Zylinder 143 und längsverschieblich und dichtend in dem Zyliner 143 geführtem Kolben 144 mit dichtend aus dem Zylinder 143 herausgeführter Kolbenstange 145 spannbar.

Mit dem Bezugszeichen 153 ist ein fester oder gedämpfter Anschlag bezeichnet, über den der Hilfsschlitten 62 gegenüber dem Schlitten 2 horizontal verschieblich ist, während die vertikale Verschiebbarkeit durch die erwähnte gesteuerte motorische Absenkung der Auflagen 4, 5 und 6 erfolgt. Fig. 24 zeigt die Stellung des Wechselringes 15 zum Drehen um die Längsachse 16. Indexierungen und Auflageklauen sind wie bei den oben beschriebenen Ausführungsbeispielen.

Aus Fig. 23 geht eine Ausführungsform mit geändertem Wechselring 15 hervor, bei welcher einige der Indexierungen 79, 79a, 79f und 79g vorgesehen sind.

Mit 157, 158, 159 und 160 sind Aufnahmen für den Werkzeugträger in Arbeitsstellung bezeichnet, während die Bezugszeichen 161 und 162 zusätzliche Antriebskupplungen darstellen. Auf diese Weise können z.B. Prüfeinrichtungen eingeschwenkt, Pinolen verschoben und Plandrehschieber o.dgl. bewegt werden.

Die klauenförmigen Aufnahmen sind wie im Zusammenhang z.B. mit den Ausführungsformen 12 und 13 beschrieben und dargestellt ausgebildet. Die Relativbewegungen – horizontale und vertikale Hub- bzw. Senkbewegung – kann auch bei dieser mit zusätzlichen Antriebskupplungen versehenen Ausführungsformen nach jedem der in diesen Anmeldungsunterlagen beschriebenen Prinzipien, also entweder über Koppelgestänge, über heb- und senkbare Ablagen oder über besondere Stellglieder usw., erfolgen.

Bei der Ausführungsform nach Fig. 24 ist der Wechselring 15 in der hinteren Endstellung, mit strichpunktierten Linien dargestellt. In der vorderen Endstellung ist der Wechselring voll gezeichnet. Diese Ausführungsform kann eine Draufsicht zu den aus den Figuren 12, 13, 14, 15, 16, 17, 18, 19 und 20, 21, 22 sein, natürlich jeweils mit den dort gezeichneten konstruktiven Änderungen. Der Wechselring 15 ist hierbei zur Aufnahme von z.B. vier Werkzeugträgern 7, 8, 9 und 50 ausgestaltet. Deutlich erkennt man Klauen am Wechselring, z.B. 80, 81, 82, 83, 164, 164a, 164b, 165 und die Gegenklauen oder Widerlager 84, 84a, 84b, 85, 85a, 85b, 85c, 85d usw. Die Drehrichtung des Wechselringes 15 ist mit 166 bezeichnet.

Das Maß G bezeichnet den Hub des Hilfsschlittens 62 gegenüber dem Schlitten 2, während der Pfeil 166 die Drehbewegung um die Achse 16 veranschaulicht.

Das Maß H ist der Weg des Hilfsschlittens 62 von der Aufnahme oder Ablagestellung bis in die Arbeitsstellung, während das Maß K den Hub der Schlitteneinheit 2, von der Ablage oder Aufnahmestellung bis in die Arbeitsstellung darstellt.

Bei der aus Fig. 27 ersichtlichen Ausführungsform ist der Wechselring 15 mit sechs Werkzeugträgern 167, 168, 169, 170, 171, 172 zu bestücken. Die nicht zur Bearbeitung eingesetzten Werkzeugträger, beispielsweise die Werkzeugträger 168 bis 172 brauchen bei dieser Ausführungsform nicht abgesetzt zu werden, sondern verbleiben auch bei der Bewegung des Wechselringes 15 mit der Antriebseinheit 10 und dem Gleichstromantrieb 11 sowie der Schlitteneinheit 2, am Wechselring 15. Es ist auch möglich, daß die drei vorderen Werkzeugträger 167, 168 und 172 am Wechselring 15 bei dessen Verschieben von der Ablage bzw. Aufnahmestellung in die Bearbeitungsstellung verbleiben und die drei hinteren Werkzeugträger 169, 170, 171 auf den zugeordneten Werkzeugträgerablagen 4, 5 und 6 abgelegt werden.

Bei der Ausführungsform nach Fig. 26 sind dem Wechselring 15 ebenfalls mehr als vier Werkzeugträger, nämlich wiederum sechs Werkzeugträger 167, 168, 169, 170, 171 und 172 zugeordnet. Die den Werkzeugträgern 168 und 172 zugeordneten, im einzelnen nicht dargestellten Ablagen, die z.B. wie die Werkzeugträgerablagen 4, 5 und 6 ausgebildet sein können, sind schwenkbar ausgebildet, um den zur Bearbeitung eingewechselten Werkzeugträger zu verfahren, während alle anderen Werkzeugträger auf zugeordneten Werkzeugträgerablagen abgesetzt werden können. Die Schwenkbarkeit der Werkzeugträgerablagen ist durch die Doppelpfeile 173 und 174 angedeutet, die um die Drehpunkte 175 und 176 schwenkbar sind. Durch das Wegschwenken der Werkzeugträgerablagen kann der Wechselring 15 an diesen Werkzeugträgerablagen und den Werkzeugträgern 168 und 172 in die Arbeitsstellung vorbeifahren.

In Fig. 27 ist ein Wechselring 15 veranschaulicht, der vier Werkzeugträger 177, 178, 179 und 180 aufweist, wobei der betreffende Wechselring 15 mit seinen vier Werkzeugträgern 177, 178, 179 und 180 als komplette Baueinheit mittels eines nicht dargestellten Hebezeuges auswechselbar ist gegen einen zweiten Wechselring 15a mit einem zweiten Satz Werkträger 177a, 178a, 179a und 180a. Solche kompletten Wechselringe 15 mit daran angeordneten Werkzeugträgern können in einem Magazin bereitgehalten werden. Es ist aber auch möglich, den Wechselring 15 mechanisch, beispielsweise über Rollenbahnen o.dgl., einzuwechseln. Die mittlere Darstellung in Fig. 29 zeigt das Verfahren des Wechselringes 15 in der beschriebenen Art und Weise aus einer Ablage- oder Aufnahmestation oder Einwechselstation in eine Bearbeitungsstellung, die in der mittleren Darstellung mit ausgezogenen Linien veranschaulicht wurde. Selbstverständlich sind auch mehr als vier Köpfe, beispielsweise ähnlich der vorbeschriebenen Ausführungsformen sechs oder mehr Werkzeugträger am Wechselring anzuordnen.

Bei der aus Fig. 28 ersichtlichen Ausführungsform sind ebenfalls für Teile gleicher Funktion die gleichen Bezugszeichen verwendet worden. Dem lediglich schematisch angedeuteten Wechselring 15 ist ein Magazin 191 zugeordnet, das motorisch angetrieben ist und in dem mehrere Werkzeugträger angeordnet sind. Diese Variante arbeitet mit insgesamt zehn Werkzeugträgern 181 bis 190, wobei sich der Werkzeugträger 181 in Bearbeitungsstellung am Wechselring 15 befindet. Das Magazin 181 weist eine Rollenbahn zum Transportieren der einzelnen Werkzeugträger 181 bis 190 auf. Der Wechselring 15 unterfährt bei dieser Ausführungsform den jeweils aufzunehmenden Werkzeugträger, beispielsweise den Werkzeugträger 182 und hängt ihn über eine vertikale Hubbewegung an, oder aber der betreffende Teil der Rollenbahn wird angehoben oder abgesenkt, um den Werkzeugträger 182 oder andere an der Aufnahmekupplungen des Wechselringes 15 anzuhängen. Anschließend erfolgt eine Drehbewegung des Wechselringes 15 in der beschriebenen Art und Weise um die Drehachse 16, um den neuen Werkzeugträger, beispielsweise 182, in Bearbeitungsstellung zu bringen. Auf einer Palette 192 ist ein Werkstück 193 angeordnet. Mit 194 und 195 sind Palettenabstellplätze bezeichnet.

196 bezeichnet einen Schlittenantrieb und 197 eine Energiezufuhr für den Schlittenantrieb. Auf der Palette 192 ist ein weiteres Werkstück 198, das bearbeitet werden soll, angeordnet. 199 sind die Störkanten der am Wechselring 15 angeordneten Werkzeuge.

Bei der Ausführungsform nach Fig. 29 sind ebenfalls für Teile gleicher Funktion die gleichen Bezugszeichen wie bei der Ausführungsform nach Fig. 28 verwendet worden. Dem Wechselring 15 ist ein Einzelmagazin 200 zugeordnet, in dem zehn Werkzeugträger anzuordnen sind. Der Werkzeugträger 201 befindet sich gerade in Bearbeitungsstellung am Wechselring 15, während die übrigen Werkzeugträger 202 bis 210 sich im Einzelmagazin befinden.

Mit den Bezugszeichen 211 und 212 sind weitere Spuren dargestellt worden, um weitere Einzelmagazine hier anzuordnen, so daß sich ein Mehrfachmagazin ergibt, aus dem wechselweise die jeweils benötigen Werkzeugträger dem Wechselring 15 zuzuordnen sind.

Bei der Ausführungsform nach Fig. 30 sind wiederum für Teile gleicher Funktion die gleichen Bezugszeichen verwendet worden. Hier ist ein Einfachmagazin 213 quer angebaut. Es sind zehn bis zwölf Werkzeugträger 214, 215, 216, 217, 218, 219, 220, 221, 222, 223 vorhanden, von denen sich der Werkzeugträger 214 in Bearbeitungsstellung befindet.

Bei der Ausführungsform nach Fig. 31 ist dem Wechselring 15 ein Doppelmagazin 224, quer angebaut, zugeordnet, mit 2 x 8 = 16 Werkzeugträgern 225 bis 240.

Bei der Ausführungsform nach Fig. 32 ist ein Einfachmagazin 241, längs angebaut, vorgesehen, mit acht Werkzeugträgern im Magazin und zwölf Werkzeugträgern insgesamt. Die Werkzeugträger sind mit den Bezugszeichen 242 bis 253 bezeichnet, wobei sich der Werkzeugträger 242 in Bearbeitungsstellung befindet.

Die Ausführungsformen nach Fig. 33 unterscheidet sich durch ein als Doppelmagazin 254, längs angebaut mit 2 x 8 = 16 Werkzeugträgern, wobei von den Werkzeugträgern einige mit den Bezugszeichen 255 bis 272 bezeichnet sind, wovon sich der Werkzeugträger 255 am Wechselring in Bearbeitungsstellung befindet.

Bei der Ausführungsform nach Fig. 34 ist ein Rundmagazin 273 für wahllosen Zugriff zu sechs Werkzeugträgern oder mehr 274 bis 279 vorgesehen, wobei ein Schalttisch 280 bei der dargestellten Ausführungsform um 6 x 60° motorisch weiterschaltbar ist.

Das Bezugszeichen 281 bezeichnet einen Umsetzer zum Umsetzen der Werkzeugträger 274 bis 279 vom Rundmagazin 273 zum Wechselring 15 und für deren Rücktransport vom Wechselring 15 zum Rundmagazin 273.

Bei der Ausführungsform nach Fig. 35 ist dem Wechselring 15 ein Ovalmagazin 282 für wahllosen Zugriff auf Werkzeugträger zugeordnet. Ein Umsetzer 281 transportiert die jeweils ausgewählten Werkzeugträger vom Ovalmagazin 282 zum Wechselring 15 und umgekehrt vom Wechselring 15 zum Ovalmagazin 282. Das Ovalmagazin 282 ist vorliegend zur Aufnahme von 16 Werkzeugträgern ausgebildet. Der Werkzeugträger 283 befindet sich in Bearbeitungsstellung, während die Werkzeugträger 285, 286, 287, 288, 289, 290, 291, 292, 293, 294, 295, 296, 297, 298, 299, 299a im Ovalmagazin 282 angeordnet sind. Das Ovalmagazin 282 kann mit Rollenbahnen, Ketten o.dgl., die jeweils motorisch angetrieben sind, ausgerüstet sein.

Bei der Ausführungsform gemäß Fig. 36 ist dem Wechselring 15 ein quer angebautes Magazin 300 zugeordnet, das ebenfalls motorisch angetriebene Rollenbahnen, Ketten o.dgl. aufweisen kann. Der Werkzeugträger 301 befindet sich in Bearbeitungsstellung, während über einen Umsetzer 281 die Werkzeugträger von dem quer angebauten Magazin 300 zum Wechselring 15 und umgekehrt vom Wechselring 15 zum quer eingebauten Magazin 300 transportierbar sind. Andere Werkzeugträger sind mit dem Bezugszeichen 301 bis 319 bezeichnet.

Die Fig. 37 zeigt in der Seitenansicht die Ausbildung des längs angebauten Magazins 282, gemäß Fig. 35, das eine Antriebsstation 320, eine Verlängerung 321 und eine Umlenkstation 322 aufweist. Die Antriebstation 320 und die Umlenkstation 322 sind über je ein Grundgestell 323 bzw. 324 oberhalb des Bodens angeordnet, während der Verlängerung 321 mindestens eine Stütze 325 zugeordnet ist. Die Werkzeugträger 283 bis 299a sind jeweils an je einem Transportwagen angeordnet, von denen in Fig. 37 lediglich die Transportwagen 326 und 327 schematisch dargestellt wurden. Ohne die Verlängerung kann das Magazin 300 z.B. acht Werkzeugträger aufnehmen.

Mit dem Bezugszeichen 328 ist ein Motor für den Umsetzer 281 bezeichnet, der über ein Grundgestell 329 auf dem Boden aufliegt.

Die Ausführungsform gemäß Fig. 38 zeigt ein Doppelmagazin 330 für zweiunddreißig Werkzeugträger mit zwei ovalen Umlaufmagazinen 331 bzw. 332 und einem verfahrbaren Umsetzer 333 zum motorischen Hin- und Hertransport von Werkzeugträgern zwischen den beiden Oval-Umlaufmagazinen 331 und 332 und dem Wechselring 15. Mit dem Bezugszeichen 334 ist ein Werkzeugträger in Bearbeitungsstellung veranschaulicht. In jedem der beiden Oval-Umlaufmagazine 331 bzw. 332 können z. B. 2 x 16 = 32 Werkzeugträger vorgesehen sein, die im einzelnen nicht näher bezeichnet wurden.

Bei der Ausführungsform nach Fig. 39 ist ein motorisch angetriebener Umsetzer 335 zwischen dem Wechselring 15 und einem als Dreifachmagazin 336 für achtundvierzig Werkzeugträger angeordnet.

Die Ausführungsform nach Fig. 40 veranschaulicht ein einseitiges Hochregal 337, in dem zahlreiche Werkzeugträger 338 angeordnet sind, die über ein Regalförderzeug 339, das in Längsrichtung des Hochregals 337 motorisch verfahrbar ist, angeordnet ist.

Mit dem Bezugszeichen 340 ist ein Zwischenspeicher für Werkzeugträger bezeichnet, von denen lediglich der Werkzeugträger 341 bezeichnet wurde. Der Werkzeugträger 342 befindet sich gerade in Bearbeitungsstellung.

Die Ausführung nach Fig. 41 weist ein Regalförderzeug 343 auf, dem beidseitig je ein Hochregallager 344 und 345 zugeordnet ist, in dem jeweils mehrere Werkzeugträger 346 anzuordnen sind. Mit 347 ist ein Zwischenspeicher bezeichnet, über den die aus dem Hochregallager kommenden Werkzeugträger 346 zum Wechselring 15 und umgekehrt vom Wechselring 15 zu den Hochregallagern 344, 345 zu transportieren sind.

Bei der Ausführungsform nach Fig. 42 ist ebenfalls ein Regalförderzeug 348 vorgesehen, wobei auf jeder Seite des Regalförderzeugs 348 je ein Hochregallager 349 und 350 angeordnet sind, in denen jeweils mehrere Werkzeugträger 351 und 352 angeordnet sind, die über einen Zwischenspeicher 353 und eine Schwenk- und Schiebestation 354 die Werkzeugträger von den Hochregallagern 349, 350 zum Wechselring 15 und umgekehrt vom Wechselring 15 zu den Hochregallagern transportieren. Selbstverständlich sind alle Regalförderzeuge und Magazine, auch Hochregallager, motorisch bzw. mit motorischen Regalförderzeugen, zu bedienen. Bei sämtlichen Ausführungsformen, die im Rahmen des Erfindungsgedankens liegen, kann die Zuordnung der Werkzeuge und der Werkstücke zueinander computergesteuert, insbesondere durch numerische Steuerungen, erfolgen, insbeonsdere auch dann, wenn mehrere Bearbeitungsmaschinen gemäß der Erfindung in Transferstraßen o.dgl. – verkettet – zueinander angeordnet sind und die Zuordnung der Werkzeuge und Werkstücke zu den einzelnen Bearbeitungsmaschinen numerisch gesteuert erfolgt.

Bei der Ausführungsform nach Fig. 43 ist ein Hochregalsystem 355 vorgesehen, mit einem Regalförderzeug 356 und Werkzeugwechsel-Stationen 357, 358.

Bei der Ausführungsform nach Fig. 44 ist ein Hochregal 359 und ein Regalförderzeug 360 für die verschiedenen Werkzeugträger vorhanden, von denen lediglich der Werkzeugträger 361 bezeichnet ist. Zwischen dem Hochregal 359 und dem Wechselring 15 ist ein weiteres Doppelmagazin 362 angeordnet, das motorisch angetrieben ist. Mit den Bezugszeichen 363, 364, 365 und 366 sind Palettenabstellplätze bezeichnet, die wahlweise beschickt werden können.

Die Ausführungsform nach Fig. 45 zeigt ein Magazin 367 für zahlreiche Werkzeugträger mit Rangierbahnen 368 und 369 sowie 368a und 369a und zusätzlichen Abstellplätzen 370, 371 und 372 für Sonderwerkzeugträger 373, 374 und 375, die entweder Wiederhol-Werkzeugträger sind (z. B. Fräsköpfe) oder z. B. Feindrehköpfe, deren Umlauf-Schmieröl in diesen zusätzlichen Abstellplätzen gekühlt und geheizt werden können.

Die Ausführungsform nach Fig. 46 zeigt ein Quermagazin 376 für die Anordnung zahlreicher Werkzeugträger 378 mit zwei zusätzlichen Abstellplätzen 377 und 378 zum Ablegen von Werkzeugträgern 379 und 380. Das Quermagazin 376 ist symmetrisch angeordnet.

Die Spannung bei der dargestellten Ausführungsform kann im übrigen über die Teile 86 bis 94 mittels der Spannpratze 91 erfolgen.

**Bezugszeichenliste**

1 Schlittenführung, Schlitteneinheit
2 Schlitten
3 Unterbau
4 Werkzeugträgerablage
5 Werkzeugträgerablage
6 Werkzeugträ gerablage
7 Werkzeugträger
8 Werkzeugträger
9 Werkzeugträger
10 Antriebseinheit
11 Gleichstromantrieb
12 Werkzeuge
13 Werkzeuge
14 Werkzeuge
15 Wechselring
15a Wechselring
16 Drehachse
17 Aufnahmehalter
18 Aufnahmehalter
19 Aufnahmehalter
20 Aufnahmehalter
21 Aufnahmekupplung
22 Aufnahmekupplung
23 Aufnahmekupplung
24 Aufnahmekupplung
25 Aufnahmekupplung
26 Aufnahmekupplung
27 Aufnahmekupplung
28 Aufnahmekupplung
29 Aufnahmekupplung
30 Aufnahmekupplung
31 Aufnahmekupplung
32 Widerlager
33 Energiezuführung
34 Aufnahme- und Spannelemente
35 Aufnahme- und Spannelemente
36 Aufnahme- und Spannelemente
37 Aufnahme- und Spannelemente
38 motorischer Antrieb
39 Zahnkranz
40 Rolle
41 Rolle
42 Winkelhebel
43 Achse
44 Koppelstange
45 Achse
46 Schwenkachse
47 Kupplung
48 Führungsnut
48a Führungsnut
49 Rolle
50 Werkzeugträger
60 Rollen
61 Rollen
62 Hilfsschlitten
63 Steuerkurve
64 Medienzuführung
65 Widerlager
66 Anschlag
67 Rolle
68 Federelement
69 Führungshülse
70 Rolle
71 Auflage
72 Auflage
73 Kolben-Zylinder-Einheit
74 Achse, Schwenkachse
75 Zylinder
76 Kolben
77 Kolbenstange
78 Schwenkachse
79 Indexierung und Auflage
79a Indexierung und Auflage
79b Indexierung und Auflage
79c Indexierung und Auflage
79d Indexierung und Auflage
79e Indexierung und Auflage
79f Indexierung und Auflage
79g Indexierung und Auflage
80 Klaue
81 Klaue
82 Klaue
83 Klaue
84 Widerlager
84a Widerlager
84b Widerlager
85 Widerlager
85a Widerlager
85b Widerlager
85c Widerlager
85d Widerlager
86 Kolben-Zylinder-Einheit
87 Zylinder
88 Kolben
89 Kolbenstange
90 Gelenk
91 Hebel
92 Achse
93 Lager
94 Spannase
95 Kolben-Zylinder-Einheit
96 Dämpfungsvorrichtung
97 Zylinder
97a Drosselöffnung
98 Kolben
99 Kolbenstange
100 Rolle
101 Kolben-Zylinder-Einheit
102 Zylinder
103 Kolben
104 Kolbenstange
105 Kugelkörper

106 Spannpratze
107 Spannase
108 Spannöffnung
109 Spannhaken
110 Achse
111 Spindelmutter .
112 Spindel
113 Motor
114 Spannhaken
115 Kolben-Zylinder-Einheit
116 Hydraulikzylinder
117 Kolben
118 Kolbenstange
119 Schwenkachse
120 Schwenkachse
121 Lagervorsprung
122 Kolben-Zylinder-Einheit
123 Zylinder
124 Kolben
125 Kolbenstange
126 Schwenkachse
127 Schwenkachse
128 Winkelhebel
129 Winkelhebel
130 Schwenkachse
131 Schwenkachse
132 Achse
133 Achse
134 Kolben-Zylinder-Einheit
135 Zylinder
136 Kolben
137 Kolbenstange
138 Schwenkachse
139 Spannhebel
140 Spannase
141 Anschlag
142 Kolben-Zylinder-Einheit
143 Zylinder
144 Kolben
145 Kolbenstange
146 motorischer Antrieb
147 Motor
148 Zahnradvorgelege
149 -
150 -
151 -
152 -
153 -
154 -
155 -
156 -
157 Aufnahme
158 Aufnahme
159 Aufnahme
160 Aufnahme
161 Antriebskupplung
162 Antriebskupplung
163 Antrieb
164 Klaue
164a Klaue
164b Klaue
165 Klaue
166 Drehrichtung
167 Werkzeugträger
168 Werkzeugträger
169 Werkzeugträger
170 Werkzeugträger
171 Werkzeugträger
172 Werkzeugträger
173 Doppelpfeil
174 Doppelpfeil
175 Drehpunkt
176 Drehpunkt
177 Werkzeugträger
177a Wechselring
178 Werkzeugträger
178a Wechselring
179 Werkzeugträger
179a Wechselring
180 Werkzeugträger
180a Wechselring
181 Werkzeugträger
182 Werkzeugträger
183 Werkzeugträger
184 Werkzeugträger
185 Werkzeugträger
186 Werkzeugträger
187 Werkzeugträger
188 Werkzeugträger
189 Werkzeugträger
190 Werkzeugträger
191 Magazin
192 Palette
193 Werkstück
194 Pelettenabstellplatz
195 Pelettenabstellplatz
196 Schlittenantrieb
197 Energiezuführung
198 Werkstück
199 Störkontur
200 Einzelmagazin
201 Werkzeugträger
202 Werkzeugträger
203 Werkzeugträger
204 Werkzeugträger
205 Werkzeugträger
206 Werkzeugträger
207 Werkzeugträger
208 Werkzeugträger
209 Werkzeugträger
210 Werkzeugträger
211 Spur
212 Spur
213 Einfachmagazin
214 Werkzeugträger
215 Werkzeugträger
216 Werkzeugträger
217 Werkzeugträger
218 Werkzeugträger
219 Werkzeugträger
220 Werkzeugträger
221 Werkzeugträger
222 Werkzeugträger
223 Werkzeugträger
224 Doppelmagazin
225 Werkzeugträger
226 Werkzeugträger
227 Werkzeugträger
228 Werkzeugträger
229 Werkzeugträger

230 Werkzeugträger
231 Werkzeugträger
232 Werkzeugträger
233 Werkzeugträger
234 Werkzeugträger
235 Werkzeugträger.
236 Werkzeugträger
237 Werkzeugträger
238 Werkzeugträger
239 Werkzeugträger
240 Werkzeugträger
241 Einfachmagazin
242 Werkzeugträger
243 Werkzeugträger
244 Werkzeugträger
245 Werkzeugträger
246 Werkzeugträger
247 Werkzeugträger
248 Werkzeugträger
249 Werkzeugträger
250 Werkzeugträger
251 Werkzeugträger
252 Werkzeugträger
253 Werkzeugträger
254 Doppelmagazin
255 Werkzeugträger
256 Werkzeugträger
257 Werkzeugträger
258 Werkzeugträger
259 Werkzeugträger
260 Werkzeugträger
261 Werkzeugträger
262 Werkzeugträger
263 Werkzeugträger
264 Werkzeugträger
265 Werkzeugträger
266 Werkzeugträger
267 Werkzeugträger
268 Werkzeugträger
269 Werkzeugträger
270 Werkzeugträger
271 Werkzeugträger
272 Werkzeugträger
273 Rundmagazin
274 Werkzeugträger
274a Werkzeugträger
274b Werkzeugträger
275 Werkzeugträger
276 Werkzeugträger
277 Werkzeugträger
278 Werkzeugträger
279 Werkzeugträger
280 Schalttisch
281 Umsetzer
282 Ovalmagazin
283 Werkzeugträger
284 Werkzeugträger
284a Werkzeugträger
285 Werkzeugträger
286 Werkzeugträger
287 Werkzeugträger
288 Werkzeugträger
289 Werkzeugträger
290 Werkzeugträger
291 Werkzeugträger
292 Werkzeugträger
293 Werkzeugträger
294 Werkzeugträger
295 Werkzeugträger
296 Werkzeugträger
297 Werkzeugträger
298 Werkzeugträger
299 Werkzeugträger
299a Werkzeugträger
300 Magazin
301 Werkzeugträger
302 Werkzeugträger
303 Werkzeugträger
304 Werkzeugträger
305 Werkzeugträger
306 Werkzeugträger
307 Werkzeugträger
308 Werkzeugträger
309 Werkzeugträger
310 Werkzeugträger
311 Werkzeugträger
312 Werkzeugträger
313 Werkzeugträger
314 Werkzeugträger
315 Werkzeugträger
316 Werkzeugträger
317 Werkzeugträger
318 Werkzeugträger
319 Werkzeugträger
320 Antriebsstation
321 Verlängerung
322 Umlenkstation
323 Grundgestell
324 Grundgestell
325 Stütze
326 Transportwagen
327 Transportwagen
328 Motor
329 Grundgestell
330 Doppelmagazin
331 Oval-Umlaufmagazin
332 Oval-Umlaufmagazin
333 verfahrbarer Umsetzer
334 verfahrbarer Werkzeugträger
335 Umsetzer
336 Dreifachmagazin
337 Hochregal
338 Werkzeugträger
339 Regalförderzeug
340 Zwischenspeicher
341 Werkzeugträger
342 Werkzeugträger
343 Regalförderzeug
344 Hochregallager
345 Hochregallager
346 Werkzeugträger
347 Zwischenspeicher
348 Regalförderzeug
349 Hochregallager
350 Hochregallager
351 Werkzeugträger
352 Werkzeugträger
353 Zwischenspeicher
354 Schwenk- und Schiebestation
355 Hochregalsystem

356 Regalförderzeug
357 Werkzeugwechselstation
358 Werkzeugwechselstation
359 Hochregal
360 Regalförderzeug
361 Werkzeugträger·
362 Magazin
363 Palettenabstellplatz
364 Palettenabstellplatz
365 Palettenabstellplatz
366 Palettenabstellplatz
367 Magazin
368 Rangierbahn
368a Rangierbahn
369 Rangierbahn
369a Rangierbahn
370 zusätzlicher Abstellplatz
371 zusätzlicher Abstellplatz
372 zusätzlicher Abstellplatz
373 Werkzeugträger
374 Werkzeugträger
375 Werkzeugträger
376 Quermagazin
377 Abstellplatz
378 Abstellplatz
379 Werkzeugträger
380 Werkzeugträger
A vertikale Hubrichtung des Wechselringes 15 nach oben oder der Ablage (n) 4, 5 und 6 nach unten
C Schwenkrichtung des Winkelhebels 42
D Verschieberichtung
E Hub des Schlittens 2
F Ansichtsrichtung in Fig. 1
G Hub des Hilfsschlittens 62 gegenüber dem Schlitten 2
H Weg des Hilfsschlittens 62 von der Ablage bis in die Arbeitsstellung
K Hub der Schlitteneinheit von der hinteren Endstellung (Schwenkstellung) bis in die Arbeitsstellung
T Vertikaler Hub des Wechselringes 15 nach unten oder der Ablage (n) 4, 5 und 6 nach oben

**Patentansprüche**

1. Bearbeitungsmaschine mit einem auf einem Unterbau (3) zwischen einer Bearbeitungsstellung und einer Werkzeugwechselstellung längsverschieblichen Schlitten (2), mit einem auf diesem Schlitten (2) angeordneten und relativ zu diesem in derselben Richtung längsverschieblichen Hilfsschlitten (62), mit einer als Wechselring (15) ausgebildeten, auf dem Hilfsschlitten (62) um eine vertikale Achse (16) motorisch drehbar angeordneten Werkzeugwechselvorrichtung, die an deren Umfang mindestens zwei Aufnahmekupplungen (21–31) zumn An- und Abkuppeln von gegeneinander austauschbaren Werkzeugträgern (7, 8, 9, 50) aufweist, mit einer auf dem Schlitten (2) angeordneten Antriebseinheit (10), die wenigstens eine Energiezuführvorrichtung (33) für den Antrieb des in Arbeitsstellung befindlichen Werkzeugträgers (9) und mindestens ein Aufnahme- und Spannelement (34–37) zum Fixieren und Spannen des in Arbeitsstellung befindlichen Werkzeugträgers (9) aufweist, und die vom Wechselring (15) ringförmig umschlossen ist, und mit einem auf dem Unterbau (3) angebrachten Widerlager (65), das bei einer Rückzugbewegung von der Bearbeitungsstellung in die Werkzeugwechselstellung bewirkt, daß der Wechselring (15) derart angehalten wird, daß er gemeinsam mit dem in Arbeitsstellung befindlichen Werkzeugträger (9) durch eine Relativbewegung gegenüber der weiter zurückfahrenden Antriebseinheit (10) stehenbleibt und dabei den Werkzeugträger (9) von der Antriebseinheit (10) löst, wobei nutartige Kurven (48, 48a) im Hilfsschlitten angebracht sind, die mit Führungselementen (60, 61) am Schlitten (2) zusammenwirken und beim weiteren Zurückführen der Antriebseinheit (10) eine vertikale Hubbewegung (A, T) des Wechselringes (15) bewirken, derart, daß die abgestellten Werkzeugträger (7, 8, 50) von Ablagen (4, 5, 6) durch den Wechselring (15) abgehoben werden, um anschließend durch eine Drehbewegung des Wechselringes (15) den zuvor betriebenen Werkzeugträger (9) gegen einen anderen Werkzeugträger (7, 8, 50) auszuwechseln, der daraufhin bei entgegengesetzter Stellbewegung der Antriebseinheit (10) in umgekehrter Reihenfolge an diese angekoppelt wird, dadurch gekennzeichnet, daß das Widerlager (65) einen Anschlag (66) für den Hilfsschlitten mit einer Rolle (67) aufweist, die in einem Käfig des Anschlages drehbar angeordnet ist und in Richtung auf den Hilfsschlitten (62) hervorspringt, und daß zwischen dem Schlitten (2) und dem Hilfsschlitten (62) ein in deren horizontaler Bewegungsrichtung wirkendes Federelement (68) vorgesehen ist, das sich mit einem Ende am Schlitten (2) abstützt und mit dem anderen Ende über eine in einer Führungshülse (69) angeordneten Rolle (70) am Hilfsschlitten (62) rollend abstützt, derart, daß der Hilfsschlitten (62) in der Werkzeugwechselstellung ständig in Richtung auf den Anschlag (66) gedrückt und vorgespannt ist.

2. Bearbeitungsmaschine mit einem auf einem Unterbau (3) zwischen einer Bearbeitungsstellung und einer Werkzeugwechselstellung längsverschieblichen Schlitten (2), mit einem auf diesem Schlitten (2) angeordneten und relativ zu diesem in derselben Richtung längsverschieblichen Hilfsschlitten (62), mit einer als Wechselring (15) ausgebildeten, auf dem Hilfsschlitten (62) um eine vertikale Achse (16) motorisch drehbar angeordneten Werkzeugwechselvorrichtung, die an deren Umfang mindestens zwei Aufnahmekupplungen (21–31) zum An- und Abkuppeln von gegeneinander austauschbaren Werkzeugträgern (7, 8, 9, 50) aufweist, mit einer auf dem Schlitten (2) angeordneten Antriebseinheit (10), die wenigstens eine Energiezuführvorrichtung (33) für den Antrieb des in Arbeitsstellung befindlichen Werkzeugträgers (9) aufweist, und die vom Wechselring (15) ringförmig umschlossen ist, mit Mitteln (73) zur Fixierung und Spannung des in Arbeitsstellung befindlichen Werkzeugträgers (9) an die Antriebseinheit, und mit einem auf dem Unterbau (3) angebrachten Widerlager (65), das bei einer Rückzugbewegung von der Bearbeitungsstellung in die Werkzeugwechselstellung bewirkt, daß der Wechselring (15) derart angehalten wird, daß er gemeinsam mit dem in Arbeitsstellung befindlichen Werkzeugträger (9) durch eine Relativbewegung gegenüber der weiter zurückfahrenden Antriebseinheit (10) stehenbleibt und dabei den Werkzeugträger (9) von der Antriebseinheit (10) löst, wobei nutartige Kurven (48, 48a) im Hilfsschlitten angebracht sind, die mit Führungselementen (60, 61) am Schlitten (2) zusammenwirken und beim weiteren Zurückführen der Antriebseinheit (10) eine vertikale Hubbewegung (A, T) des Wechselringes (15) bewirken, derart, daß die abgestellten Werkzeugträger (7, 8, 50) von Ablagen (4, 5, 6) durch den Wechselring (15) abgehoben werden, um anschließend durch eine Drehbewegung des Wechselringes (15) den zuvor betriebenen Werkzeugträger (9) gegen einen anderen Werkzeugträger (7, 8, 50) auszuwechseln, der daraufhin bei entgegengesetzter Stellbewegung der Antriebseinheit (10) in umgekehrter Reihenfolge an diese angekoppelt wird, dadurch gekennzeichnet, daß das Widerlager zum Anhalten des Hilfsschlittens einen Anschlag (66) mit einer Rolle (67) aufweist, die in einem Käfig des Anschlags drehbar angeordnet ist und in Richtung auf den Hilfsschlitten (62) hervorspringt, daß der Wechselring (15) als Aufnahmekupplungen für jeden Werkzeugträger paarweise angeordnete, rechtwinkelig nach oben gerichtete Klauen (80, 81, 82, 83) aufweist, die in entsprechende Widerlager (84, 85) der Werkzeugträger (7, 8, 9, 50) eingreifen, und daß zwischen dem Schlitten (2) und dem Hilfsschlitten (62) eine beidseitig mit Druckmitteldruck beaufschlagbare Kolben-Zylinder-Einheit (73) eingeschaltet ist, deren Zylinder (75) über eine horizontale, normal zur Bewegungsrichtung (D–E) des Schlittens (2) verlaufende Schwenkachse (74) am Hilfsschlitten (62) schwenkbeweglich gelagert ist, deren Kolben (76) längsverschieblich und dichtend im Zylinder (75) geführt ist, und deren Kolbenstange (77) abgedichtet aus dem Zylinder (75) herausgeführt ist und über eine parallel zur Schwenkachse (74) verlaufende Schwenkachse (78) in einem fest am Schlitten (2) angeordneten Widerlager schwenkbeweglich gelagert ist, so daß die Kolben-Zylinder-Einheit (73) in vertikaler Ebene schwenkbeweglich ist und durch entsprechende Druckmittelbeaufschlagung einerseits als Vorspannzylinder für den Hilfsschlitten (62) gegenüber dem Schlitten (2) wirkt und andererseits den Spannzylinder für den in Arbeitsstellung befindlichen Werkzeugträger (9) bildet, indem die Spannung über den Wechselring (15) selbst erfolgt und die Spannkräfte über den Wechselring (15) und dessen Lagerung aufgenommen werden.

3. Bearbeitungsmaschine mit einem auf einem Unterbau (3) zwischen einer Bearbeitungsstellung und einer Werkzeugwechselstellung längsverschieblichen Schlitten (2), mit einem auf diesem Schlitten (2) angeordneten und relativ zu diesem in derselben Richtung längsverschieblichen Hilfsschlitten (62), mit einer als Wechselring (15) ausgebildeten, auf dem Hilfsschlitten (62) um eine vertikale Achse (16) motorisch drehbar angeordneten Werkzeugwechselvorrichtung, die an deren Umfang mindestens zwei Aufnahmekupplungen (21–31) zum An- und Abkuppeln von gegeneinander austauschbaren Werkzeugträgern (7, 8, 9, 50) aufweist, mit einer auf dem Schlitten (2) angeordneten Antriebseinheit (10), die wenigstens eine Energiezuführvorrichtung (33) für den Antrieb des in Arbeitsstellung befindlichen Werkzeugträgers (9) aufweist, und die vom Wechselring (15) ringförmig umschlossen ist, und mit einem auf dem Unterbau (3) angebrachten Widerlager (65), das bei einer Rückzugbewegung von der Bearbeitungstellung in die Werkzeugwechselstellung bewirkt, daß der Wechselring (15) derart angehalten wird, daß er gemeinsam mit dem in Arbeitsstellung befindlichen Werkzeugträger (9) durch eine Relativbewegung gegenüber der weiter zurückfahrenden Antriebseinheit (10) stehenbleibt und dabei den Werkzeugträger (9) von der Antriebseinheit (10) löst, wobei nutartige Kurven (48, 48a) im Hilfsschlitten angebracht sind, die mit Führungselementen (60, 61) am Schlitten (2) zusammenwirken und beim weiteren Zurückführen der Antriebseinheit (10) eine vertikale Hubbewegung (A, T) des Wechselringes (15) bewirken, derart, daß die abgestellten Werkzeugträger (7, 8, 50) von Ablagen (4, 5, 6) durch den Wechselring (15) abgehoben werden, um anschließend durch eine Drehbewegung des Wechselringes (15) den zuvor betriebenen Werkzeugträger (9) gegen einen anderen Werkzeugträger (7, 8, 50) auszuwechseln, der daraufhin bei entgegengesetzter Stellbewegung der Antriebseinheit (10) in umgekehrter Reihenfolge an diese angekoppelt wird, dadurch gekennzeichnet, daß das Widerlager (65) eine Dämpfungsvorrichtung (96) aufweist, die aus einer Kolben-Zylinder-Einheit (95) besteht, deren Zylinder (97) mit einem darin längsverschieblich und dichtend geführten Kolben (98) aufweist, wobei dem Zylinder (97) eine Drosselöffnung (97a) zugeordnet ist, an die eine zu einem Tank führende Leitung angeschlossen ist, wobei mit einer Kolbenstange (99) eine Rolle (100) verbunden ist, die zur Anlage an der Stirnseite des Hilfsschlittens (62) vorgesehen ist und dabei an ihr in vertikaler Richtung (A–T) abrollt, so daß beim Anlaufen des Hilfsschlittens (62) gegen die Rolle (100) der Kolben (98) unter Verdrängung des im Zylinderraum befindlichen Öls über die Drosselöffnung (97a) verschoben wird, daß eine weitere Kolben-Zylinder-Einheit (101) angeordnet ist, deren Zylinder (102) fest im Schlitten (2) angeordnet ist und beidseitig mit Druckmitteldruck beaufschlagbar ist, deren Kolben (103) in Bewegungsrichtung des Schlittens (2) längsverschieblich und dichtend im Zylinder (102) geführt ist, wobei dem Kolben (103) eine Kolbenstange (104) zugeordnet ist, die sich über eine Rolle (105) gegen die Innenwand des Hilfsschlittens (62) abstützt und diesen in Richtung auf die Anlage (100) vorspannt, und daß zur Spannung des sich in Arbeitsstellung befindlichen Werkzeugträgers (9) zwei Spannpratzen (106) vorgesehen sind, die jeweils als zweiarmige Hebel ausgebildet sind und eine Spannase (107) zum Eingreifen in eine entsprechende Spannöffnung (108) der Spannhaken (109) am Werkzeugträger (9) aufweisen, wobei die Spannpratzen (106) um horizontal verlaufende Achsen (110) schwenkbeweglich gelagert sind und über eine Spindelmutter (111) und eine Spindel (112) mittels eines Motors (113) in beide Richtungen zum Spannen und Lösen des Werkzeugträgers (9) antreibbar sind.

4. Bearbeitungsmaschine auf einem mit einem Unterbau (3) zwischen einer Bearbeitungsstellung und einer Werkzeugwechselstellung längsverschieblichen Schlitten (2), mit einem auf diesem Schlitten (2) angeordneten und relativ zu diesem in derselben Richtung längsverschieblichen Hilfsschlitten (62), mit einer als Wechselring (15) ausgebildeten, auf dem Hilfsschlitten (62) um eine vertikale Achse (16) motorisch drehbar angeordneten Werkzeugwechselvorrichtung, die an deren Umfang mindestens zwei Aufnahmekupplungen (21–31) zum An- und Abkuppeln von gegeneinander austauschbaren Werkzeugträgern (7, 8, 9, 50) aufweist, mit einer auf dem Schlitten (2) angeordneten Antriebseinheit (10), die wenigstens eine Energiezuführvorrichtung (33) für den Antrieb des in Arbeitsstellung befindlichen Werkzeugträgers (9) aufweist, und die vom Wechselring (15) ringförmig umschlossen ist, mit Mitteln (134, 139) zur Fixierung und Spannung des in Arbeitsstellung befindlichen Werkzeugträgers an die Antriebseinheit, und mit Stellgliedern (115), die bei einer Rückzugbewegung von der Bearbeitungsstellung in die Werkzeugwechselstellung bewirken, daß der Wechselring (15) derart angehalten wird, daß er gemeinsam mit dem in Arbeitsstellung befindlichen Werkzeugträger (9) durch eine Relativbewegung gegenüber der Antriebseinheit (10) stehenbleibt und dabei den Werkzeugträger (9) von der Antriebseinheit (10) löst, wobei zwischen dem Schlitten (2) und dem Hilfsschlitten (62) wirkende Mittel (122, 128, 129) angeordnet sind, die eine vertikale Hubbewegung (A, T) des Wechselringes (15) bewirken, derart, daß die abgestellten Werkzeugträger (7, 8, 50) von Ablagen (4, 5, 6) durch den Wechselring (15) abgehoben werden, um anschließend durch eine Drehbewegung des Wechselringes (15) den zuvor betriebenen Werkzeugträger (9) gegen einen anderen Werkzeugträger (7, 8, 50) auszuwechseln, der daraufhin bei entgegengesetzter Stellbewegung der Antriebseinheit (10) in umgekehrter Reihenfolge an diese angekoppelt wird, dadurch gekennzeichnet, daß die zur Erzeugung der horizontalen Relativbewegung zwischen dem Schlitten (2) und Hilfsschlitten (62) vorgesehenen Stellglieder eine beidseitig mit Druckmitteldruck beaufschlagbare Kolben-Zylinder-Einheit (115) umfassen, deren Hydraulikzylinder (116) über eine horizontale, normal zur Bewegungsrichtung (D–E) des Schlittens (2) verlaufende Schwenkachse (119) am Hilfsschlitten (62) schwenkbeweglich gelagert ist, deren Kolben (117) längsverschieblich und dichtend im Zylinder geführt ist, und deren Kolbenstange (118) dichtend aus dem Zylinder herausgeführt ist und über eine parallel zur Schwenkachse (119) verlaufende weitere Schwenkachse (120) in einem fest am Schlitten (2) angeordneten Lagervorsprung (121) schwenkbeweglich gelagert ist, daß die zur Erzeugung der Hubbewegung vorgesehenen Mittel eine horizontal wirkende Kolben-Zylinder-Einheit (122) umfassen, die aus einem im Schlitten (2) angeordneten Zylinder (123) mit einem längsverschieblich und dichtend darin angeordneten Kolben (124) besteht, dessen Kolbenstange (125) dichtend aus dem Zylinder (123) herausgeführt ist und mit den einen Enden von im Abstand voneinander angeordneten Winkelhebeln (128, 129) über parallel zueinander verlaufende Schwenkachsen (126, 127) gekuppelt ist, wobei die Winkelhebel (128, 129) um parallel zueinander verlaufende Schwenkachsen (132, 133) am Schlitten (2) in vertikaler Ebene schwenkbeweglich gelagert sind und an deren anderen Enden über Schwenkachsen (130, 131) am Hilfsschlitten (62) gekuppelt sind, so daß der Hilfsschlitten (62) beim Verschieben des Kolbens (124) und der Kolbenstange (125) anhebbar und absenkbar ist, und daß die Spannung des jeweils in Arbeitsstellung befindlichen Werkzeugträgers (9) über den Wechselring (15) erfolgt, derart, daß eine Kolben-Zylinder-Einheit (134) im Schlitten (2) angeordnet ist, mit einem Zylinder (135), in dem längsverschieblich und dichtend ein Kolben (136) geführt ist und dessen Kolbenstange (137) über eine Schwenkachse (138) mit einem Spannhebel (139) gekuppelt ist, dessen Spannase (140) durch Verschieben des Kolbens (136) auf den Außenumfang des Wechselringes (15) in der Weise einzuwirken vermag, daß der in Arbeitsstellung befindliche Werkzeugträger an die Antriebseinheit gespannt wird.

5. Bearbeitungsmaschine mit einem auf einem Unterbau (3) zwischen einer Bearbeitungsstellung und einer Werkzeugwechselstellung längsverschieblichen Schlitten (2), mit einem auf diesem Schlitten (2) angeordneten und relativ zu diesem in derselben Richtung längsverschieblichen Hilfsschlitten (62), mit einer als Wechselring (15) ausgebildeten, auf dem Hilfsschlitten (62) um eine vertikale Achse (16) motorisch drehbar angeordneten Werkzeugwechselvorrichtung, die an deren Umfang mindestens zwei Aufnahmekupplungen (21–31) zum An- und Abkuppeln von gegeneinander austauschbaren Werkzeugträgern (7, 8, 9, 50) aufweist, mit einer auf dem Schlitten (2) angeordneten Antriebseinheit (10), die wenigstens eine Energiezuführvorrichtung (33) für den Antrieb des in Arbeitsstellung befindlichen Werkzeugträgers (9) und mindestens ein Aufnahme- und Spannelement (34–37) zum Fixieren und Spannen des in Arbeitsstellung befindlichen Werkzeugträgers (9) aufweist, und die vom Wechselring (15) ringförmig umschlossen ist, und mit einem auf dem Unterbau (3) angebrachten Widerlager, das bei einer Rückzugbewegung von der Bearbeitungsstellung in die Werkzeugwechselstellung bewirkt, daß der Wechselring (15) derart angehalten wird, daß er gemeinsam mit dem in Arbeitsstellung befindlichen Werkzeugträger (9) durch eine Relativbewegung gegenüber der weiter zurückfahrenden Antriebseinheit (10) stehenbleibt und dabei den Werkzeugträger (9) von der Antriebseinheit (10) löst, wobei in der Werkzeugwechselstellung Ablagen (4, 5, 6) für die abgestellten Werkzeugträger (7, 8, 50), mit Mitteln zu deren Höhenverstellung (A–T) vorgesehen sind, die mit dem Wechselring (15) derart zusammenwirken, daß die abgestellten Werkzeugträger (7, 8, 50) durch Senken der Ablagen (4, 5, 6) vom Wechselring (15) aufgenommen werden, um anschließend durch eine Drehbewegung des Wechselringes (15) den zuvor betriebenen Werkzeugträger (9) gegen einen anderen Werkzeugträger (7, 8, 50) auszuwechseln, der daraufhin bei entgegengesetzter Stellbewegung der Antriebseinheit (10) in umgekehrter Reihenfolge an diese angekoppelt wird, dadurch gekennzeichnet, daß das Widerlager einen festen oder gedämpften Anschlag (141) aufweist, der in Richtung auf den Hilfsschlitten (62) hervorsteht, daß zur Vorspannung des Hilfsschlittens (62) eine Kolben-Zylinder-Einheit (142) angeordnet ist, deren Zylinder (143) fest im Schlitten (2) angeordnet ist und beidseitig mit Druckmitteldruck beaufschlagbar ist, deren Kolben (144) in Bewegungsrichtung des Schlittens (2) längsverschieblich und dichtend im Zylinder (143) geführt ist, wobei dem Kolben (144) eine Kolbenstange (145) zugeordnet ist, die sich unter Druckmitteldruck gegen die Innenwand des Hilfsschlittens (62) abstützt und diesen in Richtung auf den Anschlag (141) vorspannt, daß die Mittel zur Höhenverstellung der Ablagen (4, 5, 6) einen Spindeltrieb (146) mit Motor (147) und Zahnradvorgelege (148) umfassen.

6. Bearbeitungsvorrichtung nach einem oder mehreren der vorhergehenden Ansprüche, dadurch gekennzeichnet, daß der Antriebseinheit (10) mehrere Antriebskupplungen (z.B. 161, 162) zugeordnet sind.

7. Bearbeitungsvorrichtung nach einem oder mehreren der vorhergehenden Ansprüche, dadurch gekennzeichnet, daß dem Wechselring (15) mehrere wegschwenkbare Werkzeugträgerablagen zugeordnet sind, zwischen denen der Wechselring (15) mit der Antriebseinheit (10) und dem Antriebsmotor (11) und dem in Arbeitsstellung angekuppelten Werkzeugträger (167) in Richtung auf die Bearbeitungsstation hindurchbewegbar ist.

8. Bearbeitungsmaschine nach einem der Ansprüche 1 bis 7, dadurch gekennzeichnet, daß dem Wechselring (15) ein Magazin (191) mit z.B. zehn Werkzeugträgern (z.B. 181 bis 190) zugeordnet ist, die z.B. über Rollenbahnen gesteuert dem Wechselring (15) zuführbar sind und daß dei Wechselring (15) den jeweils gewünschten Werkzeugträger (z.B. 182) unterfährt, ihn einhängt und von der zugeordneten Rollenbahn abhebt.

9. Bearbeitungsmaschine nach einem der Ansprüche 1 bis 7, dadurch gekennzeichnet, daß dem Wechselring (15) ein Einzelmagazin (200) bzw. ein Mehrfachmagazin zugeordnet ist und daß das Einzelmagazin (200) oder das Mehrfachmagazin (200, 211, 212) quer angebaut – kopfseitig – vor dem Wechselring (15) vorgesehen ist.

10. Bearbeitungsmaschine nach einem der Ansprüche 1 bis 7, dadurch gekennzeichnet, daß ein Einfachmagazin quer angebaut dem Wechselring (15) zugeordnet ist, in dem mehrere Werkzeugträger (z.B. 216–223) angeordnet sind.

11. Bearbeitungsmaschine nach einem der Ansprüche 1 bis 7, dadurch gekennzeichnet, daß dem Wechselring (15) ein Doppelmagazin (224), quer angebaut, mit zahlreichen Werkzeugträgern (z.B. 227–232, 233–240) zugeordnet ist.

12. Bearbeitungsmaschine nach einem der Ansprüche 1 bis 7, dadurch gekennzeichnet, daß ein Einfachmagazin (241) dem Wechselring (15), längs angebaut, zugeordnet ist mit zahlreichen Werkzeugträgern (z.B. 244–251).

13. Bearbeitungsmaschine nach einem der Ansprüche 1 bis 7, dadurch gekennzeichnet, daß dem Wechselring (15) ein Doppelmagazin (254) zugeordnet ist, längs angebaut, mit zahlreichen Werkzeugträgern (z.B. 257–263, 264–272).

14. Bearbeitungsmaschine nach einem der Ansprüche 1 bis 7, dadurch gekennzeichnet, daß dem Wechselring (15) ein Rundmagazin (273) mit wahllosem Zugriff zugeordnet ist und daß zwischen dem Rundmagazin (273) und dem Wechselring (15) ein Umsetzer (281) für die Werkzeugträger (z.B. 274–274a) angeordnet ist.

15. Bearbeitungsmaschine nach einem der Ansprüche 1 bis 7, dadurch gekennzeichnet, daß dem Wechselring (15) ein umlaufendes Ovalmagazin für wahllosen Zugriff (282) für zahlreiche Werkzeugträger (z.B. 298) zugeordnet ist und daß zwischen dem Ovalmagazin (282) und dem Wechselring (15) ein Umsetzer (281) für die Werkzeugträger (z.B. 284–285) angeordnet ist.

16. Bearbeitungsmaschine nach einem der Ansprüche 1 bis 7, dadurch gekennzeichnet, daß dem Wechselring (15) ein quer angebautes umlaufendes Ovalmagazin für wahllosen Zugriff (z.B. 300) für zahlreiche Werkzeugträger (z.B. 315) zugeordnet ist und daß zwischen dem Magazin (300) und dem Wechselring (15) ein Umsetzer (281) angeordnet ist.

17. Bearbeitungsmaschine nach einem der Ansprüche 1 bis 7, dadurch gekennzeichnet, daß dem Wechselring (15) ein Doppelmagazin (330, 331, 332) zugeordnet ist und daß zwischen dem Doppelmagazin und dem Wechselring (15) ein verfahrbarer Umsetzer (333) für die Werkzeugträger zwischengeschaltet ist.

18. Bearbeitungsmaschine nach einem der Ansprüche 1 bis 7, dadurch gekennzeichnet, daß dem Wechselring (15) ein Dreifachmagazin (336) für zahlreiche Werkzeugträger zugeordnet ist und daß zwischen dem Dreifachmagazin (336) und dem Wechselring (15) ein verfahrbarer Umsetzer (335) zwischengeschaltet ist.

19. Bearbeitungsmaschine nach einem der Ansprüche 1 bis 7, dadurch gekennzeichnet, daß dem Wechselring (15) ein Hochregal (337) für die Werkzeugträger (z.B. 338) angeordnet ist und daß die Werkzeugträger (338) durch ein Regalförderzeug (339) einen Zwischenspeicher (340) zuführbar sind, von wo aus die Werkzeugträger (z.B. 341) dem Wechselring (15) zuführbar sind.

20. Bearbeitungsmaschine nach einem der Ansprüche 1 bis 7, dadurch gekennzeichnet, daß dem Wechselring (15) auf einer Seite zwei mit Abstand zueinander angeordnete Hochregale (344, 345) für die Werkzeugträger (z.B. 346) zugeordnet sind und daß zwischen den Hochregalen (344, 345) ein Regalförderzeug (343) für den Transport der Werkzeugträger (346) zugeordnet ist und daß zwischen dem einen Hochregal (345) ein Zwischenspeicher (347) angeordnet sind, von wo aus die Werkzeugträger im Wechselring (15) zuführbar sind.

21. Bearbeitungsmaschine nach einem der Ansprüche 1 bis 7, dadurch gekennzeichnet, daß dem Wechselring (15) kopfseitig sowie in Hubrichtung des Wechselringes (15) mit ihren Längsachsen weisend mit Abstand zueinander zwei Hochregallager (349, 350) für die Werkzeugträger (z.B. 351, 352) angeordnet sind, zwischen denen ein Regalförderzeug (348) bewegbar ist, das die Werkzeugträger befördert, von wo aus die Werkzeugträger dem Wechselring (15) zuführbar sind.

22. Bearbeitungsmaschine nach einem der Ansprüche 1 bis 7, dadurch gekennzeichnet, daß quer zur horizontalen Hubrichtung des Wechselringes (15) ein Hochregalsystem (355) zum Umrüsten von Magazinen vorgesehen ist, mit Werkzeugwechselstationen (357 und 358).

23. Bearbeitungsmaschine nach einem der Ansprüche 1 bis 7, dadurch gekennzeichnet, daß dem Wechselring (15) quer zur horizontalen Hubrichtung des Wechselringes (15) ein Hochregal (359) zugeordnet ist, aus dem die Werkzeugträger 3(61) mittels eines Regalförderzeugs (360) entnehmbar sind, wobei zwischen dem Hochregal und dem Wechselring (15) ein Magazin (362) mit zahlreichen Spuren vorgesehen ist.

24. Bearbeitungsmaschine nach einem der Ansprüche 1 bis 7, dadurch gekennzeichnet, daß ein Längsmagazin (367) mit Rangierbahnen (368, 369, 368a, 369a) und zusätzlichen Abstellplätzen (370, 371, 372) zum Abstellen von Werkzeugträgern (373, 374, 375) vorgesehen sind, wobei diese zusätzlichen Abstellplätze z.B. für Wiederhol-Werkzeugträger oder für Sonder-Werkzeugträger, z.B. für Feindreh-Spindelstöcke vorgesehen sind, die zur Konstanthaltung der Spindelstock-Schmieröl-Temperatur an Kühl- und Heizaggregate angeschlossen werden können.

25. Bearbeitungsmaschine nach einem der Ansprüche 1 bis 7, dadurch gekennzeichnet, daß dem Wechselring (15) ein symmetrisches Quermagazin (376) zugeordnet ist, dessen Längsachse quer zur horizontalen Hubrichtung des Wechselrings (15) angeordnet ist und zusätzliche Abstellplätze (377, 378) zur Aufnahme von Sonder-Werkzeugträgern (379, 380) z.B. Feindreh-Spindelstöcken vorgesehen sind, die zur Konstanthaltung der Spindelstock-Schmieröl-Temperatur an Kühl- und Heizaggregate angeschlossen werden können.

## Claims

1. Processing machine with a carriage (2) which can travel in the longitudinal direction and which is mounted on a sub-structure (3) in between a processing position and a tool changing position, with an auxiliary carriage (62) which is mounted on this carriage (2), and which can travel in the longitudinal direction relative to the carriage (2), with a tool changing facility, which can be rotated by means of a motor around a vertical axis (16), and which is in the form of a changing ring (15) mounted on the auxiliary carriage (62), the periphery of which is provided with at least two take-up couplings (21–31) for the purpose of coupling and uncoupling interchangeable tool carriers (7, 8, 9, 50), with a driving unit (10) which is mounted on the carriage (2) and which is provided with at least one power supply facility (33) for the operation of the tool carrier (9) which is located in the work position and at least one take-up and clamping element (34–37) for fixing and clamping the tool carrier (9) which is located in the work position and which is enclosed in a circular manner by the changing ring (15), and with a counter-bearing (65) which is mounted on the substructure (3) which, subsequent to a return movement from the processing position to the tool changing position causes the changing ring (15) to be stopped in such a manner that, together with the tool carrier (9) which is located in the work position, with a relative movement remains stationary as compared to the driving unit (10) which continues to travel in the return direction and thereby uncouples the tool carrier (9) from the driving unit (10) whereby angled slots (48, 48a) are provided in the auxiliary carriage which, in conjunction with the guiding elements (60, 61) on the carriage (2) combine to cause the changing ring (15) to travel vertically (A, T) when the driving unit (10) continues its return travel, in such a manner that the side-tracked tool carriers (7, 8, 50) are lifted from the rests (4, 5, 6) by means of the changing ring (15), in order to exchange the previously operated tool carrier (9) for another tool carrier (7, 8, 50) which is then coupled to the driving unit (10) subsequent to a positioning movement in the opposite direction characterized in that the counter bearing (65) is provided with a stopping facility (66) for the auxiliary carriage with a roller (67) which is mounted inside a cage which is part of the stopping facility, in such a manner that it can be rotated, and which springs forward in the direction of the auxiliary carriage (62), and that a spring element (68) is provided in between the carriage (2) and the auxiliary carriage (62) and which acts in the horizontal direction of travel of the carriage (2) and the auxiliary carriage (62) and one end of which is supported on the carriage (2) and the other end is supported by means of a roller (70) which is mounted inside a guiding bushing (69) in such a manner that the auxiliary carriage (62) which is located in the tool changing position is continually pressed in the direction of the stopping facility (66) and is pre-clamped.

2. Processing machine with a carriage (2) which can travel in the longitudinal direction and which is mounted on a substructure (3) in between a processing position and a tool changing position, with an auxiliary carriage (62) which is mounted on this carriage (2), and which can travel in the longitudinal direction relative to the carriage (2), with a tool changing facility, which can be rotated by means of a motor around a vertical axis (16), and which is in the form of a changing ring (15) mounted on the auxiliary carriage (62), the periphery of which is provided with at least two take-up couplings (21–31) for the purpose of coupling and uncoupling interchangeable tool carriers (7, 8, 8, 50), with a driving unit (10) which is mounted on the carriage (2) and which is provided with at least one power supply facility (33) for the operation of the tool carrier (9) which is located in the work position, and which is enclosed in a circular manner by the changing ring (15), with a means (73) for fixing and clamping the tool carrier (9) which is located in the work position, to the driving unit and with a counter-bearing (65) which is mounted on the substructure (3) which subsequent to a return movement from the processing position to the tool changing position causes the changing ring (15) to be stopped in such a manner that, together with the tool carrier (9) which is in the work position, with a relative movement as compared to the driving unit (10) which continues its return travel, remains stationary and thereby uncouples the tool carrier (9) from the driving unit (10) whereby angled slots (48, 48a) are provided in the auxiliary carriage which in conjunction with the guiding elements (60, 61) on the carriage (2) cause the changing ring (15) to travel vertically (A, T) with the continuing return travel of the driving unit (10) in such a manner that the sidetracked tool carriers (7, 8, 50) are lifted from the rests (4, 5, 6) by means of a rotating movement of the changing ring (15) in order to subsequently exchange the previously operated tool carrier (9) for another tool carrier (7, 8, 50) which then is coupled to this driving unit (10) in a reversed sequence persuant to a return positioning movement of the driving unit (10) characterized in that, in order to stop the auxiliary carriage the counter bearing is provided with a stopping facility (66) with a roller (67), which is located inside a cage of the stopping facility (66) in such a manner that it can rotate and springs forward in the direction of the auxiliary carriage (62), that the changing ring (15) is provided with pairs of rightangled, vertically-aligned claws, (80, 81, 82, 83) as take-up couplings for each tool carrier and which engage in the corresponding counter bearing (84, 85) of the tool carrier (7, 8, 9, 50) and that a piston-cylinder unit (73) which can be pressurized on both sides with medium pressure, is integrated in between the carriage (2) and the auxiliary carriage (62) and the cylinder (75) on which is pivot-mounted by means of a pivoting axle (74) on the auxiliary carriage (62) and which is aligned horizontally, namely normal to the direction of travel (D–E) of the carriage (2) whose piston (76) is guided longitudinally and compressing in the cylinder (75) and its piston rod (77) travels, compressing, out of the cylinder (75) and is pivot-mounted, by means of a pivoting axle (78) which is aligned paralled to the pivoting axle (74), in a counter bearing which is permanently mounted on the carriage (2) in such a manner that the piston-cylinder-unit (73) can be pivoted in the vertical plane and, by means of a corresponding pressurizing on the one hand functions as a preclamping cylinder for the auxiliary carriage (62) as opposed to the carriage (2) and, on the other hand, forms the clamping cylinder for the tool carrier (9) which is in the work position, in that the clamping is done by means of the clamping ring (15) itself and the clamping forces are absorbed by means of the clamping ring (15) and its bearing.

3. Processing machine with a carriage (2) which can travel in the longitudinal direction and which is mounted on a sub-structure (3) in between a processing position and a tool changing position, with an auxiliary carriage (62) which is mounted on this carriage (2), and which can travel in the longitudinal direction relative to the carriage (2), with a tool changing facility, which can be rotated by means of a motor around a vertical axis (16), and which is in the form of a changing ring (15) mounted on the auxiliary carriage (62), the periphery of which is provided with at least two take-up couplings (21–31) for the purpose of coupling and uncoupling interchangeable tool carriers (7, 8, 9, 50), with a driving unit (10) which is mounted on the carriage (2) and which is provided with at least one power supply facility (33) for the operation of the tool carrier (9) which is located in the work position and which is enclosed in a circular manner by the changing ring (15) and with a counter-bearing (65) which is mounted on the substructure (3) which, subsequent to a return movement from the processing position to the tool changing position causes the changing ring (15) to be stopped in such a manner that, together with the tool carrier (9) which is in the work position, with a relative movement as compared to the driving unit (10) which continues its return travel, remains stationary and thereby uncouples the tool carrier (9) from the driving unit (10), whereby angled slots (48, 48a) are provided in the auxiliary carriage which, in conjunction with the guiding elements (60, 61) on the carriage (2) cause the changing ring (15) to travel vertically (A, T) with the continuing return travel of the driving unit (10) in such a manner that the sidetracked tool carriers (7, 8, 50) are lifted from the rests (4, 5, 6) by means of the changing ring (15) in order, by means of a turning movement of the changing ring (15) to subsequently exchange the previously-operated tool carrier (9) for another tool carrier (7, 8, 50) which then is coupled to this driving unit (10) in a reversed sequence subsequent to a return positioning movement of the driving unit (10) characterized in that the counter-bearing (65) is equipped with a damping facility (96) which consists of a piston-cylinder-unit (95), whose cylinder (97) is equipped internally with a piston (98) which travels, compressing, longitudinally whereby the cylinder (97) is provided with a choke orifice (97a) to which a pipeline is connected which in turn is connected to a tank, whereby a roller (100) is connected to a piston rod (99) which is provided for locating at the front face of the auxiliary carriage (62) and thereby rolls off it in the vertical direction (A, T) so that when the auxiliary carriage (62) advances toward the roller (100) the piston (98) is caused to travel due to the pressure exerted by the oil in the cylinder chamber by way of the choke orifice (97a), that a further piston-cylinder-unit (101) is integrated the cylinder (102) of which is permanently fixed in the carriage (2) and which can be pressurized on both sides with medium pressure, whose piston (102) is guided longitudinally and compressing in the direction of travel of the carriage (2) in cylinder (102) whereby the piston (103) is correlated to a piston rod (104) which is supported by means of a roller (105) against the inner wall of the auxiliary carriage (62) and pre-clamps this auxiliary carriage (62) in the direction of the stop (100), and that two clamping shoes (106) are provided for clamping the tool carrier (9) which is located in the work position, which, respectively, are in the form of a two-armed lever and an indexing nose (107) for engaging in the respective clamping orifice (108) of the tenterhooks (109) on the tool carrier (9) whereby the clamping shoes (106) are pivoted around horizontally aligned axles (110) and can be operated by means of a spindle nut (111) and a spindle (112) by means of a motor (113) in both directions for coupling and uncoupling the tool carrier (9).

4. Processing machine with a carriage (2) which can travel in the longitudinal direction and which is mounted on a substructure (3) in between a processing position and a tool changing position, with an auxiliary carriage (62) which is mounted on this carriage (2), and which can travel in the longitudinal direction relative to the carriage (2), with a tool changing facility, which can be rotated by means of a motor around a vertical axis (16), and which is in the form of a changing ring (15) mounted on the auxiliary carriage (62), the periphery of which is provided with at least two take-up couplings (21–31) for the purpose of coupling and uncoupling interchangeable tool carriers (7, 8, 9, 50), with a driving unit (10) which is mounted on the carriage (2) and which is provided with at least one power supply facility (33) for the operation of the tool carrier (9) which is located in the work position and which is enclosed by the changing ring (15) in a circular manner, with a facility (134, 139) for fixing and clamping the tool carrier which is located in the work position to the driving unit, and with positioning elements (115), which subsequent to a return movement from the processing position to the tool changing position, cause the changing ring (15) to be stopped in such a manner that, together with the tool carrier (9), with a relative movement as compared to the driving unit (10) remains stationary and thereby uncouples the tool carrier (9) from the driving unit (10), whereby facilities (122, 128, 129) which act between the carriage (2) and the auxiliary carriage (62) are provided which cause the changing ring (15) to travel vertically upward (A, T) in such a manner that the side-tracked tool carriers (7, 8, 50) are lifted from the rests (4, 5, 6) by means of the changing ring (15) in order subsequently, by means of a rotary movement of the changing ring (15) to exchange the previously operated tool carrier (9) for another tool carrier (7, 8, 50) which then, with an reversed positioning movement of the driving unit (10), in the reversed sequence, is coupled to the driving unit (10), characterized in that the positioning elements which are provided to generate the horizontal relative travel between the carriage (2) and the auxiliary carriage (62) includes a piston-cylinder, unit (115) which can be pressurized on both sides with medium pressure, the hydraulic cylinder (116) of which is pivot-mounted by means of a pivoting axle (119) which is aligned horizontally, namely normal to the direction of travel (D–E) of the carriage (2) at the auxiliary carriage (62), and whose piston (117) travels longitudinally and compressing in the cylinder and whose piston rod (118) is guided out of the cylinder, compressing, and which is pivot-mounted, by means of another pivoting axle (120) which is aligned parallel to the pivoting axle (120) in a bearing projection (121) which is permanently attached to the carriage (2), that the facilities provided for generating the travel include a horizontally-operating piston-cylinder-unit (122) which consists of a cylinder (123) provided on the carriage (2) which contains a compressing piston (124), the piston rod of which (125) travels, compressing, out of the cylinder (123) and is coupled by means of parallel aligned pivoting axles (126, 127) with one leg of the crank levers (128, 129) which are located at a distance from each other, whereby the crank levers (128, 129) are pivot-mounted in a vertical plane around mutually parallel aligned pivoting axles (132, 133) on the carriage (2), and the other legs of which are coupled by means of pivoting axles (131, 132) to the auxiliary carriage (62) so that the auxiliary carriage (62) can be raised and lowered by the travel of the piston (124) and the piston rod (125) and that the coupling of that tool carrier which is positioned in the work position is done by means of the changing ring (15) in such a manner that a piston-cylinder-unit (134) is provided on the carriage (2), with a cylinder (135), in which a piston (136) travels, compressing, and whose piston rod (137) is coupled by means of a pivoting axle (138) with a clamping lever (139), whose indexing nose can be operated by the piston (136) being caused to travel on the outer periphery of the changing ring (15) in such a manner that the tool carrier which is located in the work position is coupled to the driving unit.

5. Processing machine with a carriage (2) which can travel in the longitudinal direction and which is mounted on a substructure (3) in between a processing position and a tool changing position, with an auxiliary carriage (62) which is mounted on this carriage (2), and which can travel in the longitudinal direction relative to carriage (2), with a tool changing facility, which can be rotated by means of a motor around a vertical axis (16), and which is in the form of a changing ring (15) mounted on the auxiliary carriage (62), the periphery of which is provided with at least two take-up couplings (21–31) for the purpose of coupling and uncoupling the interchangeable tool carriers (7, 8, 9, 50), with a driving unit (10) which is mounted on the carriage (2) and which is provided with at least one power supply facility (33) for the operation of the tool carrier (9) which is located in the work position and at least one take-up and clamping element (34–37) for fixing and clamping the tool carrier (9) which is located in the work position and which is enclosed in a circular manner by the changing ring (15), and with a counter-bearing (65) which is mounted on the substructure (3) which, subsequent to a return movement from the processing position to the tool changing position causes the changing ring (15) to be stopped in such a manner that, together with the tool carrier (9) which is located in the work position, with a relative movement, it remains stationary as compared to the driving unit (10) which continues to travel in the return direction and there uncouples the tool carrier (9) from the driving unit (10) whereby, in the tool changing position, rests (4, 5, 6) are provided for the side-tracked tool carriers (7, 8, 50) and which have a height-adjustment facility (A–T), operating in conjunction with the changing ring (15) in such a manner that the side-tracked tool carriers (7, 8, 9, 50) by lowering the rests (4, 5, 6) are then picked-up by the changing ring (15) in order, by means of a rotating movement of the tool changing ring (15) to subsequently exchange the previously operated tool carrier (9) for another tool carrier (7, 8, 50) which then, persuant to a reverse positioning movement of the driving unit (10), in the reversed sequence, is coupled to this driving until (10) characterized in that the counter-bearing is provided with a fixed or a damped stopping facility (141) which extends in the direction of the auxiliary carriage (62) that for coupling the auxiliary carriage (62) a piston-cylinder-unit (142) is provided whose cylinder (143) is mounted permanently on the carriage (2) and which can be pressurized on both sides with medium pressure, whose piston (144) is guided longitudinally and compressing, in the direction of travel of the carriage (2), inside the cylinder (143) whereby the piston (144) is correlated to a piston rod (145), which, being subjected to the medium pressure, supports itself against the inner wall of the auxiliary carriage (62) and pre-couples this auxiliary carriage (62) in the direction of the stopping facility (41), that the facilities provided for the height adjustment of the rests (4, 5, 6) consist of a spindle drive (146) with a motor (147) and an intermediate gear wheel (148).

6. Processing facility in accordance with one or more of the previous claims characterized in that the driving unit (10) is provided with a number of driving couplings (e.g. 161, 162)

7. Processing facility in accordance with one or more of the previous claims characterized in that the changing ring (15) is provided with a number of pivoting tool carrier rests, between which the changing ring (15) with the driving unit (10) and the driving motor (11) and the tool carrier (167) which is coupled in the work position can travel through in the direction of the processing station.

8. Processing machine in accordance with one of the claims 1 to 7 characterized in that the changing ring (15) is provided with a magazine (191) with, for example, ten tool carriers (e.g. 181 to 190), which for example, controlled by means of roller tracks can be routed to the changing ring (15) and that the changing ring (15) travels underneath the respectively selected tool carrier (e.g. 182) couples to it and lifts it from the respective roller track.

9. Processing machine in accordance with one of the claims 1 to 7 characterized in that the clamping ring (15) is provided with a single magazine (200) or a multiple magazine and that the individual magazine (200) or the multiple magazine (200, 211, 212) is mounted transverse – on the head side – in front of the changing ring (15).

10. Processing machine in accordance with one of the claims 1 to 7 characterized in that a single magazine is mounted transverse to the changing ring (15) which is provided with a number of tool carriers (e.g 216–223).

11. Processing machine in accordance with one of the claims 1 to 7 characterized in that the changing ring (15) is provided with a transverse-mounted double magazine (224), which is provided with a number of tool carriers (e.g. 227–232, 233–240).

12. Processing machine in accordance with one of the claims 1 to 7 characterized in that the single magazine (241) which is provided with a number of tool carriers (e.g. 244–251) is attached longitudinally to the changing ring (15).

13. Processing machine in accordance with one of the claims 1 to 7 characterized in that a double magazine (254), which is provided with a number of tool carriers (e.g. 257–263, 264–272) is attached longitudinally to the changing ring (15).

14. Processing machine in accordance with one of the claims 1 to 7 characterized in that the changing ring (15) is provided with a freely-accessible round magazine (273) and that a transposer (281), for the tool carriers (e.g. 274–274a) is provided in between the round magazine (273) and the changing ring (15).

15. Processing machine in accordance with one of the claims 1 to 7 characterized in that the changing ring (15) is provided with a freely-accessible, encircling oval magazine (282) for a number of tool carriers (e.g. 298) and that a transposer (281) for the tool carriers (284–285) is provided between the oval magazine and the changing ring (15).

16. Processing machine in accordance with one of the claims 1 to 7 characterized in that the changing ring (15) is provided with a freely-accessible, transverse-mounted, encircling oval magazine (e.g. 300) for a number of tool carriers (e.g. 315) and that a transposer (281) is provided in between the magazine (300) and the changing ring (15).

17. Processing machine in accordance with one of the claims 1 to 7 characterized in that the changing ring (15) is provided with a double magazine (330, 331, 332) and that a mobile transposer (333) for the tool carrier is integrated in between the double magazine and the changing ring (15).

18. Processing machine in accordance with one of the claims 1 to 7 characterized in that the changing ring (15) is equipped with a triple magazine (336) for a number of tool carriers and that a mobile transposer (335) is integrated in between the triple magazine (336) and the changing ring (15).

19. Processing machine in accordance with one of the claims 1 to 7 characterized in that the changing ring (15) is provided with a vertical shelf facility (337) for the tool carrier (e.g. 338) and that the tool carrier (338) caribe transported to an intermediate storage facility (340) by means of a shelf transporting device (339) and from where the tool carrier (e.g. 341) can be routed to the changing ring (15).

20. Processing machine in accordance with one of the claims 1 to 7 characterized in that one side of the changing ring (15) is provided with two vertical shelf facilities (344, 345) which are positioned at a distance from each other, for the tool carriers (e.g. 346) and that a shelf transporting device (343) for the transportation of the tool carrier (346) is located in between the vertical shelf facilities (344, 345) and that an intermediate storage facility is provided in between one of the vertical shelves (345) and from which the tool carriers can travel to the changing ring (15).

21. Processing machine in accordance with one of the claims 1 to 7 characterized in that two vertical shelf stands (349, 350) which have their longitudinal axes positioned at a distance from each other, for the tool carriers (e.g. 351, 352) are provided at the head of and in the direction of travel of the changing ring (15), and that a shelf transporting device (348) which transports the tool carrier, is provided in between the two vertical shelf stands (349, 350) and from which the tool carriers can be routed to the changing ring (15).

22. Processing machine in accordance with one of the claims 1 to 7 characterized in that a vertical shelf system (355) is provided transverse to the horizontal direction of travel of the changing ring (15) for the transposition of the magazines, with tool changing stations (357 and 358).

23. Processing machine in accordance with one of the claims 1 to 7 characterized in that the changing ring (15) is provided with a vertical shelf facility (359) which is positioned transverse to the horizontal direction of travel of the changing ring (15) and from which the tool carrier (361) can be removed by means of a shelf transporting device (360) whereby a magazine (362) which is equipped with a number of tracks, is provided in between the vertical shelf facility and the changing ring (15)

24. Processing machine in accordance with one of the claims 1 to 7 characterized in that a longitudinal magazine (367) with shunting tracks (368, 369, 368a, 369a) and additional side-tracking locations (370, 371, 372) for side-tracking the tool carriers (373, 374, 375) are provided, whereby these additional side-tracking locations are provided, for example, for repetitive tool carriers as well as for finishing-cut headstocks, which can be connected in order to keep the temperature of the headstock lubricating oil on cooling and heating equipment at a constant level.

25. Processing machine in accordance with one of the claims 1 to 7 characterized in that the changing ring (15) is equipped with a symmetrical transverse magazine (376) the longitudinal axle of which lies transverse to the horizontal direction of travel of the changing ring (15) and additional side-track locations (377, 378) for accomodating special tool carriers (379, 380), for example finishing-cut headstocks which are connected in order to keep the temperature of the headstock lubricating oil on cooling and heating equipment at a constant level.

## Revendications

1. Machine d'usinage présentant sur une substructure (3) un chariot (2) longitudinalement mobile entre une position d'usinage et une position de changement d'outil, présentant un chariot auxiliaire (62) monté sur le chariot (2) et déplaçable dans la même direction longitudinalement à celui-ci (2), présentant un dispositif de changement d'outils en forme d'anneau (15) monté sur le chariot auxiliaire (62) et tournant sous l'effet d'un moteur autour d'un axe vertical (16), lequel (15) présente sur sa circonférence au moins deux accouplements-réceptacles (21–31) servant à accrocher et décrocher des porte-outils (7, 8, 9, 50) interchangeables, présentant une unité motrice (10) montée sur le chariot (2), laquelle (10) présente au moins un dispositif (33) d'alimentation énergétique pour l'entraînement du porte-outils (9) se trouvant en position de travail et au moins un élément réceptacle et de serrage (34–37) servant à immobiliser et serrer le porte-outil (9) se trouvant en position de travail et qui (10) est enfermée annulairement par l'anneau de changement (15) et présentant une culée (65) montée sur la substructure (3), laquelle (65) lors d'un retour de la position d'usinage à la position de changement d'outil fait que l'anneau de changement (15) est stoppé de sorte à s'immobiliser, avec le porteoutils (9) situé en position de travail, par un mouvement relatif vis-à-vis de l'unité motrice (10) continuant son recul et décroche ce faisant le porte-outils (9) de l'unité motrice (10), des rainures curvilignes (48, 48a) étant montées dans le chariot auxiliaire (62) et agissant conjointement aux éléments de guidage (60, 61) sur le chariot (2) et provoquant un mouvement vertical (A, T) de l'anneau de changement (15) pendant que l'unité motrice (10) poursuit son recul, de sorte que les porte-outils déposés (7, 8, 50) soient enlevés des tablettes (4, 5, 6) par l'anneau de changement (15) pour ensuite, par une rotation de l'anneau de changement (15), remplacer le porte-outil (9) précédemment mis en œuvre par un autre porte-outil (7, 8, 50), lequel (7, 8, 50) est accroché dans l'ordre chronologique inverse à l'unité motrice (10) se déplaçant ensuite en direction opposée, caractérisée en ce que la culée (65) présente une butée (66) à galet (67) pour le chariot auxiliaire, lequel (67) est enfermé tout en pouvant tourner dans une cage de la butée et saillant dans la direction du chariot auxiliaire (62), et en ce qu'entre le chariot (2) et le chariot auxiliaire (62) est prévu un élément-ressort (68) agissant dans le sens horizontal de son (67) mouvement, lequel (68) s'appuie en roulant par une extrémité contre le chariot (2) et par l'autre, moyennant un galet (70) logé dans une douille de guidage (69), contre le chariot auxiliaire (62) de sorte que celui-ci (62) est constamment maintenu en direction de la butée (66) et précontraint.

2. Machine d'usinage présentant sur une substructure (3) un chariot (2) longitudinalement mobile entre une position d'usinage et une position de changement d'outil, présentant un chariot auxiliaire (62) monté sur le chariot (2) et déplaçable dans la même direction longitudinalement à celui-ci (2), présentant un dispositif de changement d'outils en forme d'anneau (15) monté sur le chariot auxiliaire (62) et tournant sous l'effet d'un moteur autour d'un axe vertical (16), lequel (15) présente sur sa circonférence au moins deux accouplements-réceptacles (21–31) servant à accrocher et décrocher des porte-outils (7, 8, 9, 50) interchangeables, présentant une unité motrice (10) montée sur le chariot (2) laquelle (10) présente au moins un dispositif (33) d'alimentation énergétique pour l'entraînement du porte-outils (9) se trouvant en position de travail et enfermée (10) annulairement par l'anneau de changement (15), et présentant des moyens (73) d'immobilisation et de serrage du porteoutils (9), se trouvant en position de travail, contre l'unité motrice et présentant une culée (65) montée sur la substructure (3), laquelle (65) fait que, lors d'un mouvement de recul de la position d'usinage à la position de changement d'outil, l'anneau de changement (15) est stoppé de sorte à s'immobiliser, avec le porte-outils (9) situé en position de travail, par un mouvement relatif vis-à-vis de l'unité motrice (10) continuant son recul et décroche ce faisant le porte-outils (9) de l'unité motrice (10), des rainures curvilignes (48, 48a) étant montées dans le chariot auxiliaire (62) et agissant conjointement aux éléments de guidage (60, 61) sur le chariot (2) et provoquant un mouvement vertical (A, T) de l'anneau de changement (15) pendant que l'unité motrice (10) poursuit son recul, de sorte que les porte-outils déposés (7, 8, 50) soient enlevés des tablettes (4, 5, 6) par l'anneau de changement (15) pour ensuite, par une rotation de l'anneau de changement (15), remplacer le porte-outil (9) précédemment mis en œuvre par un autre porte-outil (7, 8, 50), lequel (7, 8, 50) est accroché dans l'ordre chronologique inverse à l'unité motrice (10) se déplaçant ensuite dans la direction opposée, caractérisée en ce que la culée stoppant le chariot auxiliaire présente une butée (66) à galet (67) lequel est enfermé tout en pouvant tourner dans une cage de la butée et saillant dans la direction du chariot auxiliaire (62), en ce que l'anneau de changement (15) présente comme logements-réceptacles de chaque porte-outils des griffes (80, 81, 82, 83) à angle droit tournées vers le haut et attaquant les culées (84, 85) correspondantes des porte-outils (7, 8, 9, 50), et en ce qu'entre le chariot (2) et le chariot auxiliaire (62) est installé un vérin double effet (73) opérant sous pression d'un fluide, dont (73) le cylindre (75) repose, tout en pouvant pivoter, contre le chariot auxiliaire (62) via un axe de pivotement (74) au tracé normalement horizontal par rapport au sens de déplacement (D–E) du chariot (2), dont (73) le piston (76) coulisse longitudinalement et hermétiquement dans le cylindre (75) et dont (73) la tige (77) sort hermétiquement du cylindre (75) et repose, tout en pouvant pivoter, dans une culée solidaire du chariot (2) via un axe de pivotement (78) au tracé parallèle à celui de l'axe de pivotement (74), de sorte que le vérin (73) pivote selon un plan vertical et par compression correspondante d'un fluide serve d'une part de vérin de précontrainte du chariot auxiliaire (62) vis-à-vis du chariot (2) et d'autre part de vérin de serrage du porte-outils (9) se trouvant en position de travail, le serrage ayant lieu via l'anneau de changement (15) proprement dit et les forces de serrage étant absorbées via l'anneau de changement (15) et son appui.

3. Machine d'usinage présentant sur une substructure (3) un chariot (2) longitudinalement mobile entre une position d'usinage et une position de changement d'outil, présentant un chariot auxiliaire (62) monté sur le chariot (2) et déplaçable dans la même direction longitudinalement à celui-ci (2), présentant un dispositif de changement d'outils en forme d'anneau (15) monté sur le chariot auxiliaire (62) et tournant sous l'effet d'un moteur autour d'un axe vertical (16), lequel (15) présente sur sa circonférence au moins deux accouplements-réceptacles (21–31) servant à accrocher et décrocher des porte-outils (7, 8, 9, 50) interchangeables, présentant une unité motrice (10) montée sur le chariot (2), laquelle (10) présente au moins un dispositif (33) d'alimentation énergétique pour l'entraînement du porte-outils (9) se trouvant en position de travail et et enfermée (10) annulairement par l'anneau de changement (15), et présentant une culée (65) montée sur la substructure (3), laquelle (65) lors d'un retour de la position d'usinage à la position de changement d'outil fait que l'anneau de changement (15) est stoppé de sorte à s'immobiliser, avec le porte-outils (9) situé en position de travail, par un mouvement relatif vis-à-vis de l'unité motrice (10) continuant son recul et décroche ce faisant le porte-outils (9) de l'unité motrice (10), des rainures curvilignes (48, 48a) étant montées dans le chariot auxiliaire et agissant conjointement aux éléments de guidage (60, 61) sur le chariot (2) et provoquant un mouvement vertical (A, T) de l'anneau de changement (15) pendant que l'unité motrice (10) poursuit son recul, de sorte que les porte-outils déposés (7, 8, 50) soient enlevés des tablettes (4, 5, 6) par l'anneau de changement (15) pour ensuite, par une rotation de l'anneau de changement (15), remplacer le porte-outil (9) précédemment mis en oeuvre par un autre porte-outil (7, 8, 50), lequel (7, 8, 50) est accroché dans l'ordre chronologique inverse à l'unité motrice (10) se déplaçant ensuite en direction opposée, caractérisée en ce que la culée (65) présente un dispositif amortisseur (96) composé d'un vérin (95) dont le cylindre (97) présente un piston (98) coulissant longitudinalement et hermétiquement à l'intérieur, un orifice à étranglement (97a) étant affecté au cylindre (97) du vérin et auquel (97a) est raccordée une conduite aboutissant à un réservoir, un galet (100) étant relié à une bielle (99) et étant prévu pour s'appuyer sur la face frontale du chariot auxiliaire (62) pour rouler contre elle dans le sens vertical (A–T), de sorte que lorsque le chariot auxiliaire (62) touche le galet (100) le piston (98) se déplace et chasse par l'orifice à étranglement (97a) l'huile située dans la chambre du cylindre, en ce qu'un autre vérin (101) est installé dont le cylindre (102) est monté dans le chariot (2) solidaire de celui-ci et peut recevoir des deux côtés le fluide sous pression, son piston (103) coulissant longitudinalement et hermétiquement dans le cylindre (102) dans le sens de déplacement du chariot (2), une tige de piston (104) étant affectée au piston (103) laquelle (104) s'appuie via un galet (105) contre la paroi intérieure du chariot auxiliaire (62) et le précontraint en direction du galet (100), et en ce que deux griffes (106) en forme de leviers à deux bras sont prévues pour serrer le porte-outils (9) se trouvant en position de travail et présentent un nez de serrage (107) engrenant dans un orifice (108) correspondant des crochets de serrage (109) du porte-outils (9), les griffes (106) reposant sur des axes horizontaux (110) permettant leur basculement et étant entraînables dans les deux sens par un moteur (113) via un écrou de broche (111) et une broche (112) pour serrer et desserrer le porte-outils (9).

4. Machine d'usinage présentant sur une substructure (3) un chariot (2) longitudinalement mobile entre une position d'usinage et une position de changement d'outil, présentant un chariot auxiliaire (62) monté sur le chariot (2) et déplaçable dans la même direction longitudinalement à celui-ci (2), présentant un dispositif de changement d'outils en forme d'anneau (15) monté sur le chariot auxiliaire (62) et tournant sous l'effet d'un moteur autour d'un axe vertical (16), lequel (15) présente sur sa circonférence au moins deux accouplements-réceptacles (21–31) servant à accrocher et décrocher des porte-outils (7, 8, 9, 50) interchangeables présentant une unité motrice (10) montée sur le chariot (2) laquelle (10) présente au moins un dispositif (33) d'alimentation énergétique pour l'entraînement du porte-outils (9) se trouvant en position de travail et enfermée (10) annulairement par l'anneau de changement (15), et présentant des moyens d'immobilisation et de serrage (134, 139), contre l'unité motrice, du porte-outils (9) se trouvant en position de travail, avec des organes de réglages (115) lesquels, lors d'un mouvement de recul de la position d'usinage à la position de changement d'outil font que l'anneau de changement (15) est stoppé de sorte à s'immobiliser, avec le porte-outils (9) situé en position de travail, par un mouvement relatif vis-à-vis de l'unité motrice (10) et décroche ce faisant le porte-outils (9) de l'unité motrice (10), des moyens d'action (122, 128, 129) étant installés entre le chariot (2) et le chariot auxiliaire (62) et provoquant un mouvement vertical (A–T) de l'anneau de changement, de sorte que les porte-outils déposés (7, 8, 50) soient enlevés des tablettes (4, 5, 6) par l'anneau de changement (15) pour ensuite, par une rotation de l'anneau de changement (15) remplacer le porte-outils (9) précédemment mis en œuvre par un autre porte-outils (7, 8, 50), lequel (7, 8, 50) est accroché dans l'ordre chronologique inverse à l'unité motrice (10) se déplaçant ensuite dans la direction opposée, caractérisée en ce que les organes de réglages prévus pour développer le mouvement horizontal relatif entre le chariot (2) et le chariot auxiliaire (62) comprennent un vérin (115) double effet fonctionnant par fluide sous pression, dont (115) le cylindre hydraulique (116) s'appuie contre le chariot auxiliaire (62) via un axe de basculement (119) horizontal au tracé normal par rapport à la direction du mouvement (D–E) du chariot (2), dont (115) le piston (117) coulisse longitudinalement et hermétiquement dans le cylindre et dont (115) la tige (118) sort du cylindre pour prendre appui dans un palier en saillie (121) solidaire du chariot (2) via un autre axe de basculement (120) au tracé parallèle à celui de l'axe de basculement (119), en ce que les moyens prévus pour développer la course horizontale comprennent un vérin (122) à effet horizontal et cylindre (123) monté dans le chariot (2) dans lequel (123) coulisse longitudinalement et hermétiquement un piston (124) dont la tige (125) sort hermétiquement du cylindre (123) et est couplée à certaines extrémités de leviers coudés (128, 129) via des axes de basculement (126, 127) aux tracés parallèles les uns aux autres, les leviers coudés (128, 129) pivotant selon un plan vertical en appui contre le chariot (2) via des axes de pivotement (132, 133) aux tracés parallèles les uns aux autres et étant couplés au chariot auxiliaire (62) à leurs autres extrémités via des axes de pivotement (130, 131), de sorte que le chariot auxiliaire (62) se soulève et s'abaisse lors du déplacement du piston (124) et de la tige (125) et en ce que le serrage du porte-outils (9) se trouvant en position de travail a lieu via l'anneau de changement (15) de telle sorte qu'un vérin (134) monté dans le chariot (2) présente un cylindre (135) dans lequel coulisse longitudinalement et hermétiquement un piston (136) et dont la tige (137) est reliée à un levier de serrage (139) via un axe de pivotement (138) dont (139) le nez (140), lorsque se déplace le piston, agit de telle sorte sur la circonférence extérieure de l'anneau de changement (15) que le porte-outils en position de travail est serré contre l'unité motrice.

5. Machine d'usinage présentant sur une substructure (3) un chariot (2) longitudinalement mobile entre une position d'usinage et une position de changement d'outil, présentant un chariot auxiliaire (62) monté sur le chariot (2) et déplaçable dans la même direction longitudinalement à celui-ci (2), présentant un dispositif de changement d'outils en forme d'anneau (15) monté sur le chariot auxiliaire (62) et tournant sous l'effet d'un moteur autour d'un axe vertical (16), lequel (15) présente sur sa circonférence au moins deux accouplements-réceptacles (21–31) servant à accrocher et décrocher des porte-outils (7, 8, 9, 50) interchangeables, présentant une unité motrice (10) montée sur le chariot (2), laquelle (10) présente au moins un dispositif (33) d'alimentation énergétique pour l'entraînement du porte-outils (9) se trouvant en position de travail et qui (10) présente au moins un élément réceptacle et de serrage (34–37) servant à immobiliser et serrer le porte-outils (9) se trouvant en position de travail et qui (10) est enfermée annulairement par l'anneau de changement (15) et présentant une culée (65) monté sur la substructure (3), laquelle (65) lors d'un retour de la position d'usinage à la position de changement d'outil fait que l'anneau de changement (15) est stoppé de sorte à s'immobiliser, avec le porte-outils (9) situé en position de travail, par un mouvement relatif vis-à-vis de l'unité motrice (10) continuant son recul et décroche ce faisant le porte-outils (9) de l'unité motrice, des tablettes (4, 5, 6) étant prévues à la position de changement d'outils, avec des moyens de variation de hauteur (A–T), pour les porte-outils (7, 8, 50) déposés, lesquelles (4, 5, 6) agissent conjointement à l'anneau de changement (15) de telle sorte que les porte-outils (7, 8, 50) déposés sont pris par l'anneau de changement (15) du fait de l'abaissement des tablettes (4, 5, 6) pour ensuite, par une rotation de l'anneau de changement (15), remplacer le porte-outils précédemment mis en œuvre par un autre porte-outil (7, 8, 50), lequel (7, 8, 50) est accroché dans l'ordre chronologique inverse à l'unité motrice (10) se déplaçant ensuite en direction opposée, caractérisée en ce que la culée présente une butée dure ou amortie (141) saillant dans la direction du chariot auxiliaire (62), de sorte qu'un vérin double effet (142) de précontrainte du chariot auxiliaire (62) est installé, dont (142) le cylindre (143) recevant des deux côtés le fluide sous pression est monté dans le chariot (2) solidaire de celui-ci (2) et dont (142) le piston (144) coulisse longitudinalement et hermétiquement dans le cylindre (143) dans le sens de déplacement du chariot (2), une tige (145) étant affectée au piston (144) laquelle (145), sous pression du fluide, repousse la paroi intérieure du chariot auxiliaire (62) et le précontraint contre la butée (141), en ce que les moyens de variation de hauteur des tablettes (4, 5, 6) comprennent une broche (146) à moteur (147) et engrenage (148).

6. Dispositif d'usinage selon l'une ou plusieurs des revendications précédentes, caractérisé en ce que plusieurs accouplements d'entraînement (161, 162 par exemple) sont affectés à l'unité motrice (10).

7. Dispositif d'usinage selon l'une ou plusieurs des revendications précédentes, caractérisé en ce que plusieurs tablettes de porte-outils s'éloignant par basculement sont affectées à l'anneau de changement (15) entre lesquelles l'anneau de changement (15) avec l'unité motrice (10) et le moteur d'entraînement (11) et le porte-outils (167) accroché en position de travail se déplace (15) en direction du poste d'usinage.

8. Machine d'usinage selon l'une des revendications 1 à 7, caractérisée en ce qu'un magasin (191) de par exemple dix porte-outils (181 à 190 par exemple) est affecté à l'anneau de changement (15), dirigeables par exemple par transrouleurs jusqu'à l'anneau de changement (15) et en ce que l'anneau de changement (15) passe en-dessous du porte-outils voulu (182 par exemple), l'accroche et le lève du transrouleur y affecté.

9. Machine d'usinage selon l'une des revendications 1 à 7, caractérisée en ce qu'un magasin monoplace (200) ou multiplace est affecté à l'anneau de changement (15), et en ce que la magasin monoplace (200) ou multiplace (200, 211, 212) est prévu monté transversalement – côté tête – devant l'anneau de changement (15).

10. Machine d'usinage selon l'une des revendications 1 à 7, caractérisée en ce qu'un magasin monoplace monté transversalement est affecté à l'anneau de changement (15) et plusieurs porte-outils (216–223 par exemple) sont montés dedans.

11. Machine d'usinage selon l'une des revendications 1 à 7, caractérisée en ce qu'un magasin biplace (224) monté transversalement est affecté à l'anneau de changement (15) dans lequel (224) sont disposés plusieurs porte-outils (227–232, 233–240 par exemple).

12. Machine d'usinage selon l'une des revendications 1 à 7, caractérisée en ce qu'un magasin monoplace (241) monté longitudinalement est affecté à l'anneau de changement (15) dans lequel (241) sont disposés plusieurs porte-outils (244–251 par exemple).

13. Machine d'usinage selon l'une des revendications 1 à 7, caractérisée en ce qu'un magasin biplace (254) monté longitudinalement est affecté à l'anneau de changement (15) dans lequel (254) sont disposés plusieurs porte-outils (257–263, 264–272 par exemple).

14. Machine d'usinage selon l'une des revendications 1 à 7, caractérisée en ce qu'un magasin circulaire (273) à accès aléatoire est affecté à l'anneau de changement (15) et en ce qu'entre le magasin circulaire (273) et l'anneau de changement (15) est disposé un transbordeur (281) de porte-outils (274–274a par exemple).

15. Machine d'usinage selon l'une des revendications 1 à 7, caractérisée en ce qu'un magasin de forme ovale à accès aléatoire (282) et contenant plusieurs porte-outils (298 par exemple) est affecté à l'anneau de changement (15) et en ce qu'entre le magasin ovale (282) et l'anneau de changement (15) est disposé un transbordeur (281) de porte-outils (284–285 par exemple).

16. Machine d'usinage selon l'une des revendications 1 à 7, caractérisée en ce qu'un magasin de forme ovale monté transversalement et à accès aléatoire (300 par exemple) et contenant plusieurs porte-outils (315 par exemple) est affecté à l'anneau (15), et en ce qu'entre le magasin (300) et l'anneau de changement (15) est disposé un transbordeur (281).

17. Machine d'usinage selon l'une des revendications 1 à 7, caractérisée en ce qu'un magasin biplace (330, 331, 332) est affecté à l'anneau de changement (15) et en ce qu'entre le magasin biplace et l'anneau de changement (15) est intercalé un transbordeur translatable (333) de porte-outils.

18. Machine d'usinage selon l'une des revendications 1 à 7, caractérisée en ce qu'un magasin triplace (336) à nombreux porte-outils est affecté à l'anneau de changement (15) et à ce qu'entre le magasin triplace (336) et l'anneau de changement (15) est intercalé un transbordeur translatable (335).

19. Machine d'usinage selon l'une des revendications 1 à 7, caractérisée en ce qu'une étagère (337) à porte-outils (338 par exemple) est affectée à l'anneau de changement (15) et en ce que les porte-outils (338) peuvent être amenés à un magasin temporaire (340) par un transstockeur (339) d'où (340) lesdits porte-outils (341 par exemple) sont desservables à l'anneau de changement (15).

20. Machine d'usinage selon l'une des revendications 1 à 7, caractérisée en ce que d'une part deux étagères (344, 345) à porte-outils (346 par exemple) distantes l'une de l'autre sont affectées à l'anneau de changement (15), en ce qu'entre lesdites étagères (344, 345) est disposé un transstockeur (343) véhiculant les porte-outils (346), et en ce que d'autre part entre une étagère (345) est installé un magasin intermédiaire (347) depuis lequel les porte-outils sont desservables à l'anneau de changement.

21. Machine d'usinage selon l'une des revendications 1 à 7, caractérisée en ce que deux étagères-magasins (349, 350) à porte-outils (351, 352 par exemple), distantes l'une de l'autres et faisant face de tête à l'anneau de changement (15) et aux axes longitudinaux dans le sens de course de l'anneau de changement (15) entre lesquelles se déplace un transstockeur (348) transportant les porte-outils et d'où (348) les porte-outils sont desservables à l'anneau de changement (15).

22. Machine d'usinage selon l'une des revendications 1 à 7, caractérisée en ce qu'un système d'étagères (355) est monté transversalement au sens horizontal de course de l'anneau de changement (15) et est prévu pour rééquiper les magasins à l'aide de postes de changement d'outils (357 et 358).

23. Machine d'usinage selon l'une des revendications 1 à 7, caractérisée en ce qu'une étagère (359) est affectée à l'anneau de changement (15) transversalement au sens de la course de celui-ci (15), d'où (359) les porte-outils (361) sont prélevables au moyen d'un transstockeur (360), un magasin multipistes (362) étant prévu entre l'étagère (359) et l'anneau de changement (15).

24. Machine d'usinage selon l'une des revendications 1 à 7, caractérisée en ce qu'est prévu un magasin longitudinal (367) à pistes de tri (368, 369, 368a, 369a) et postes supplémentaires de déposition (370, 371, 372) de porte-outils (373, 374, 375), ces postes de déposition étant prévus pour les porte-outils à outils d'usage répétitif ou pour des portes-outils spéciaux, par exemple des poupées de tournage de précision par exemple, raccordables à des groupes de refroidissement et de chauffage pour maintenir constante la température du liquide d'arrosage de la poupée.

25. Machine d'usinage selon l'une des revendications 1 à 7, caractérisée en ce qu'un magasin transversal (376) est affecté à l'anneau de changement (15) dont (376) l'axe longitudinal est disposé transversalement au sens horizontal de la course de l'anneau de changement (15) et que des postes de déposition supplémentaires (377, 378) sont prévus pour recevoir des porte-outils spéciaux (379, 380), raccordables à des groupes de refroidissement et de chauffage pour maintenir constante la température du liquide d'arrosage de la poupée.

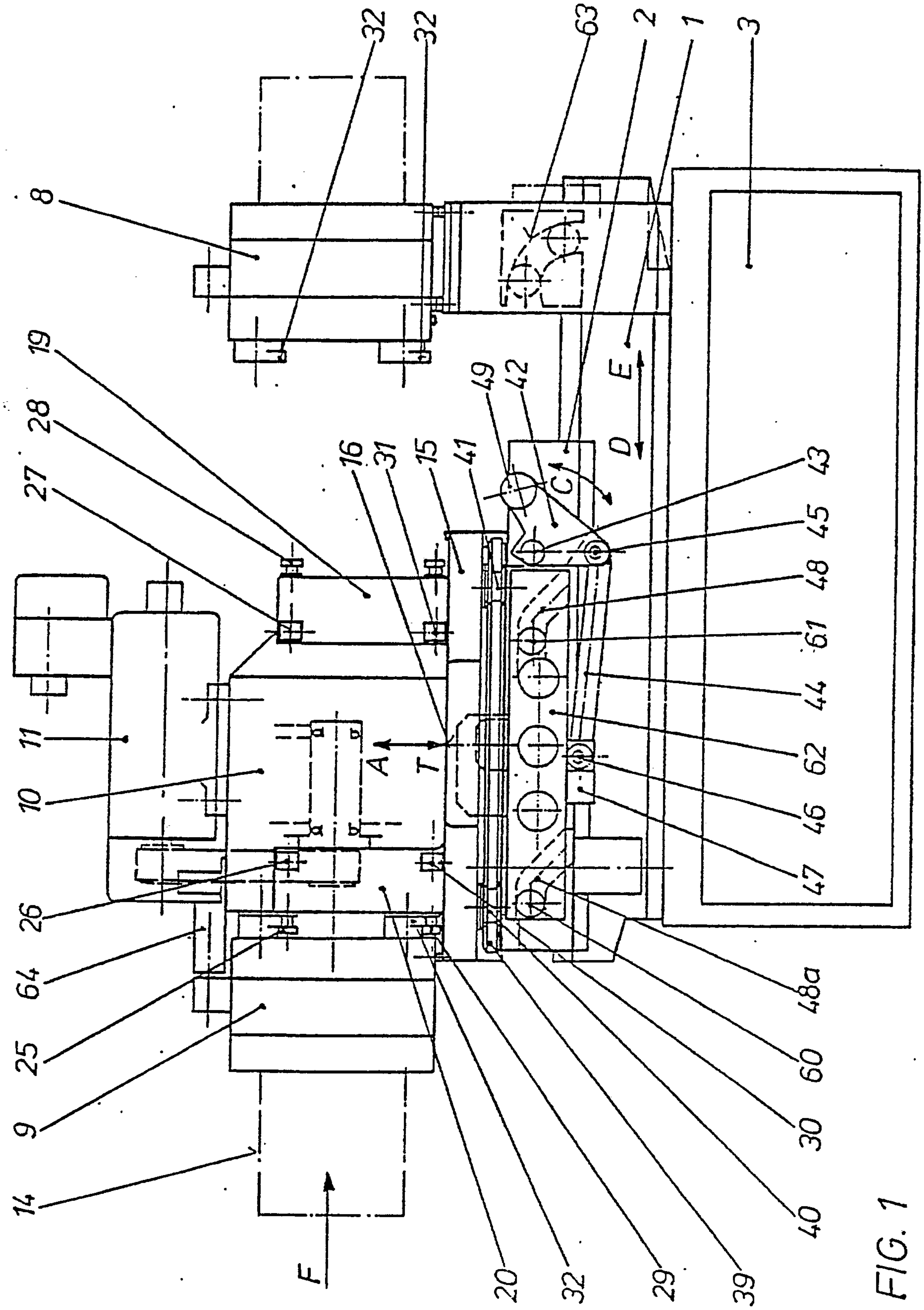
1
2
3
8
9
10
11
14
15
16
19
20
25
26
27
28
29
30
31
32
39
40
41
42
43
44
45
46
47
48
48a
49
60
61
62
63
64
A
C
D
E
F
T

FIG. 1

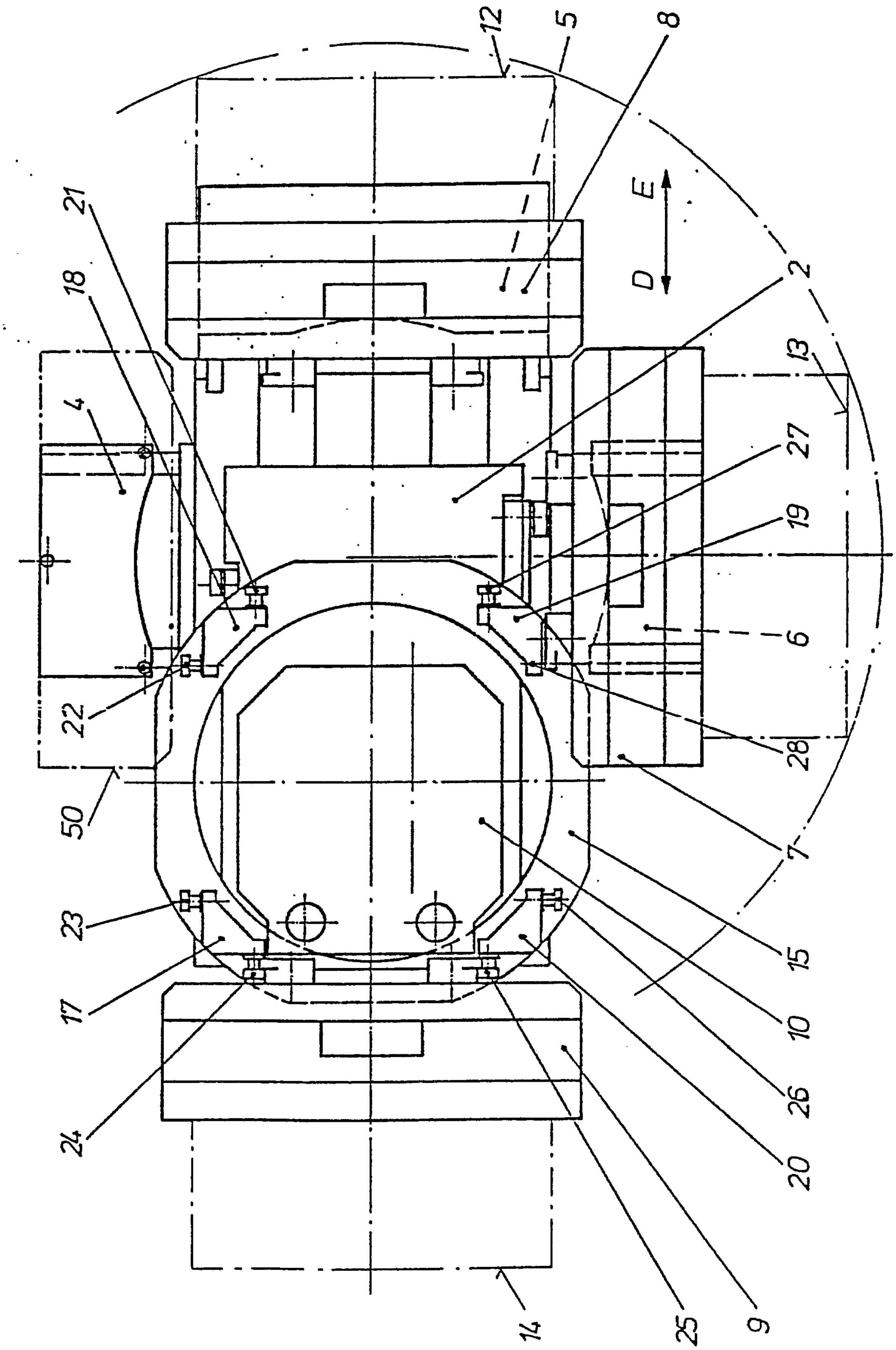


FIG. 2

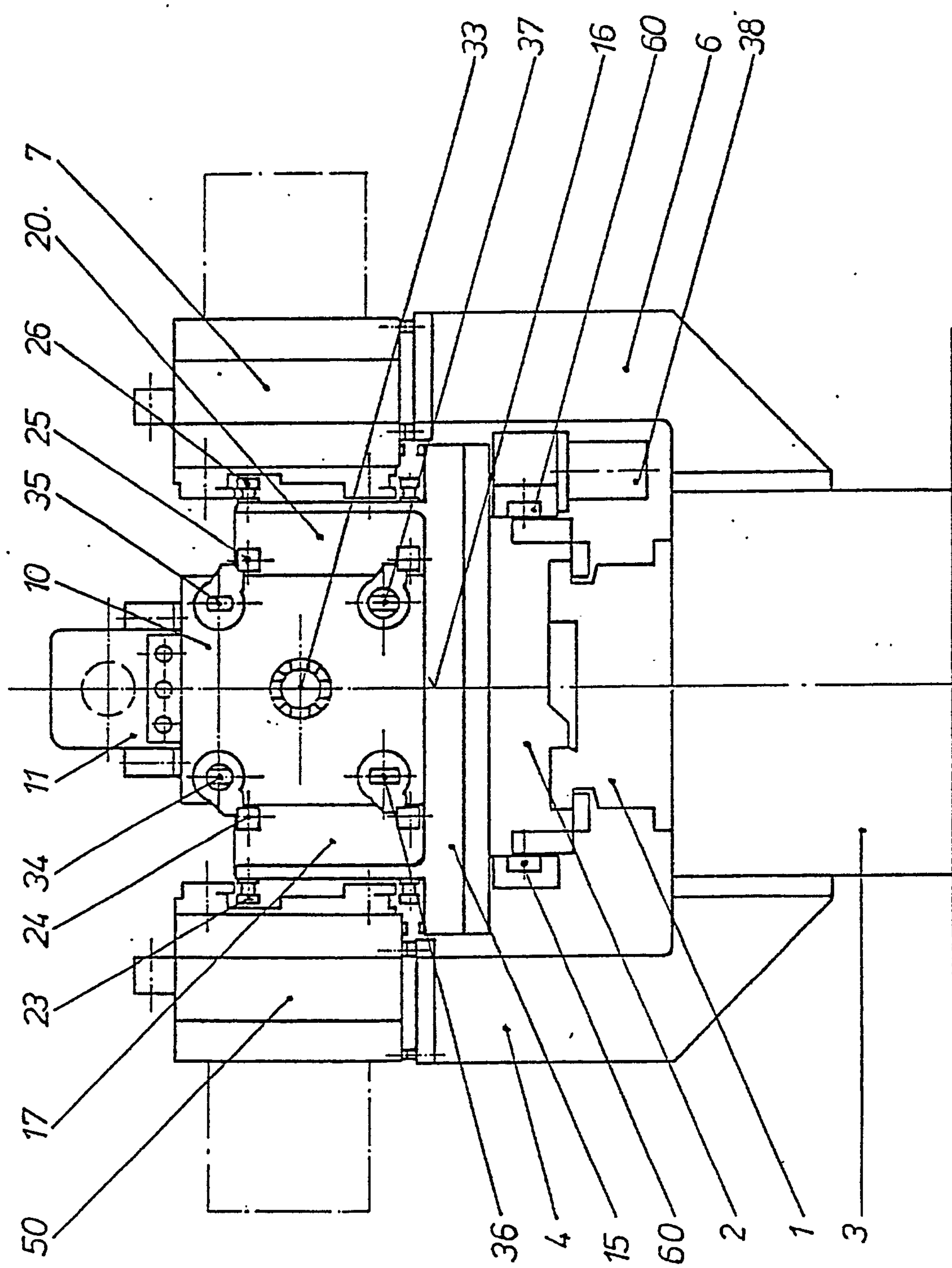


FIG. 3

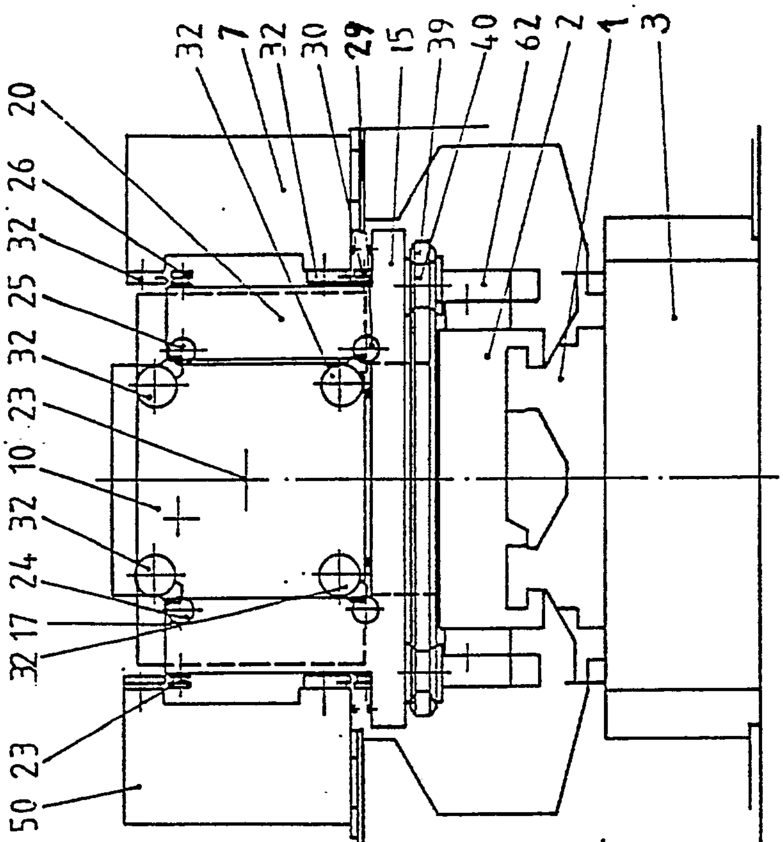

Fig. 6

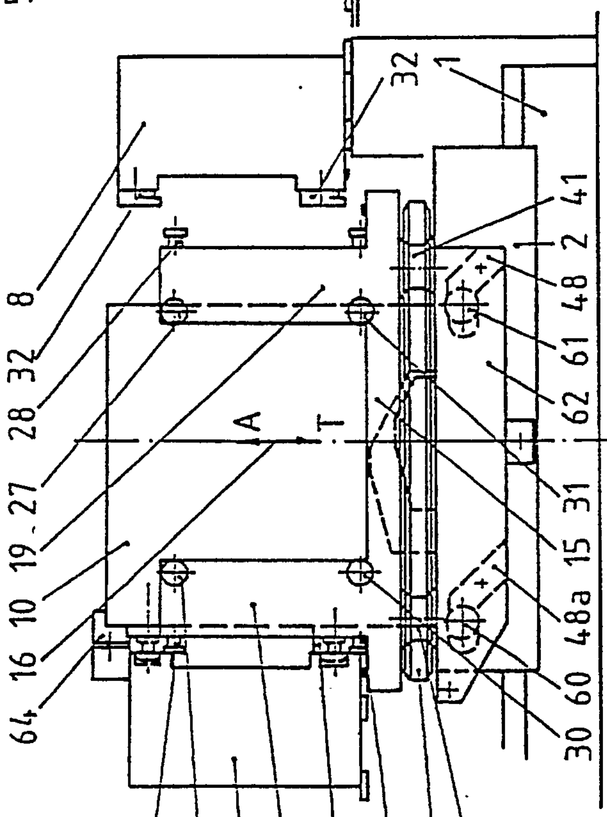

Fig. 4

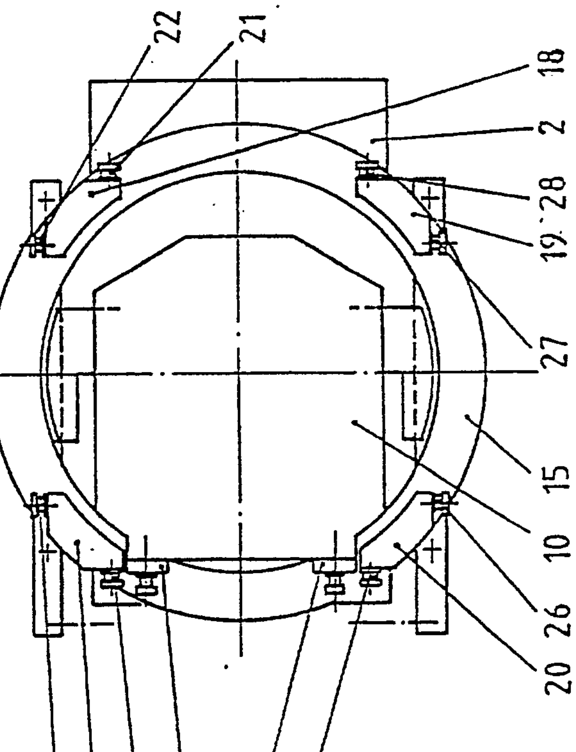

Fig. 5

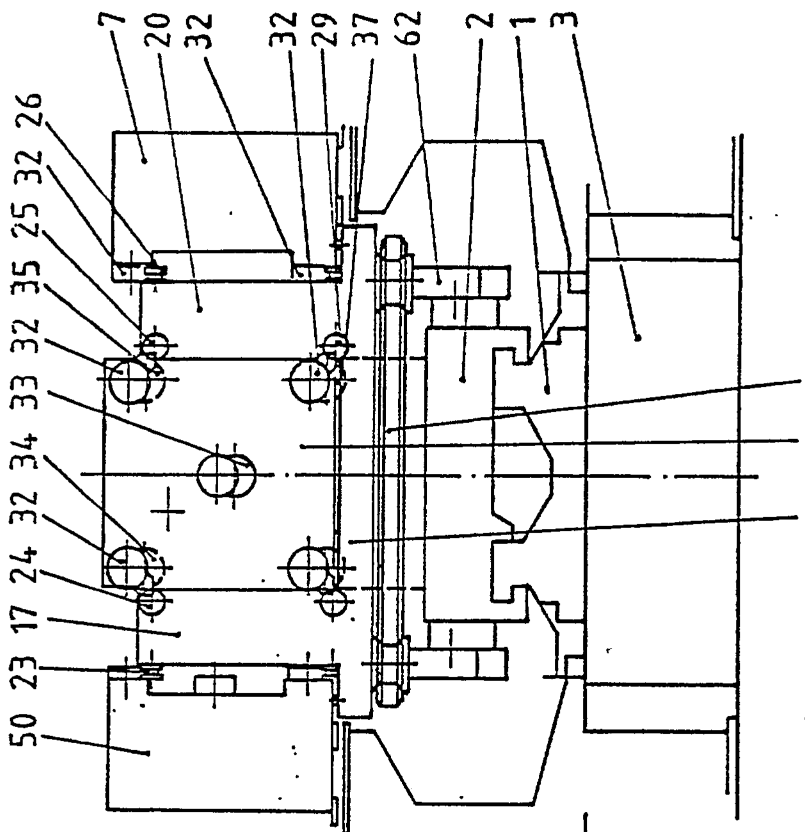


Fig. 9

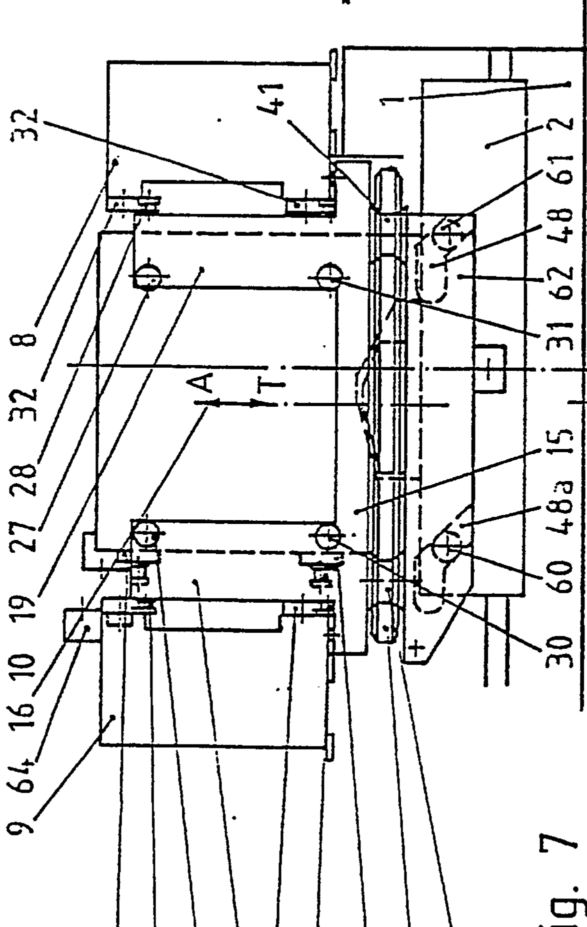


Fig. 7

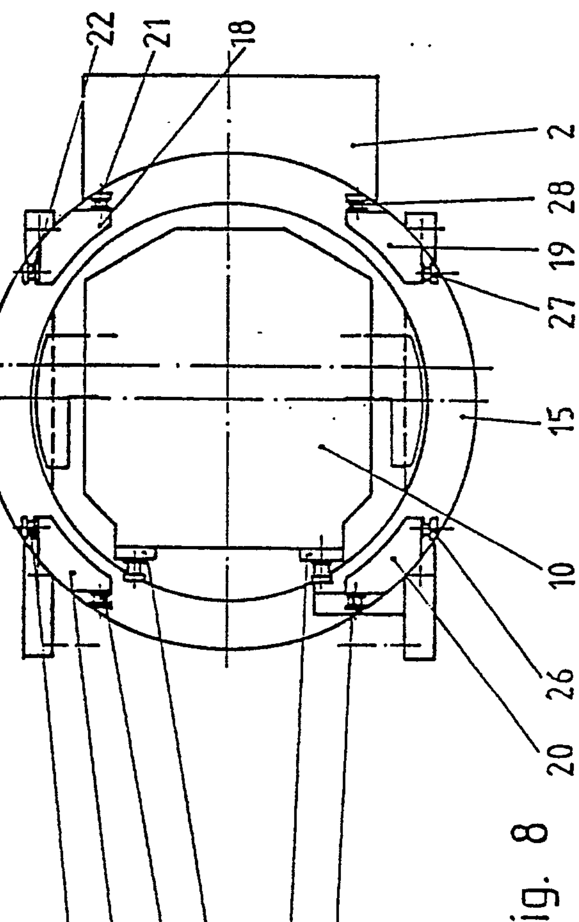


Fig. 8

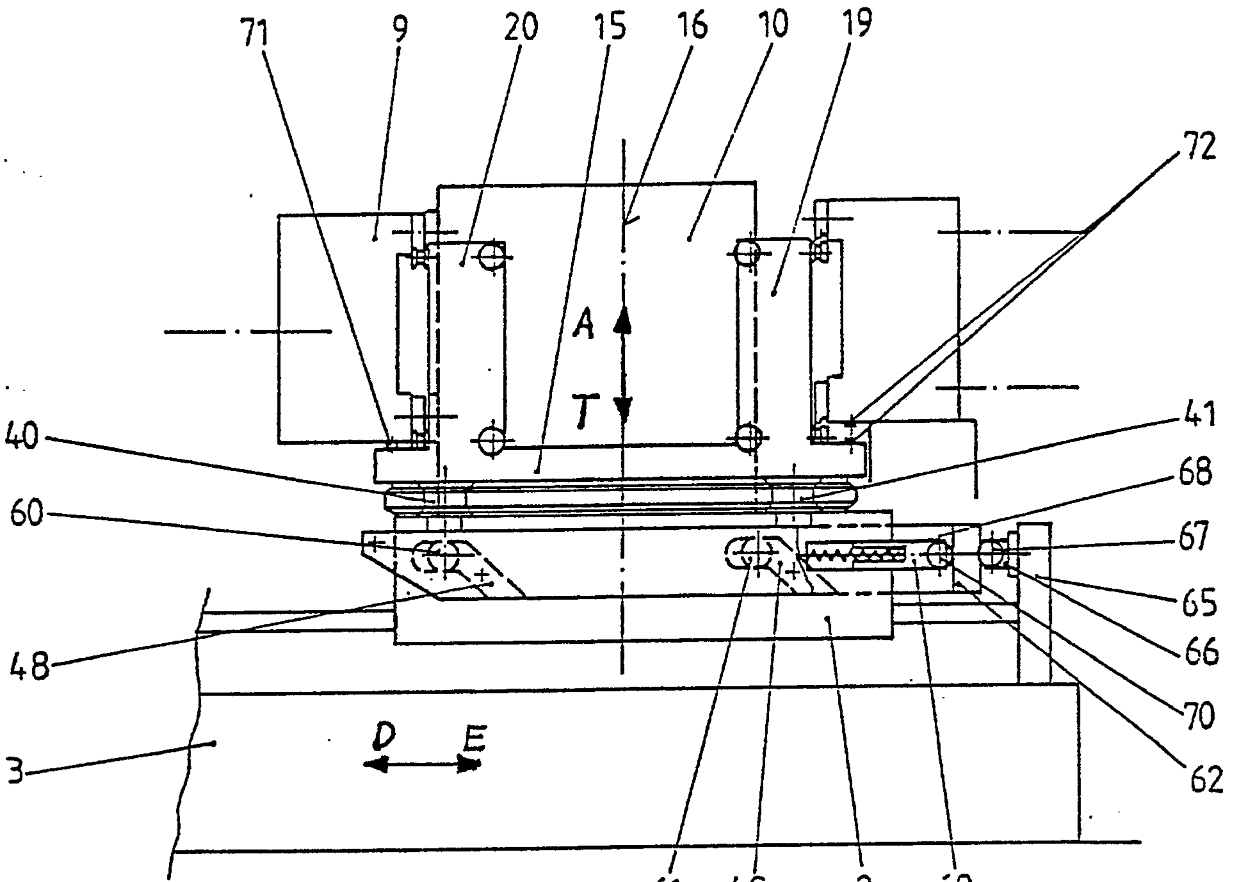
71
9
20
15
16
10
19
72
A
T
41
40
68
60
67
65
48
66
70
3
D
E
62
61
48a
2
69

Fig. 10

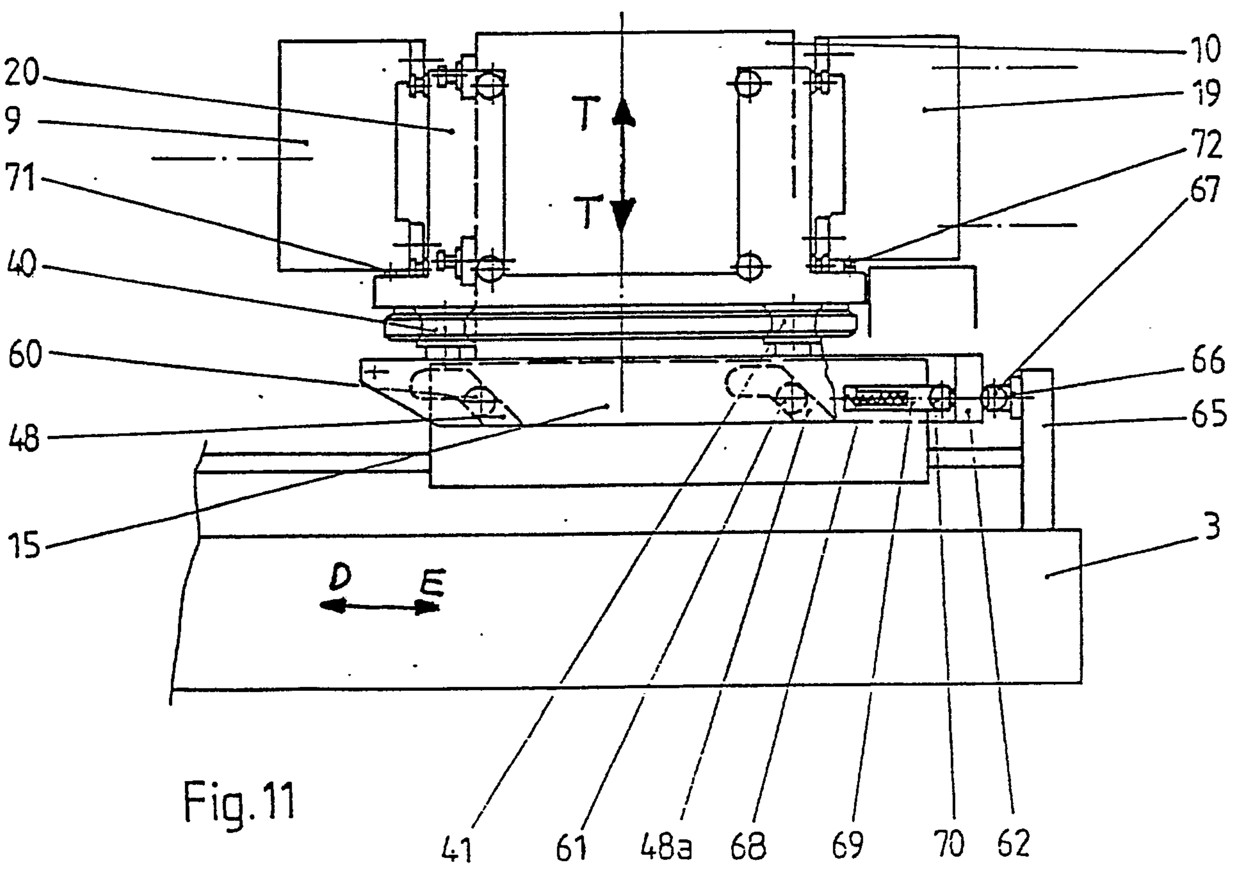
10
20
19
9
T
72
71
T
67
40
66
60
65
48
15
3
D
E
41
61
48a
68
69
70
62

Fig. 11

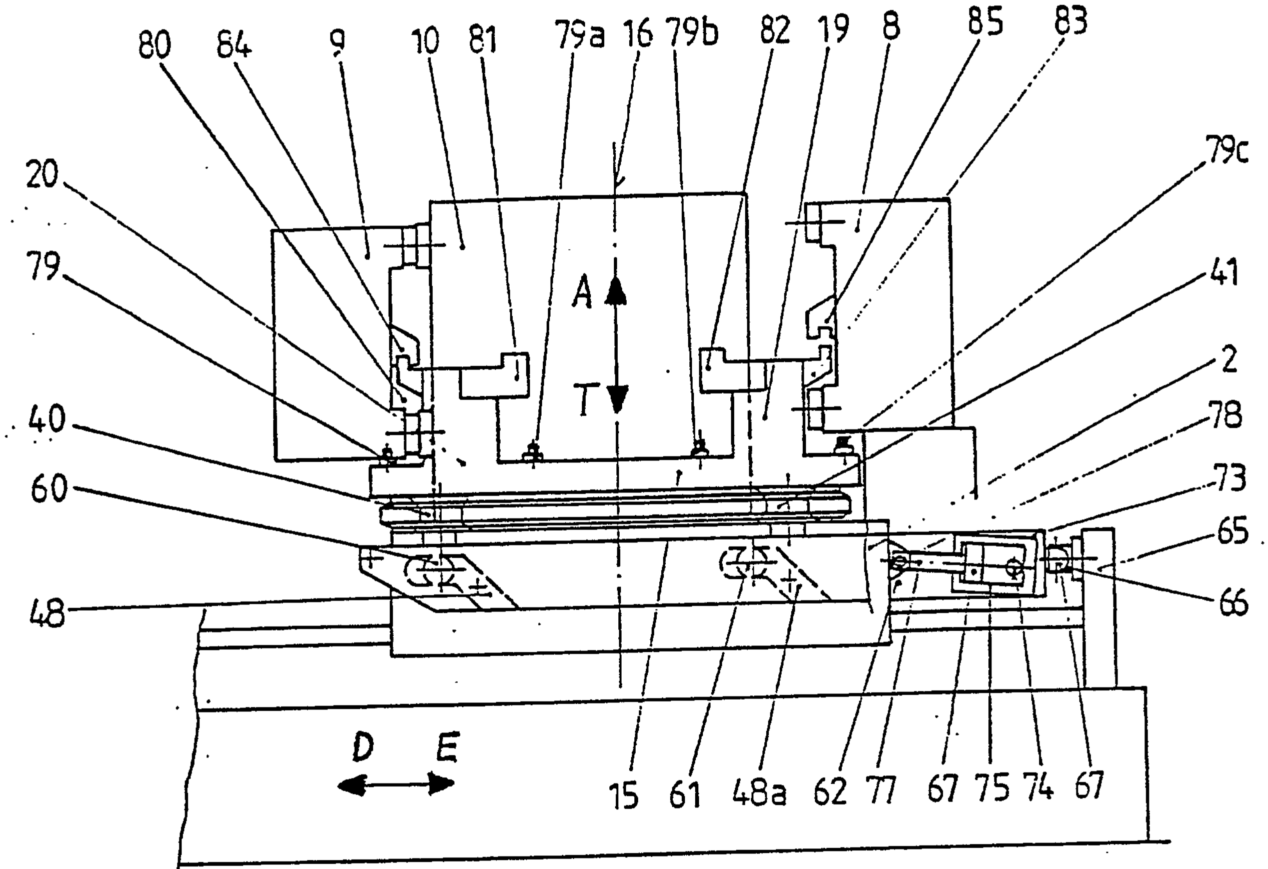
80 84 9 10 81 79a 16 79b 82 19 8 85 83
20
79
40
60
48
79c
41
2
78
73
65
66
A
T
D E
15 61 48a 62 77 67 75 74 67

Fig.12

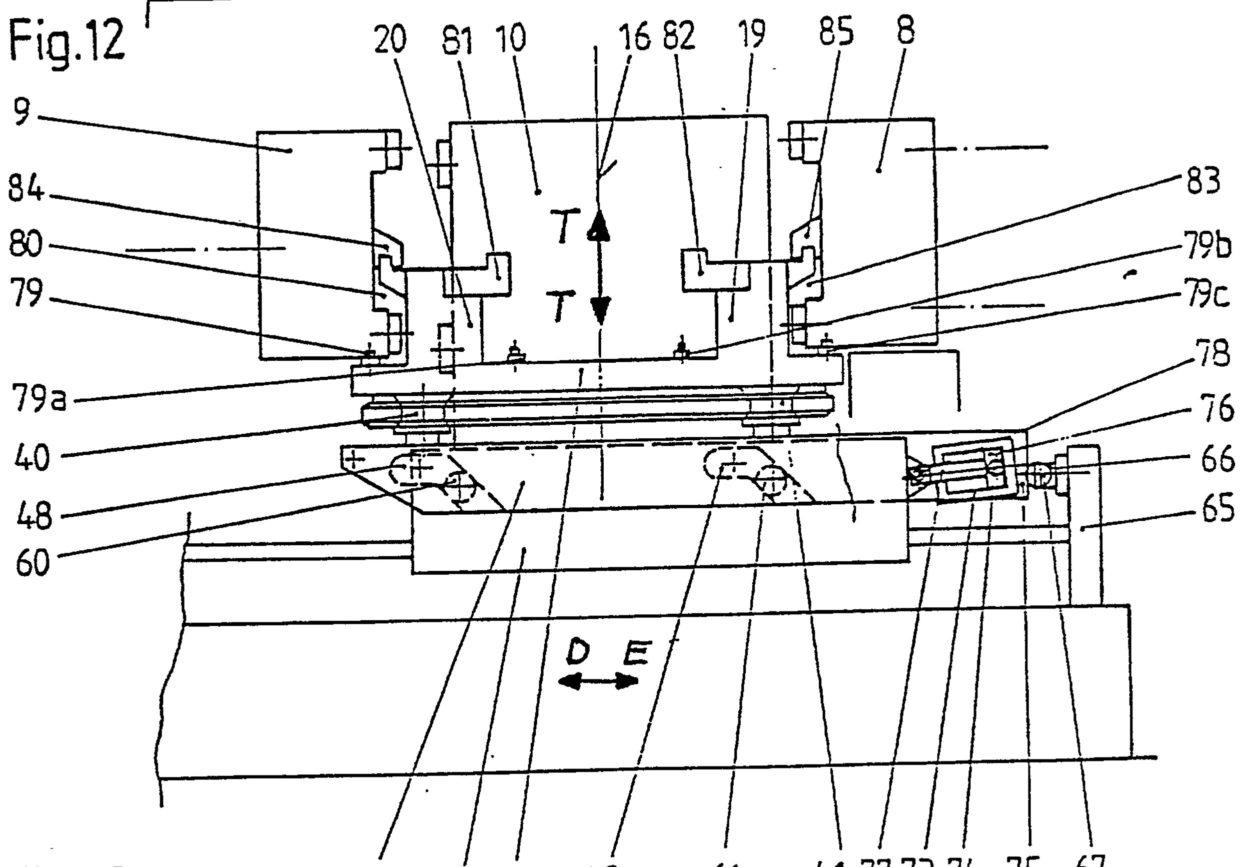
20 81 10 16 82 19 85 8
9
84
80
79
79a
40
48
60
83
79b
79c
78
76
66
65
T
T
D E
62 2 15 48a 61 41 77 73 74 75 67

Fig.13

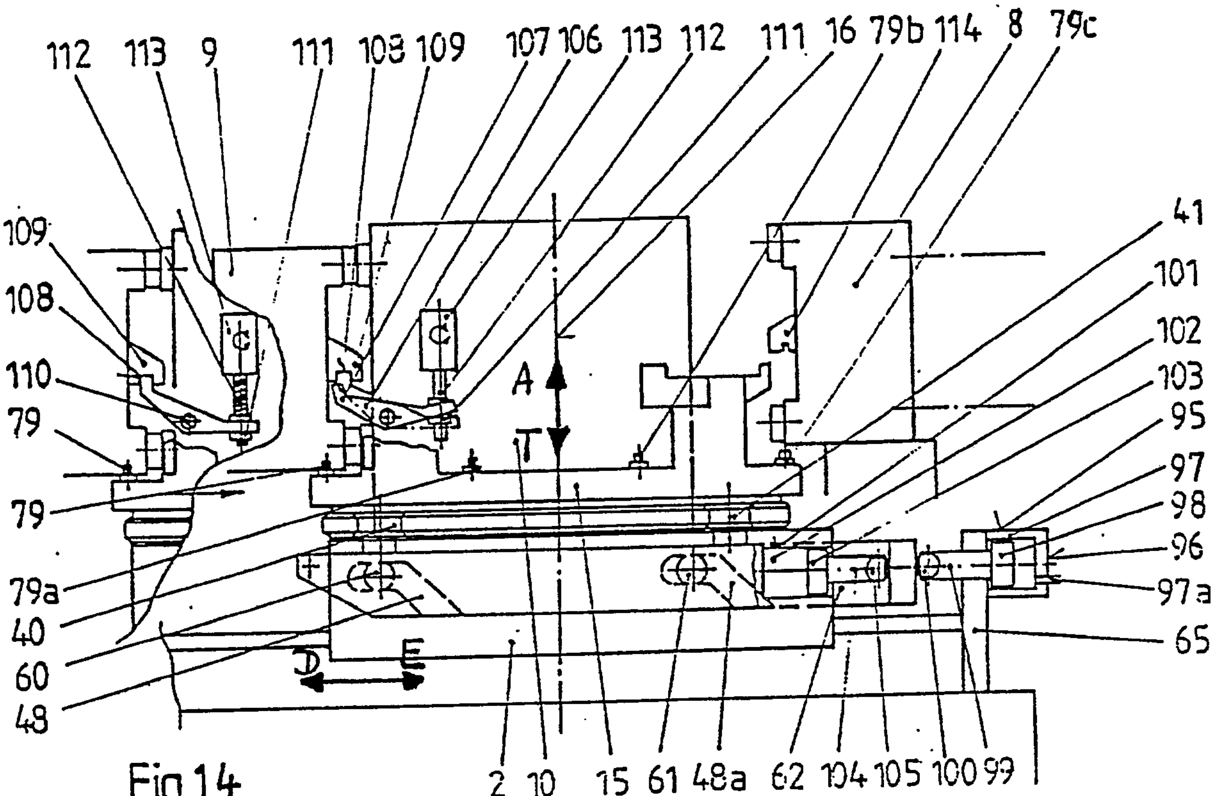
112 113 9 111 108 109 107 106 113 112 111 16 79b 114 8 79c
109
108
110
79
79
79a
40
60
48
41
101
102
103
95
97
98
96
97a
65
A
T
D
E
2 10 15 61 48a 62 104 105 100 99

Fig.14

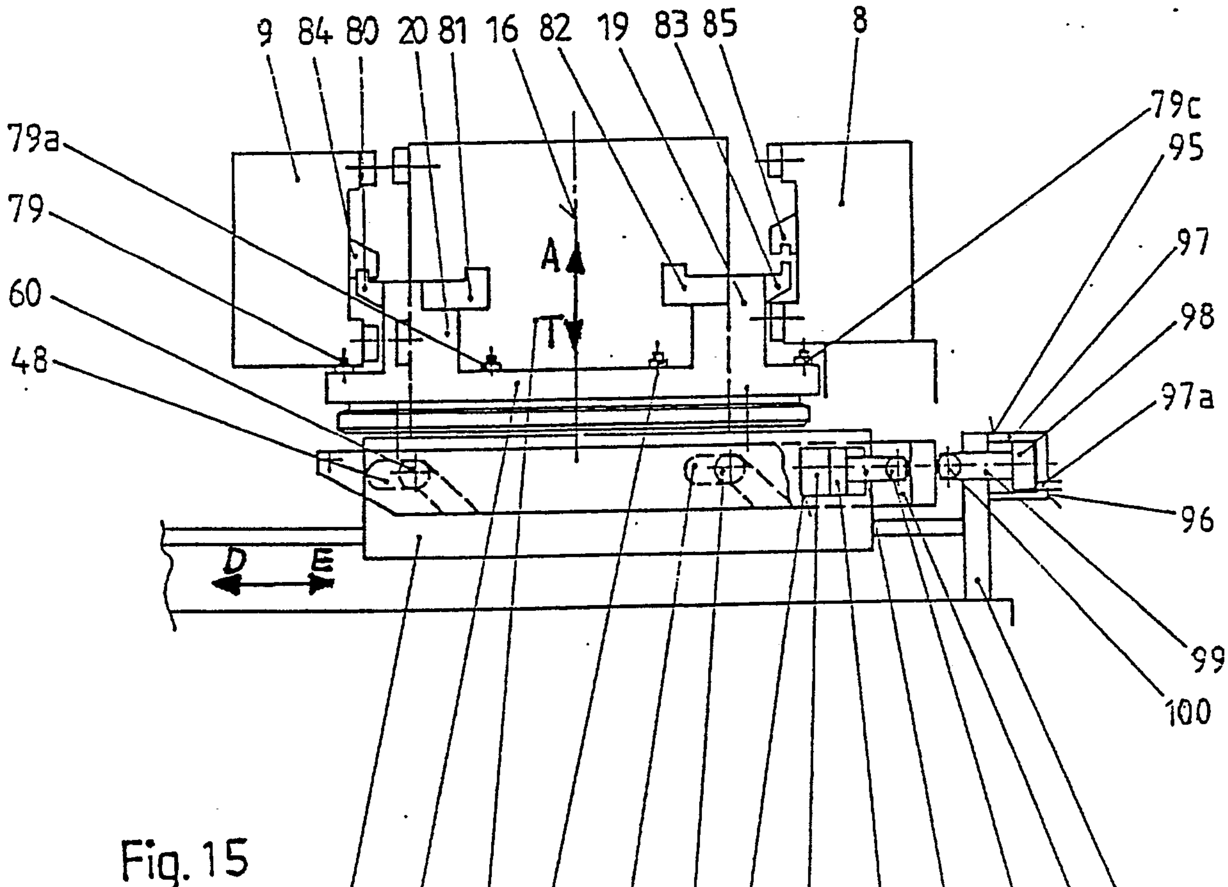
9 84 80 20 81 16 82 19 83 85 8
79a
79
60
48
79c
95
97
98
97a
96
99
100
A
T
D
E
2 15 10 79b 48a 61 101 102 103 104 105 62 65

Fig. 15

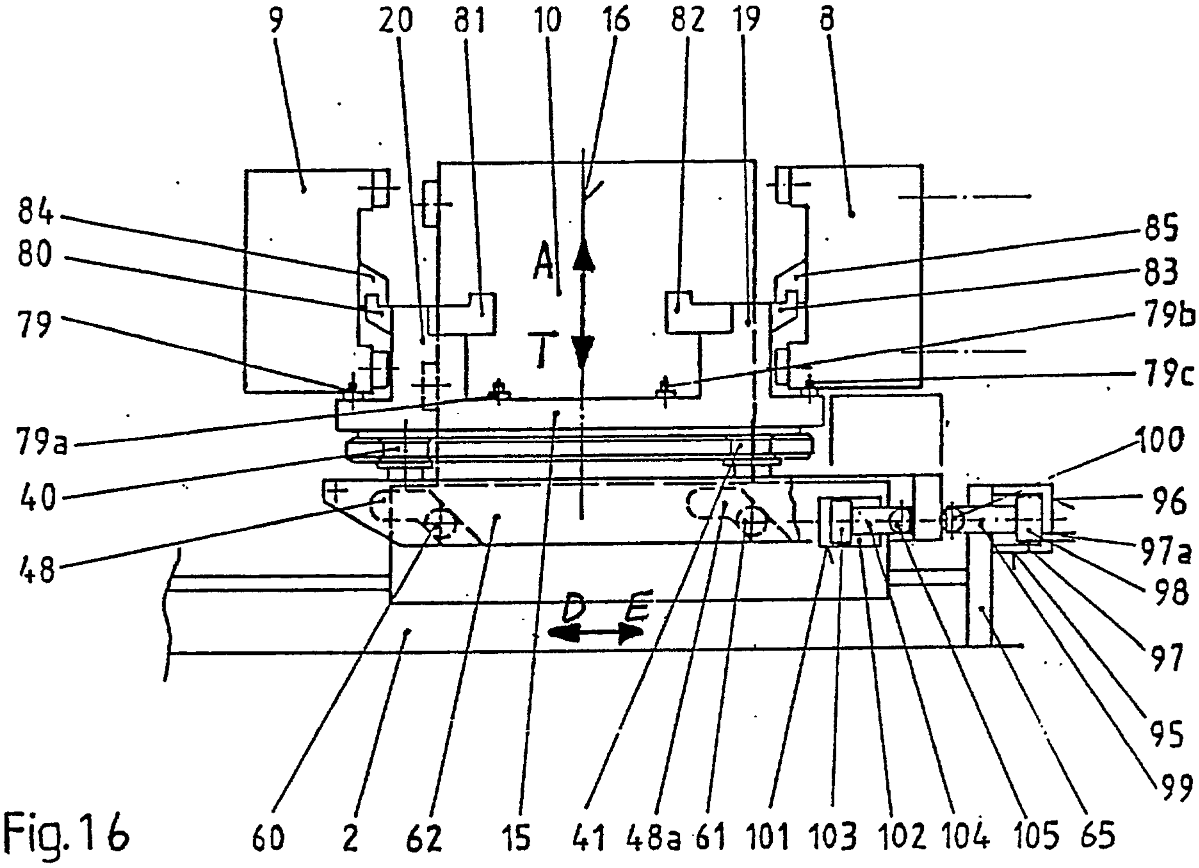
9
20
81
10
16
82
19
8
84
80
79
85
83
79b
79c
79a
40
48
100
96
97a
98
97
95
99
A
T
D
E
60
2
62
15
41
48a
61
101
103
102
104
105
65

Fig. 16

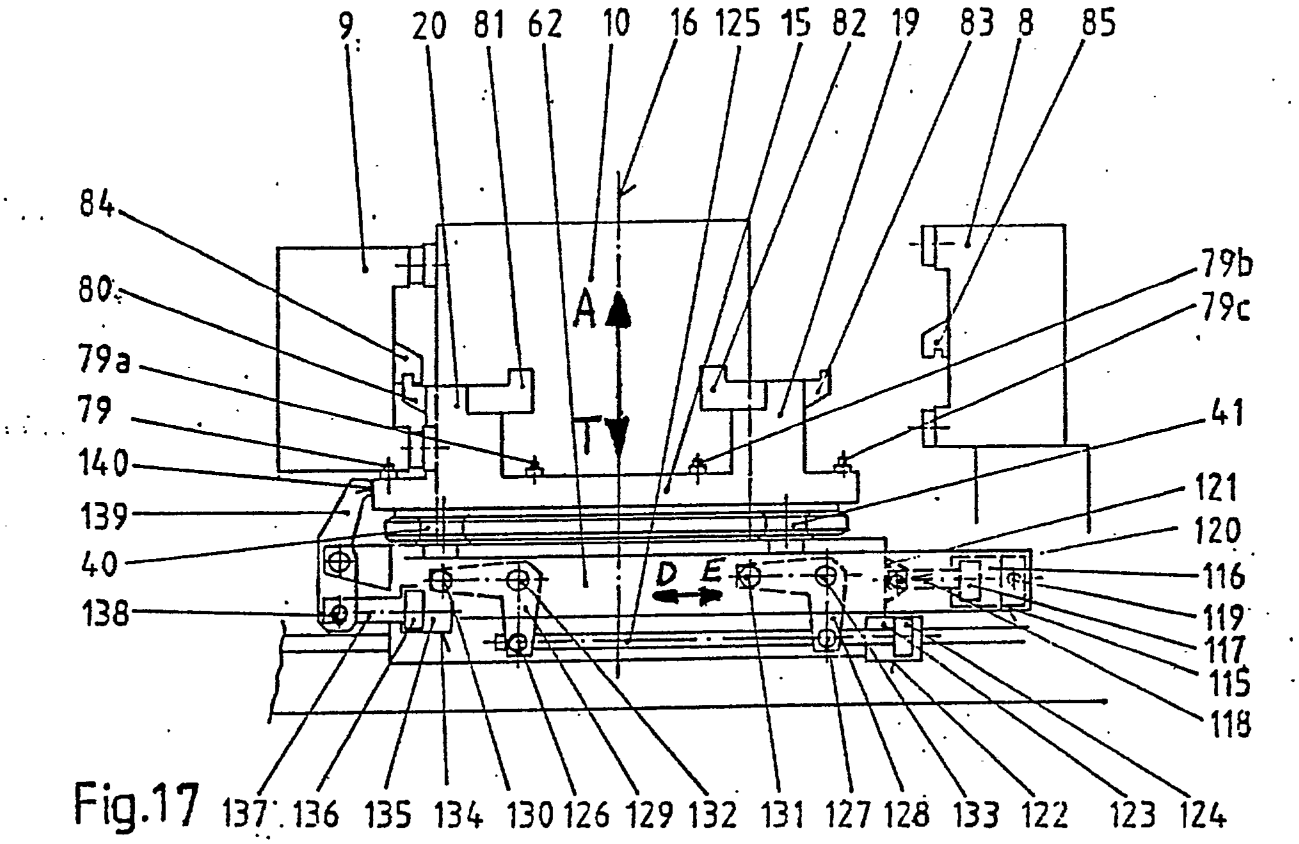
9 20 81 62 10 16 125 15 82 19 83 8 85
84
80
79a
79
140
139
40
138
A
T
D E
79b
79c
41
121
120
116
119
117
115
118
137 136 135 134 130 126 129 132 131 127 128 133 122 123 124

Fig.17

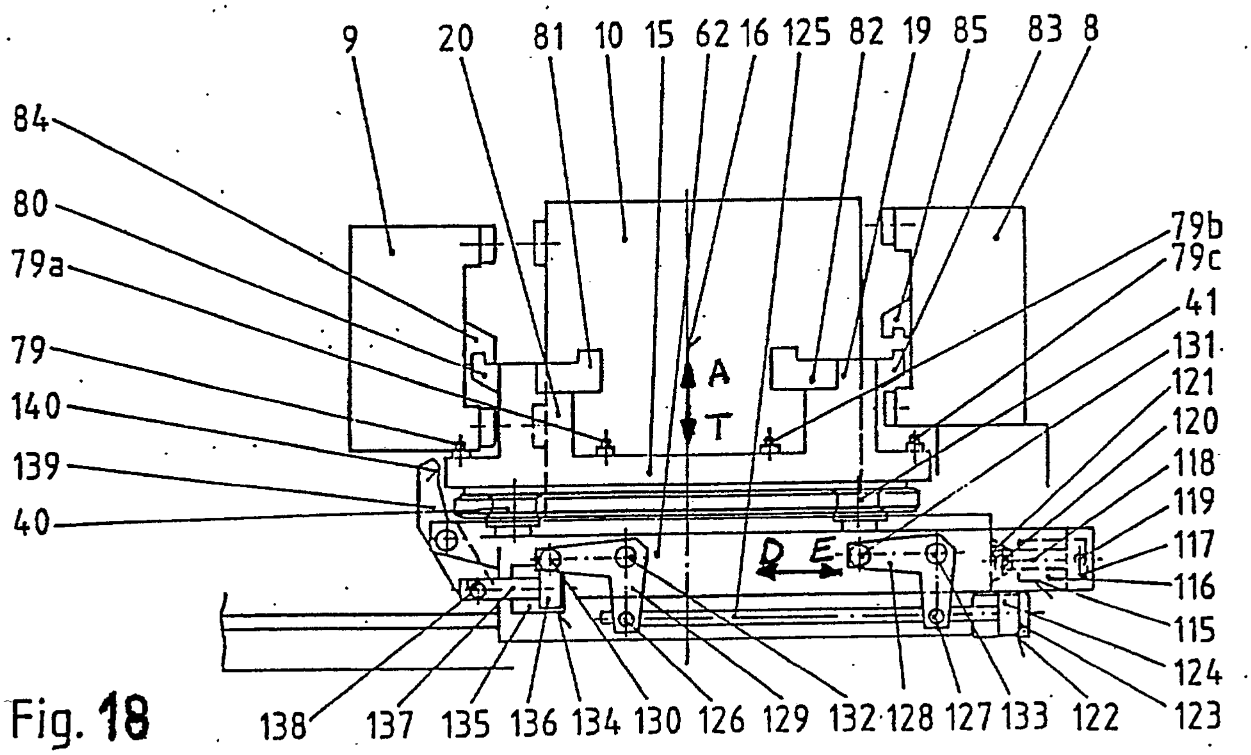
9 20 81 10 15 62 16 125 82 19 85 83 8
84
80
79a
79
140
139
40
A
T
D E
79b
79c
41
131
121
120
118
119
117
116
115
124
123
138 137 135 136 134 130 126 129 132 128 127 133 122

Fig. 18

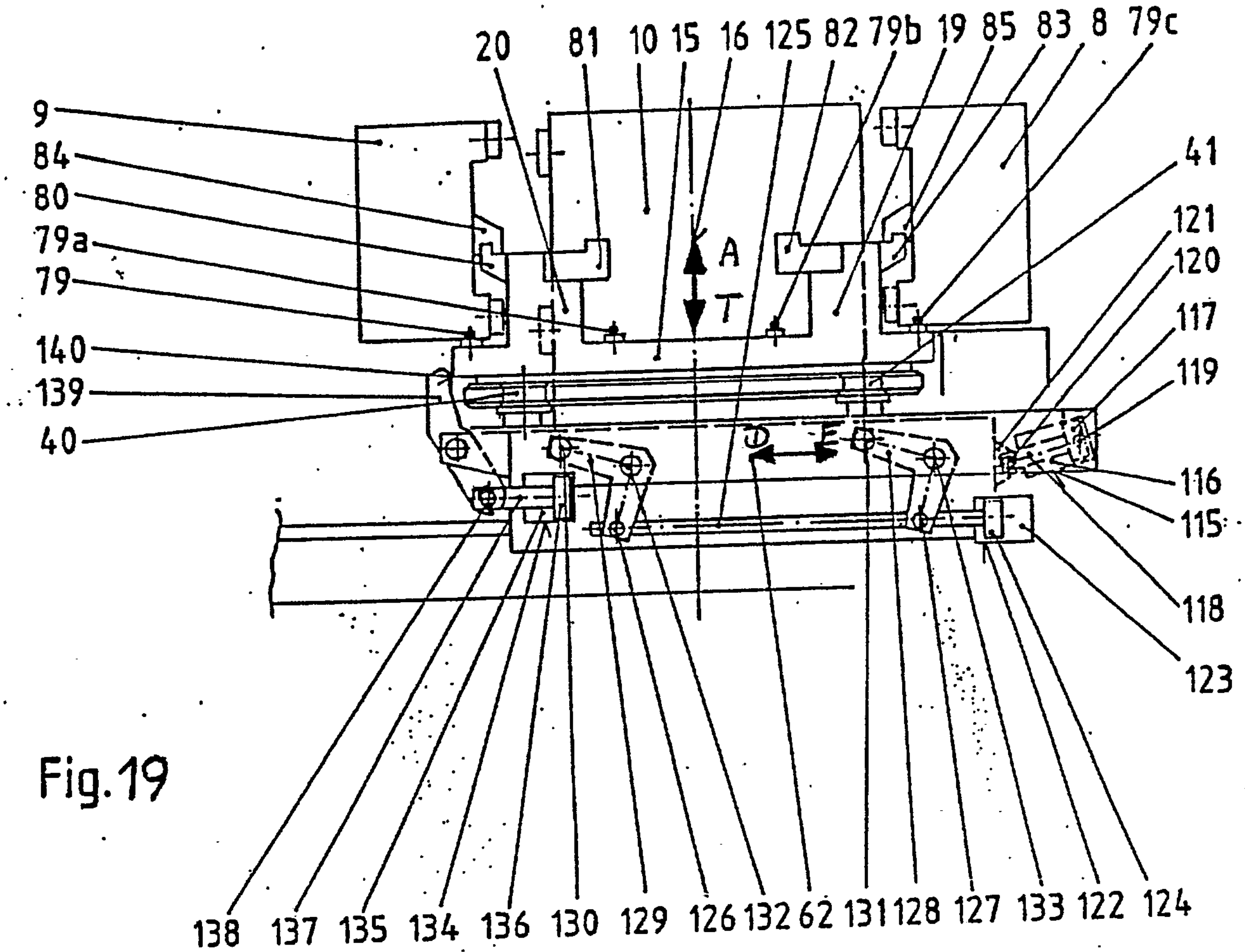
20
81
10
15
16
125
82
79b
19
85
83
8
79c
9
84
80
79a
79
140
139
40
41
121
120
117
119
116
115
118
123
A
T
D
E
138
137
135
134
136
130
129
126
132
62
131
128
127
133
122
124

Fig.19

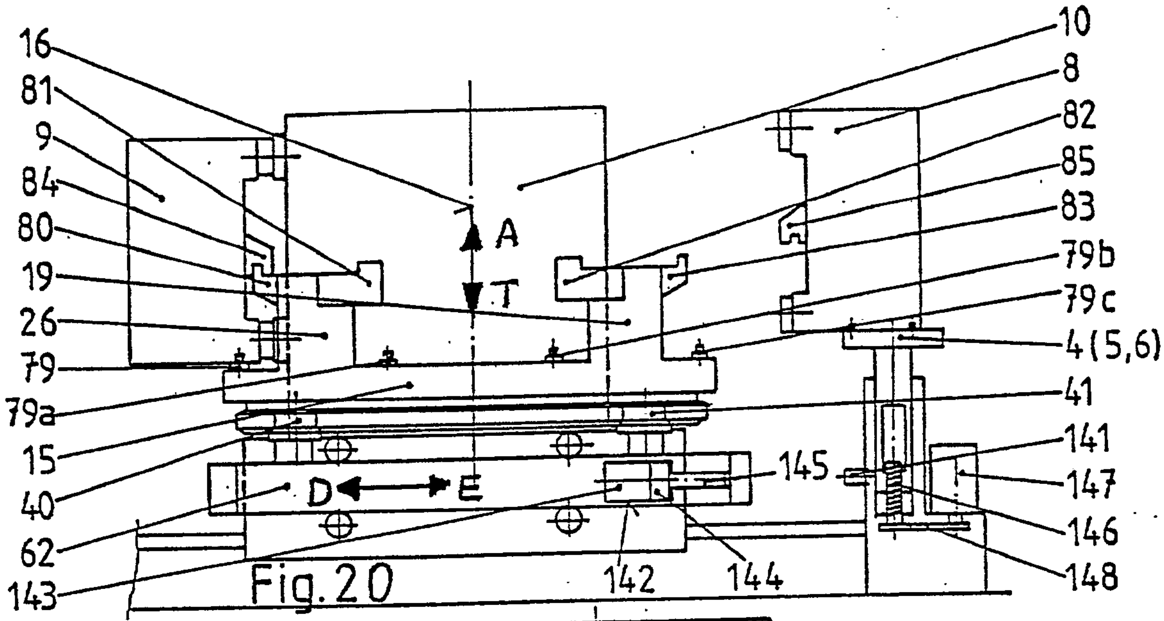


Fig.20

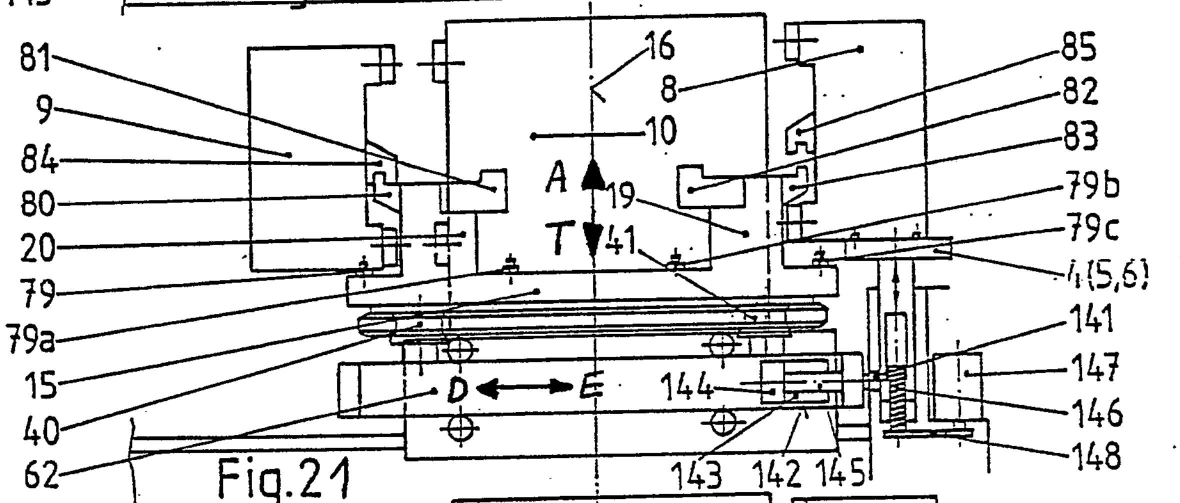


Fig.21

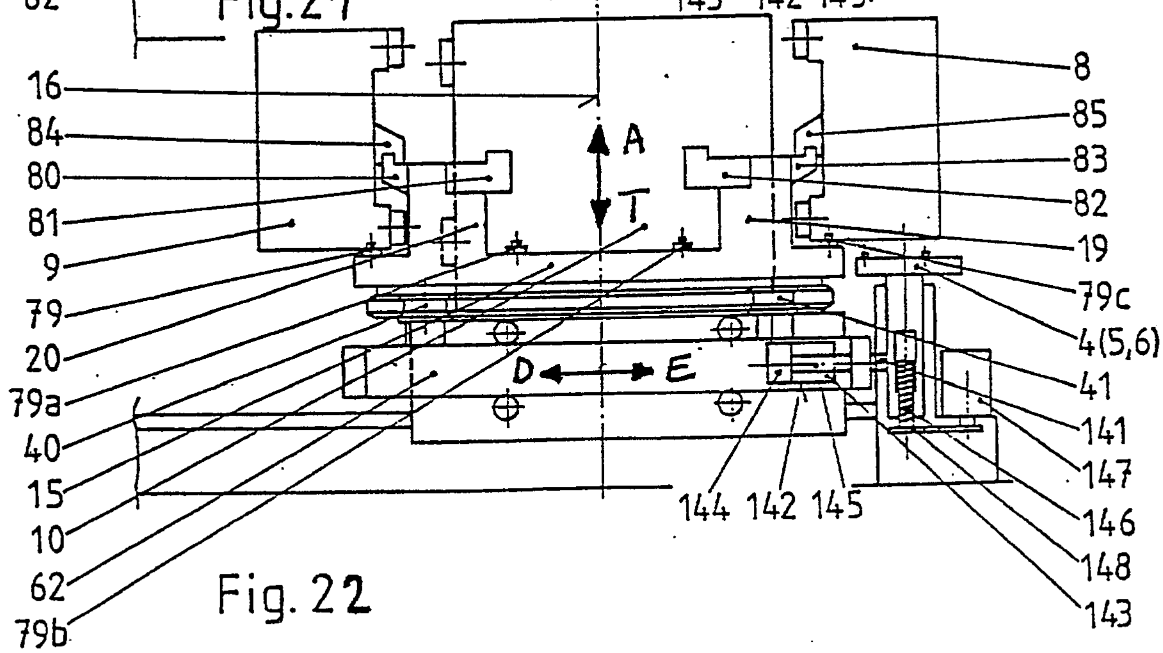


Fig. 22

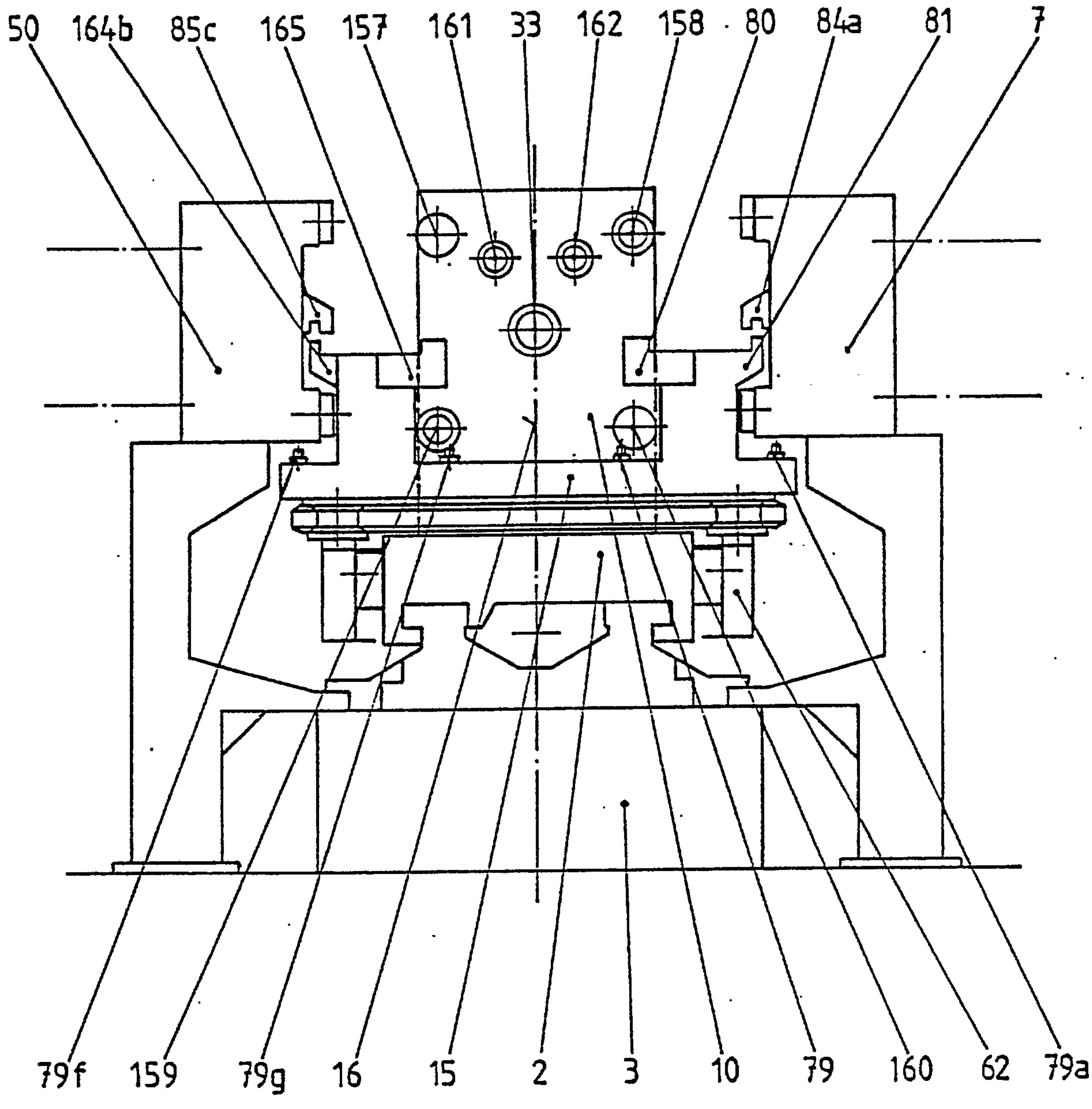
50
164b
85c
165
157
161
33
162
158
80
84a
81
7
79f
159
79g
16
15
2
3
10
79
160
62
79a

FIG. 23

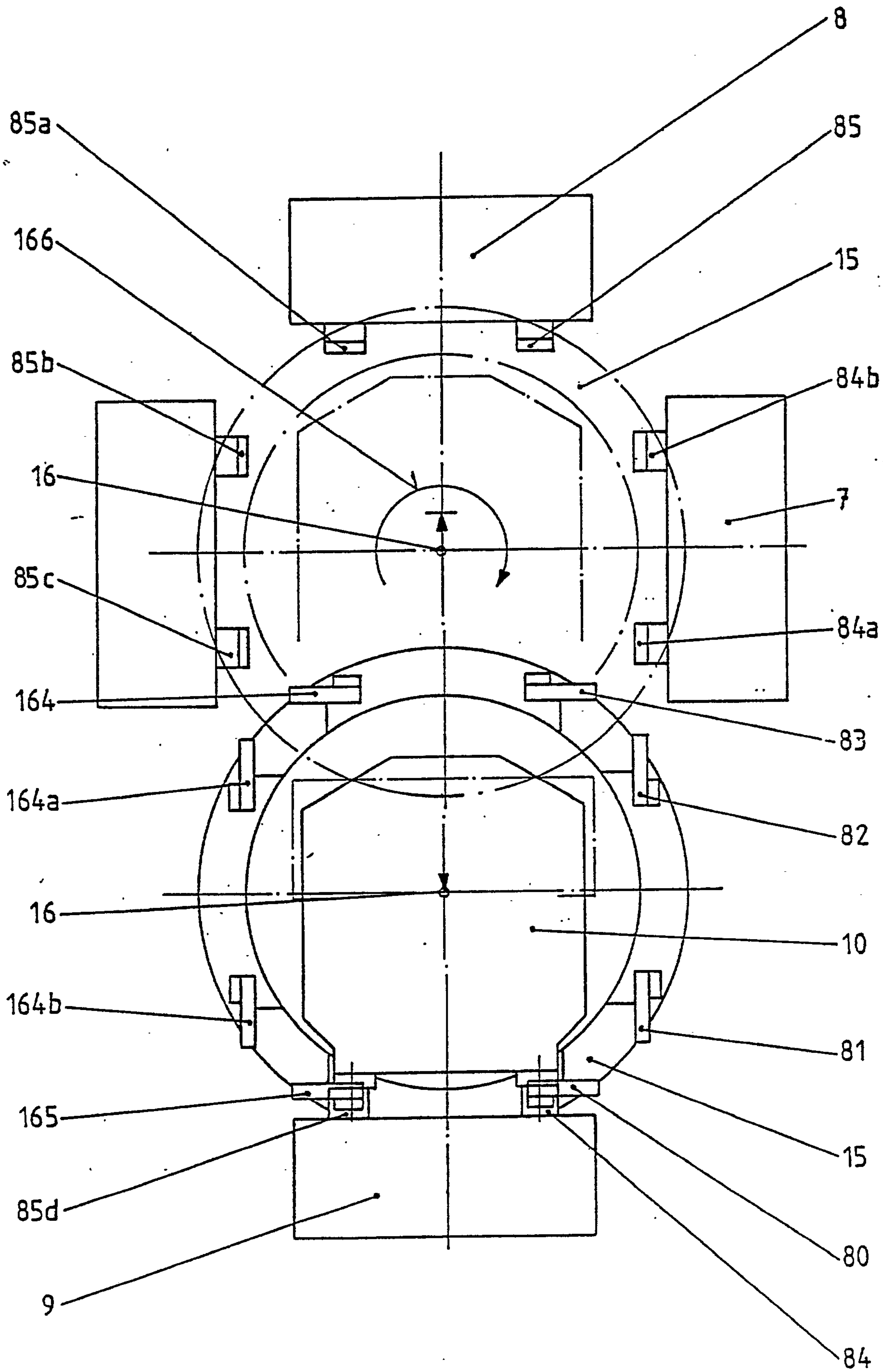
8
85a
85
166
15
85b
84b
16
7
85c
84a
164
83
164a
82
16
10
164b
81
165
15
85d
80
9
84

Fig. 24

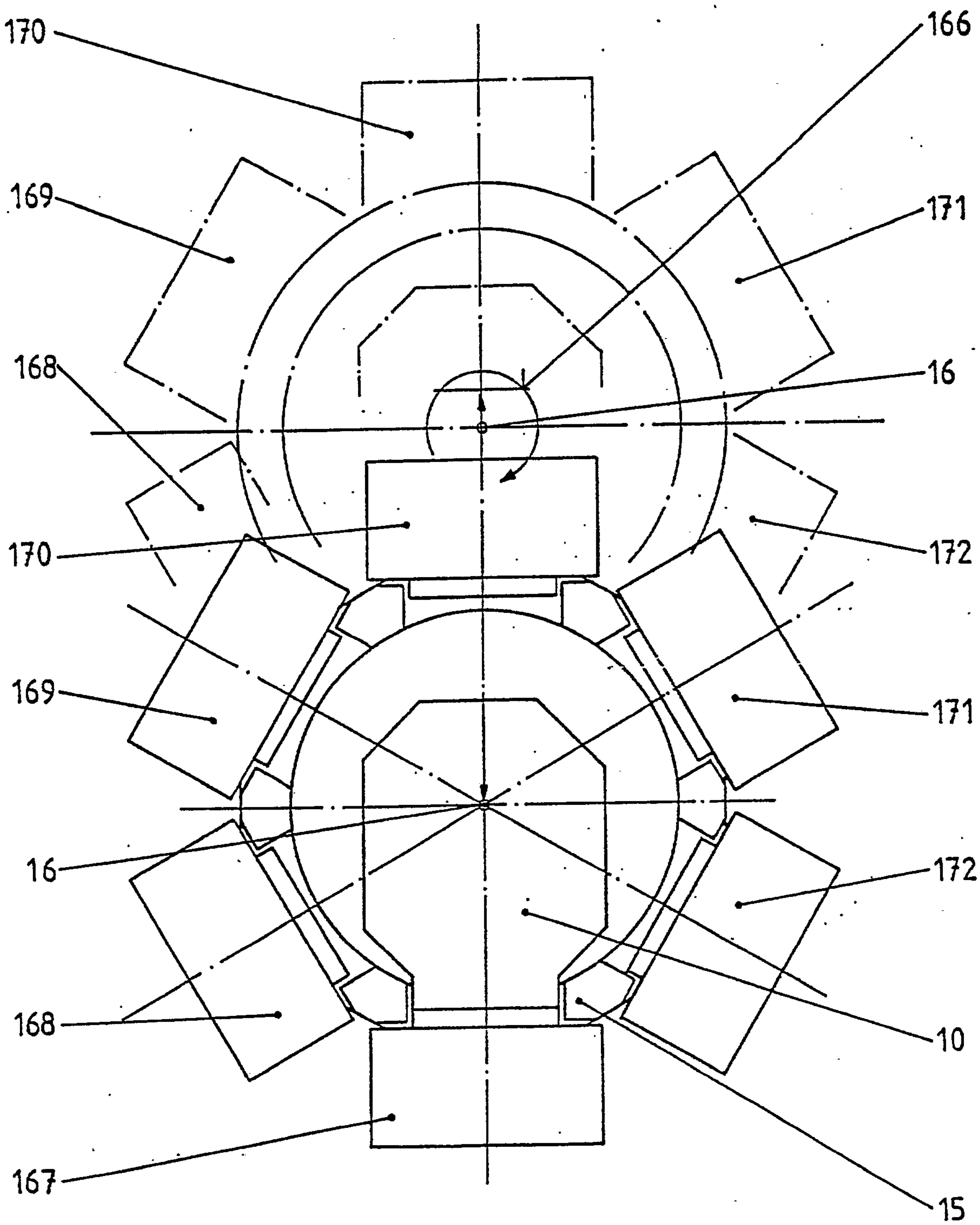


Fig. 25

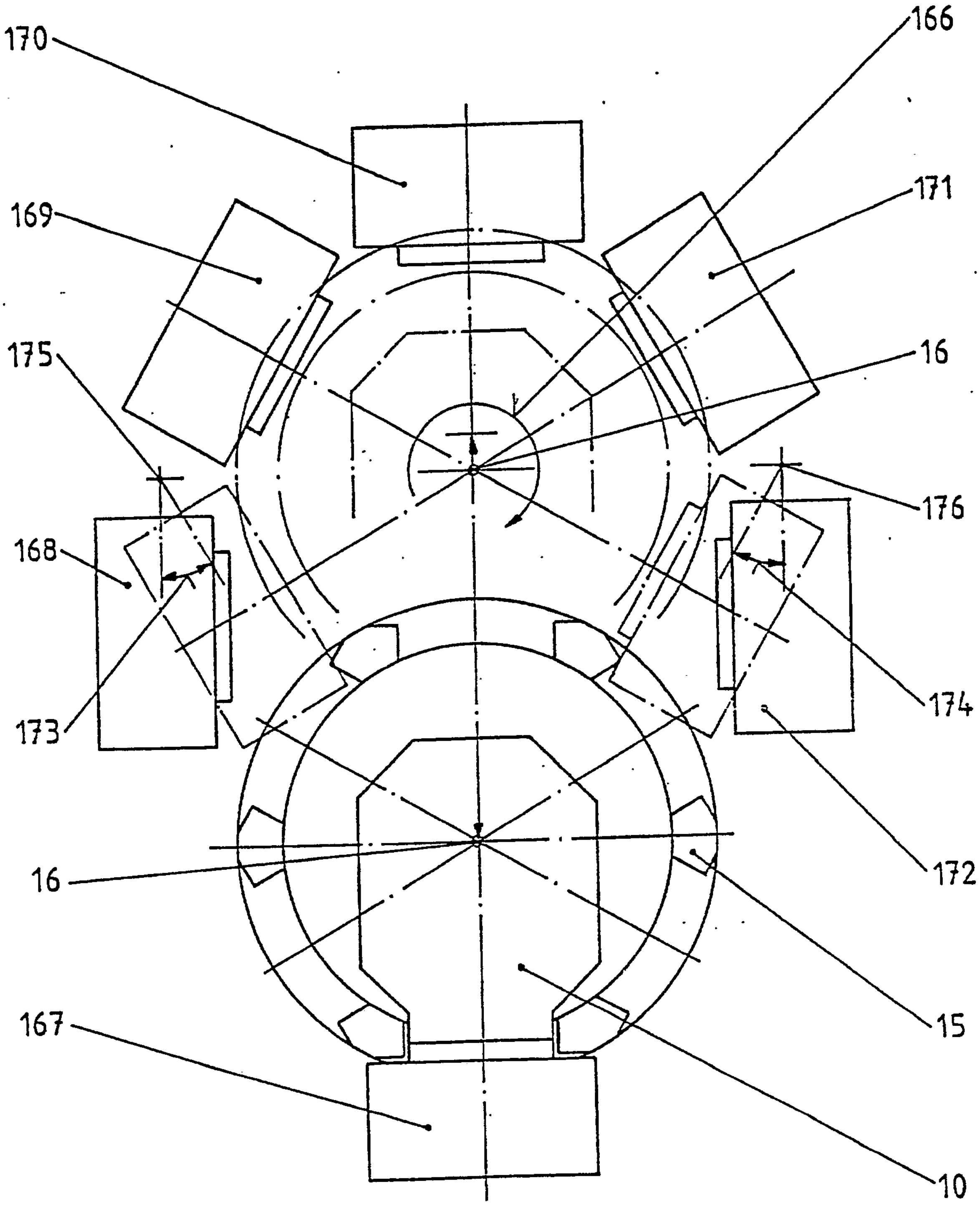


Fig. 26

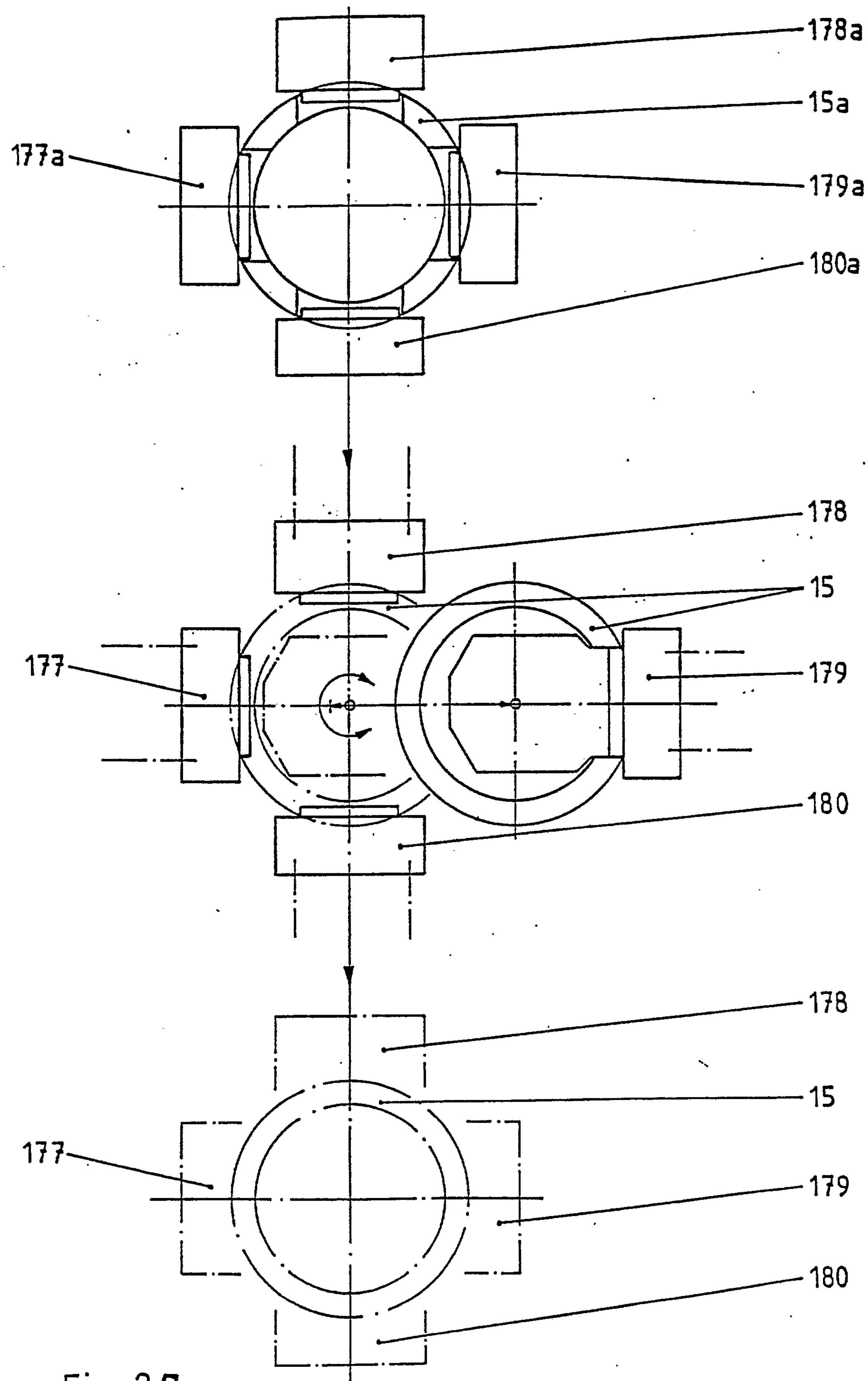


Fig. 27

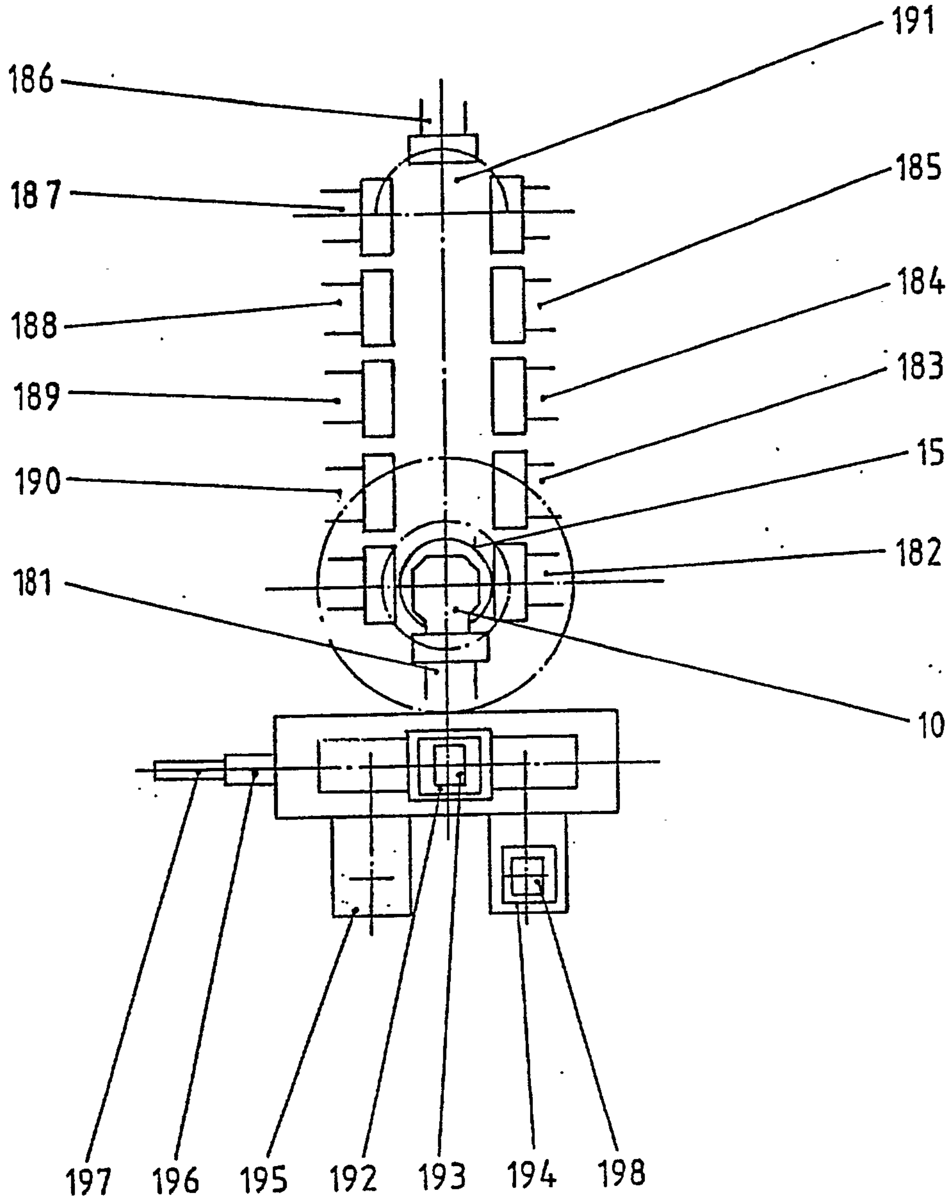
186
191
187
185
184
188
183
189
15
190
182
181
10
197
196
195
192
193
194
198

Fig. 28

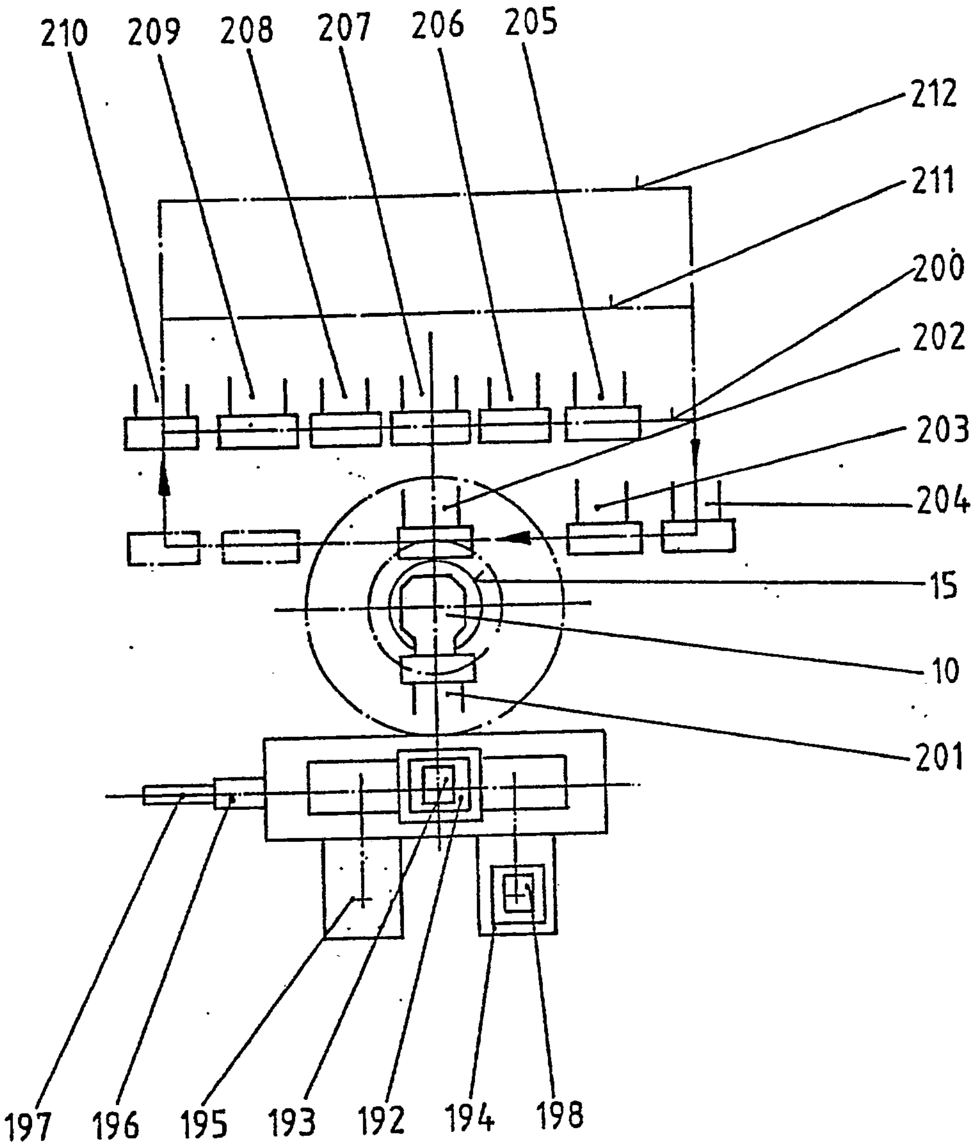
210
209
208
207
206
205
212
211
200
202
203
204
15
10
201
197
196
195
193
192
194
198

Fig. 29

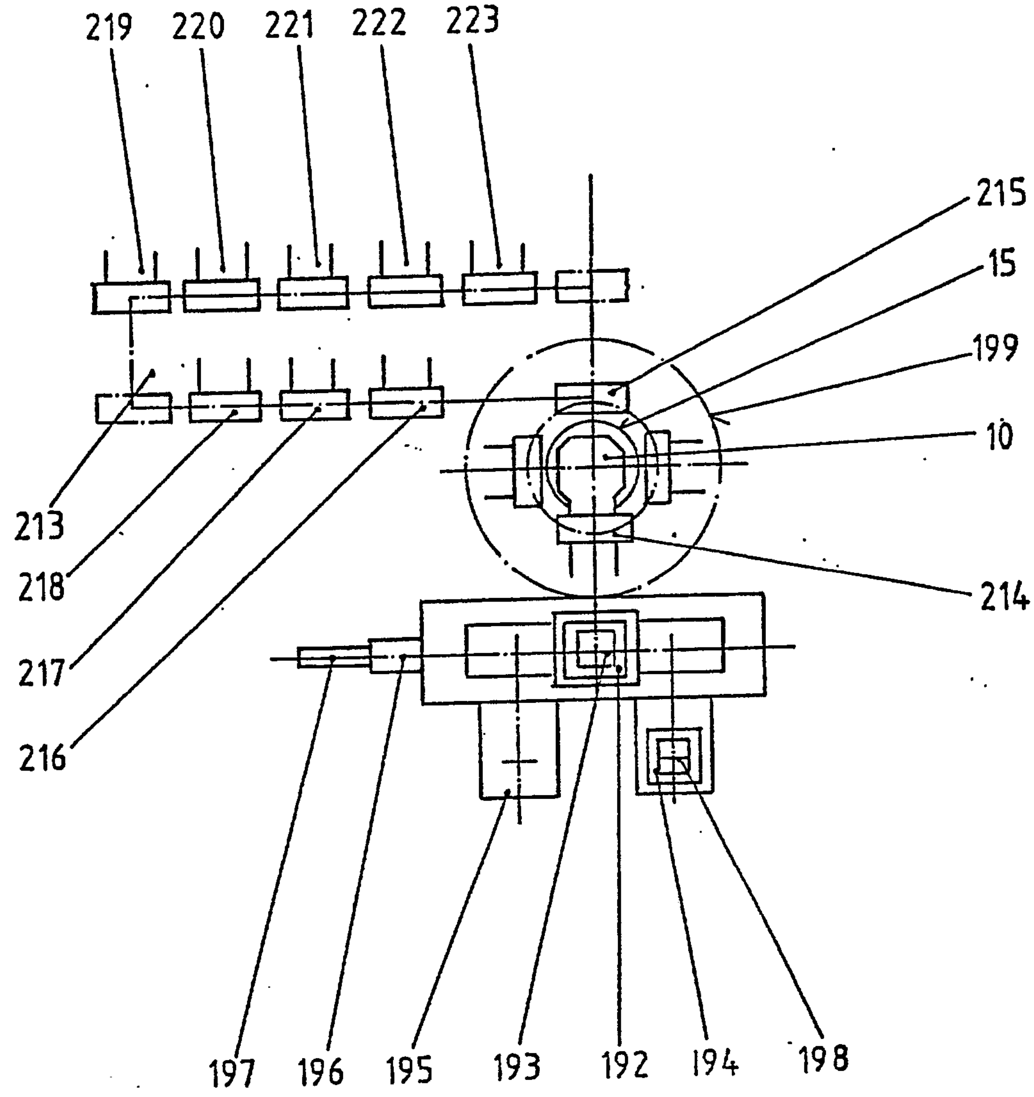
219
220
221
222
223
215
15
199
10
213
218
217
216
214
197
196
195
193
192
194
198

Fig. 30

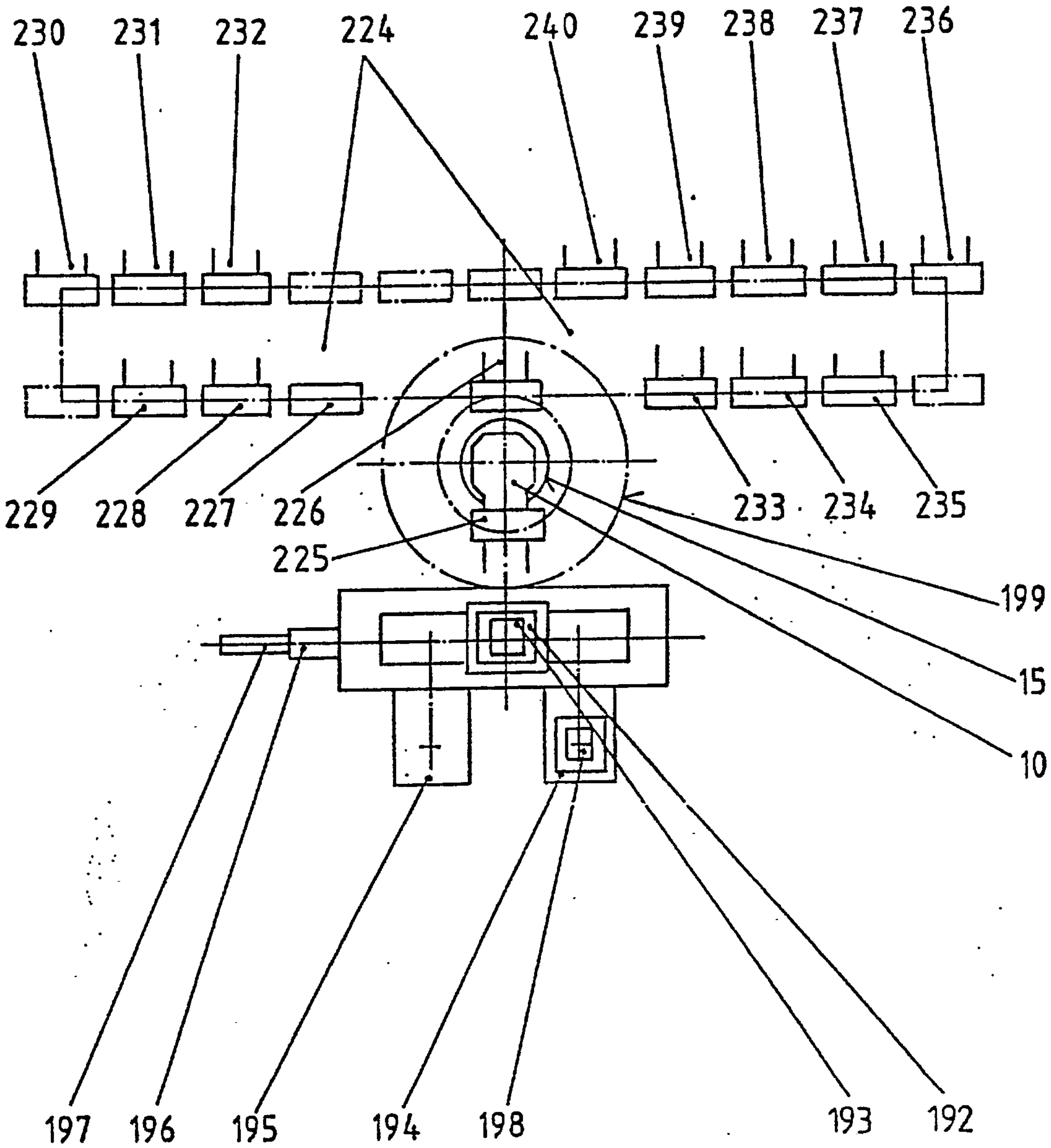
230
231
232
224
240
239
238
237
236
229
228
227
226
233
234
235
225
199
15
10
197
196
195
194
198
193
192

Fig. 31

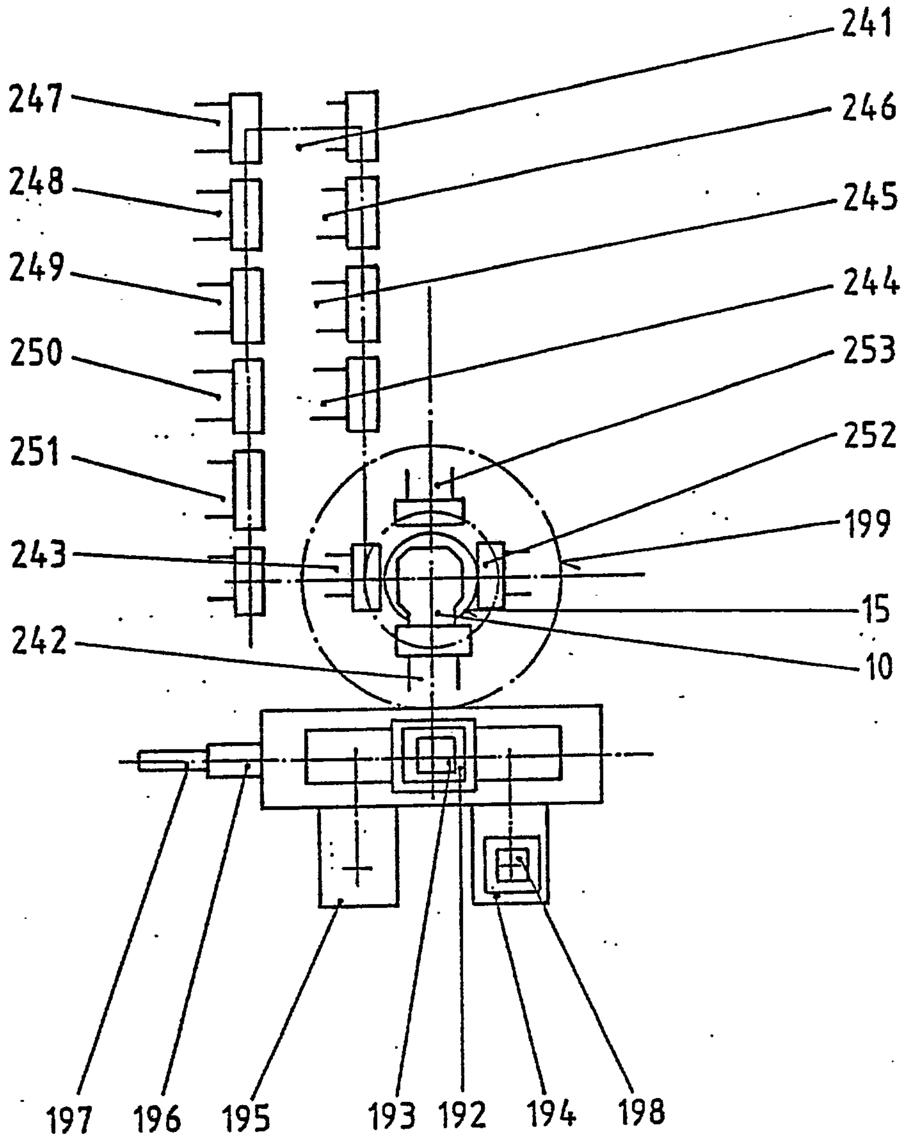
241
247
246
248
245
249
244
250
253
252
251
199
243
15
242
10
197
196
195
193
192
194
198

FIG. 32

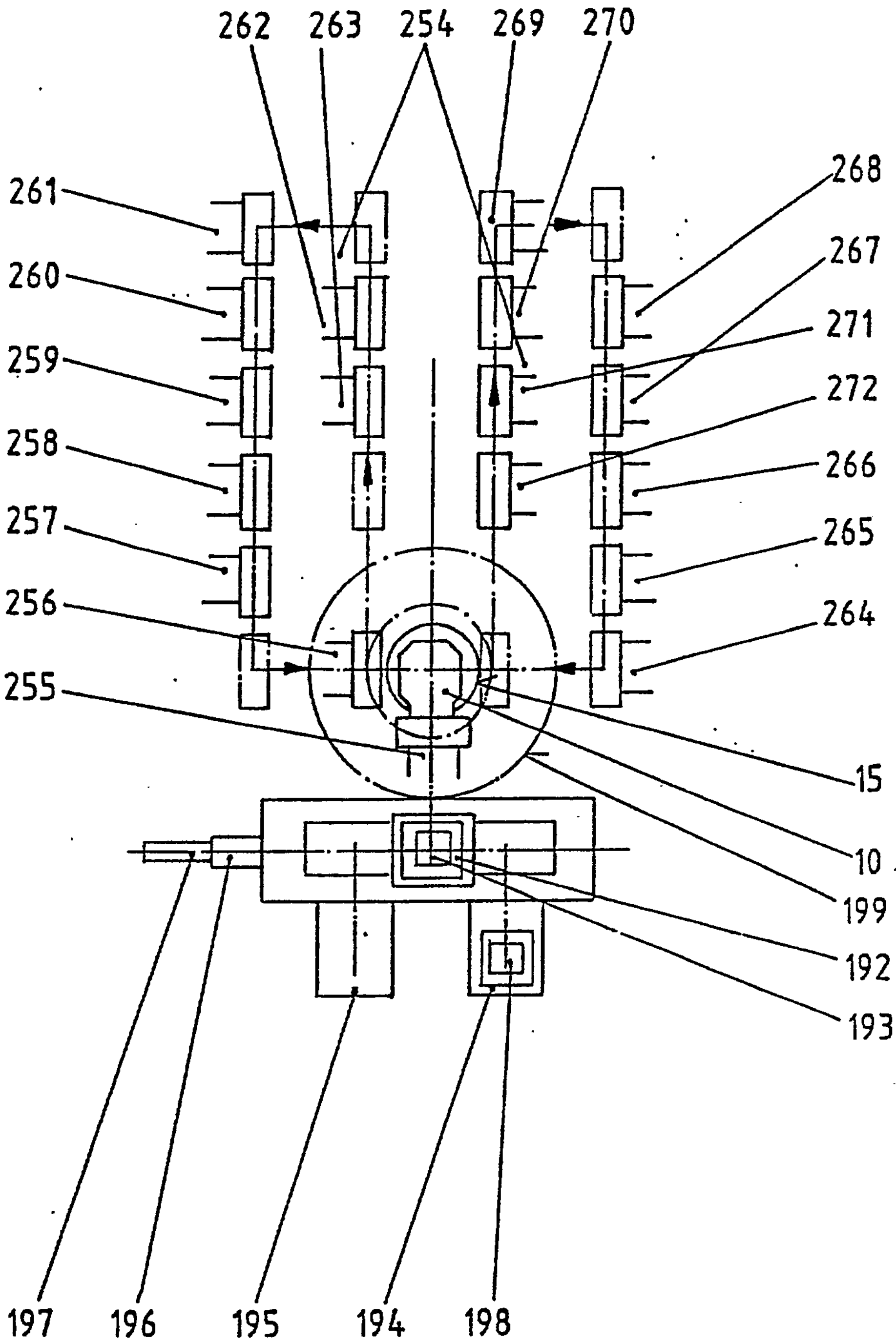
262
263
254
269
270
261
260
259
258
257
256
255
268
267
271
272
266
265
264
15
10
199
192
193
197
196
195
194
198

Fig. 33

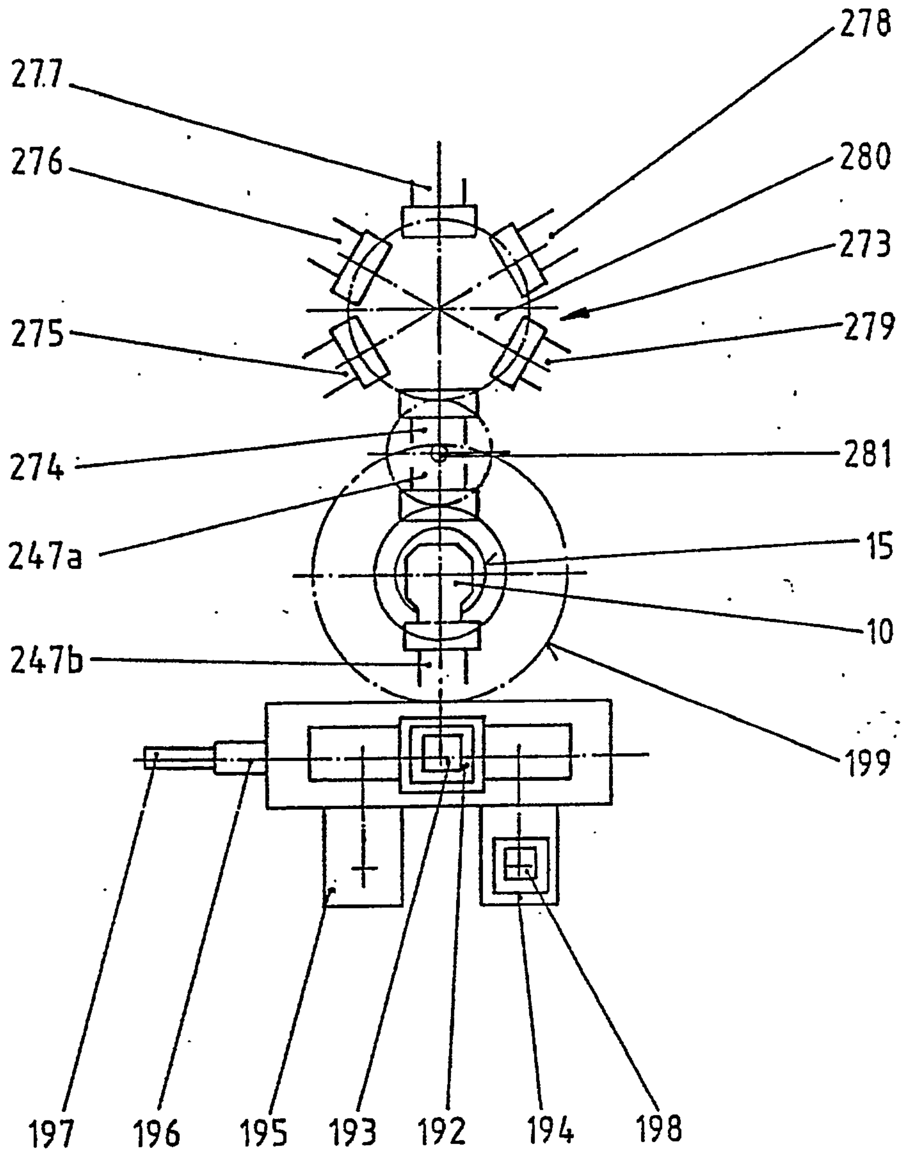
277
276
275
274
247a
247b
278
280
273
279
281
15
10
199
197
196
195
193
192
194
198

Fig. 34

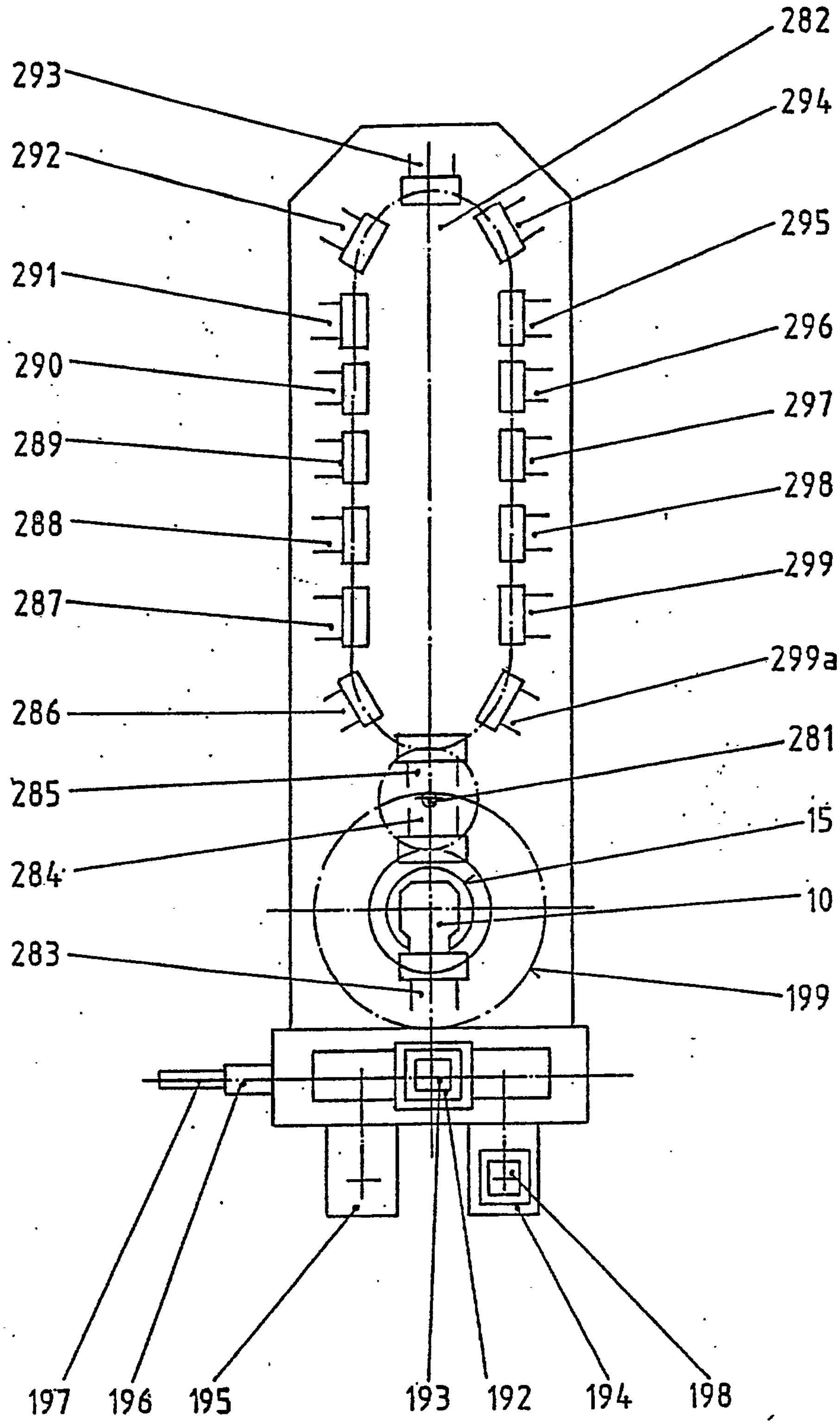
282
293
294
292
295
291
296
290
297
289
298
288
299
287
299a
286
281
285
15
284
10
283
199
197
196
195
193
192
194
198

Fig. 35

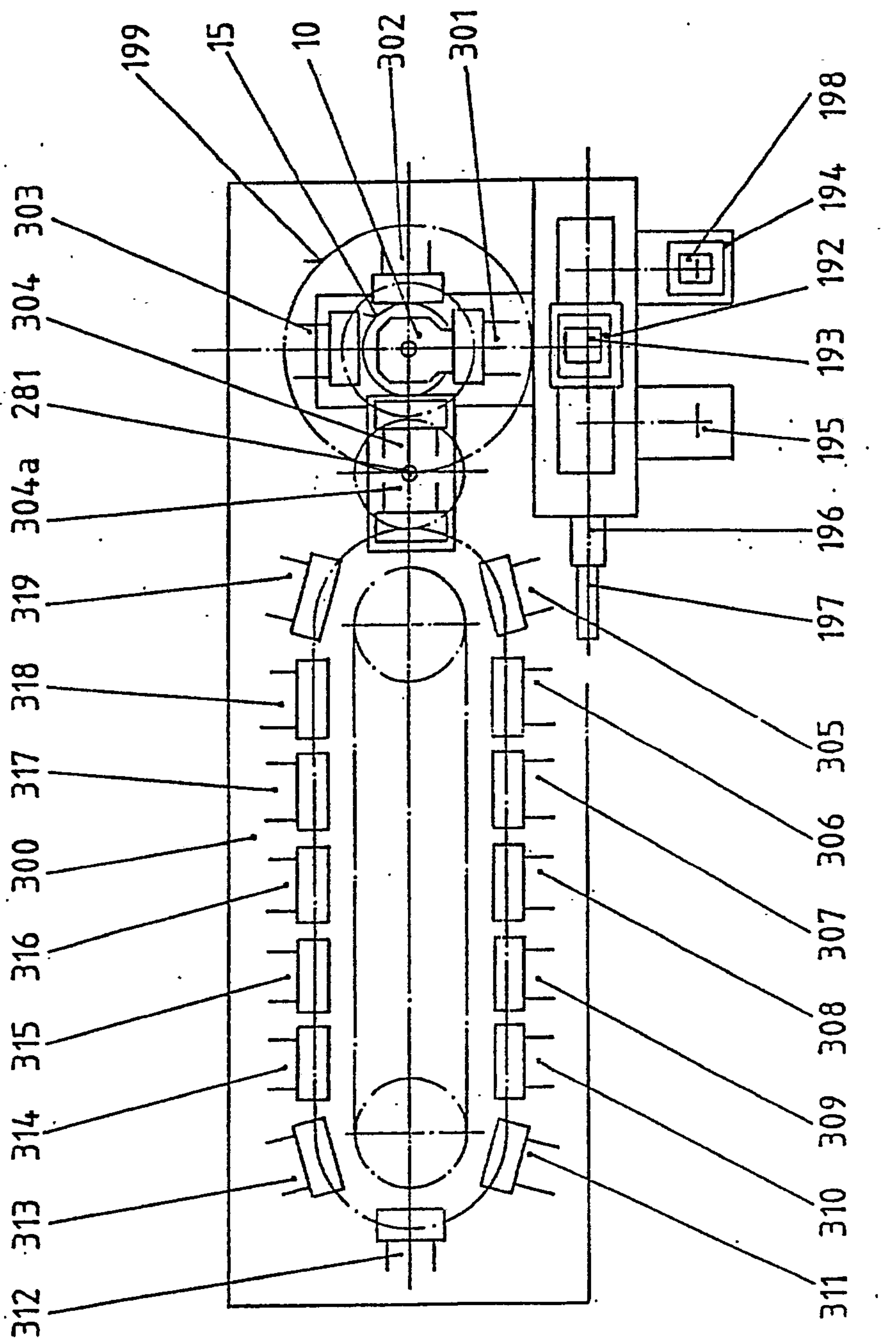
199
15
10
302
301
198
194
192
193
195
196
197
303
304
281
304a
319
318
317
300
316
315
314
313
312
305
306
307
308
309
310
311

Fig. 36

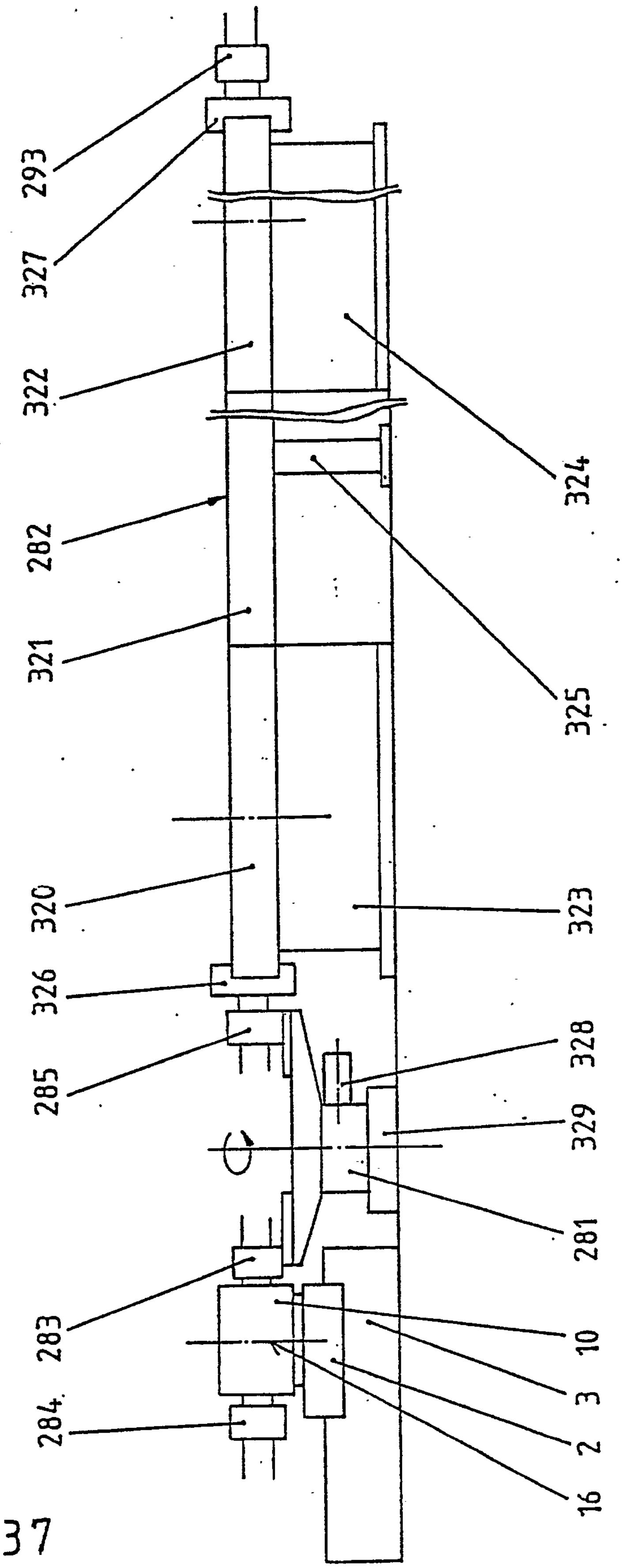
293
327
322
282
321
320
326
285
283
284
324
325
323
328
329
281
10
3
2
16

Fig. 37

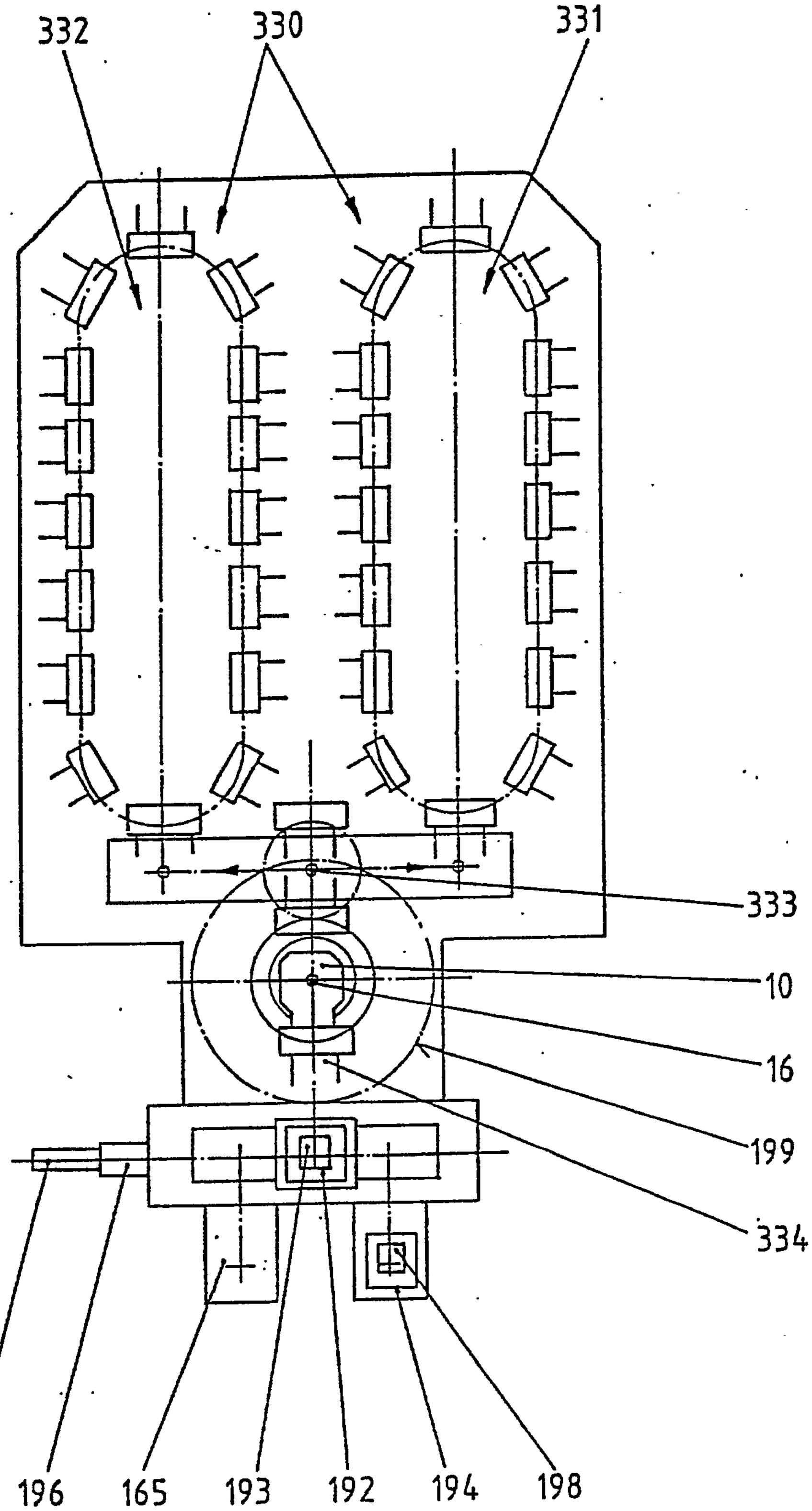


Fig. 38

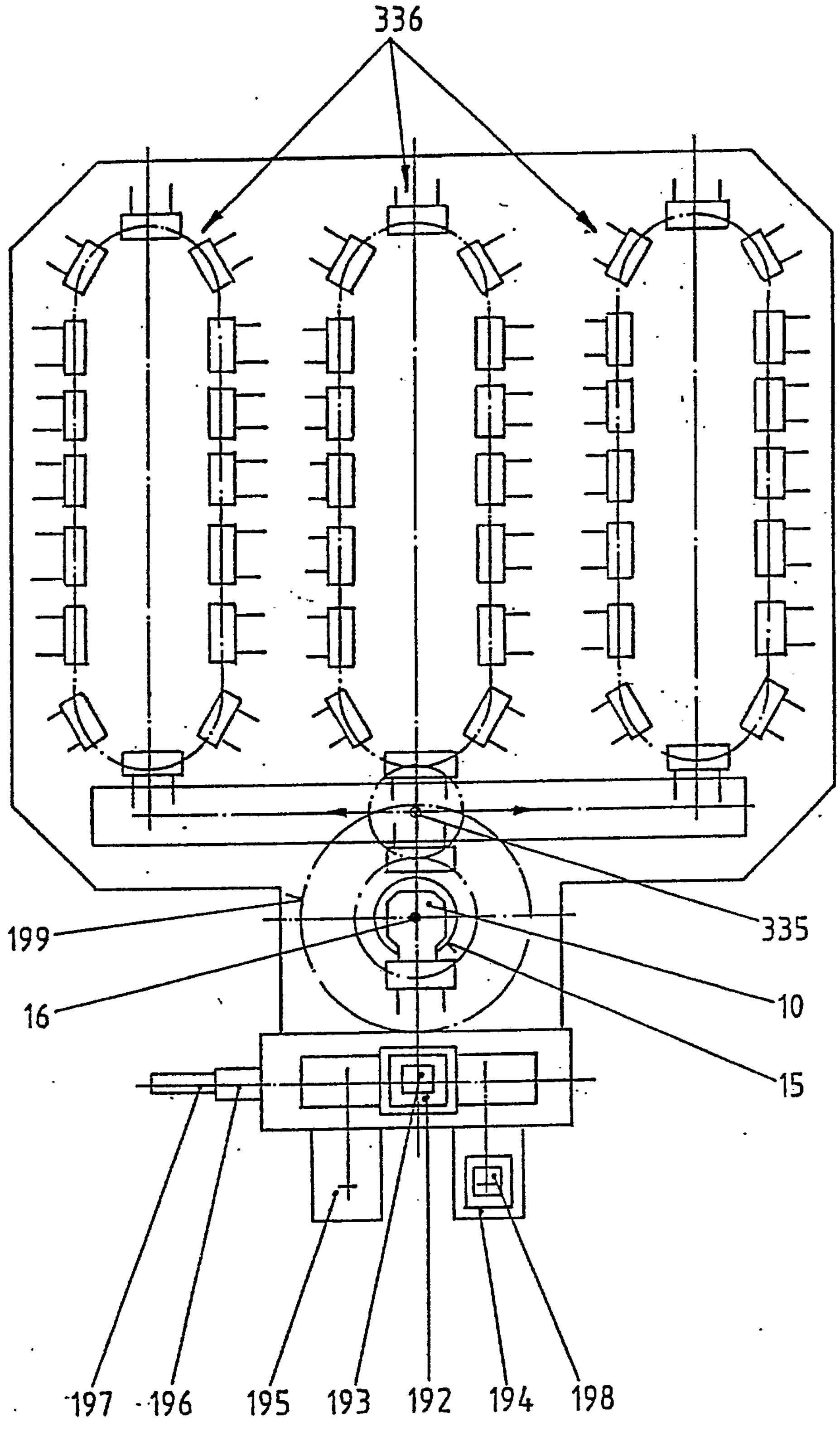


Fig. 39

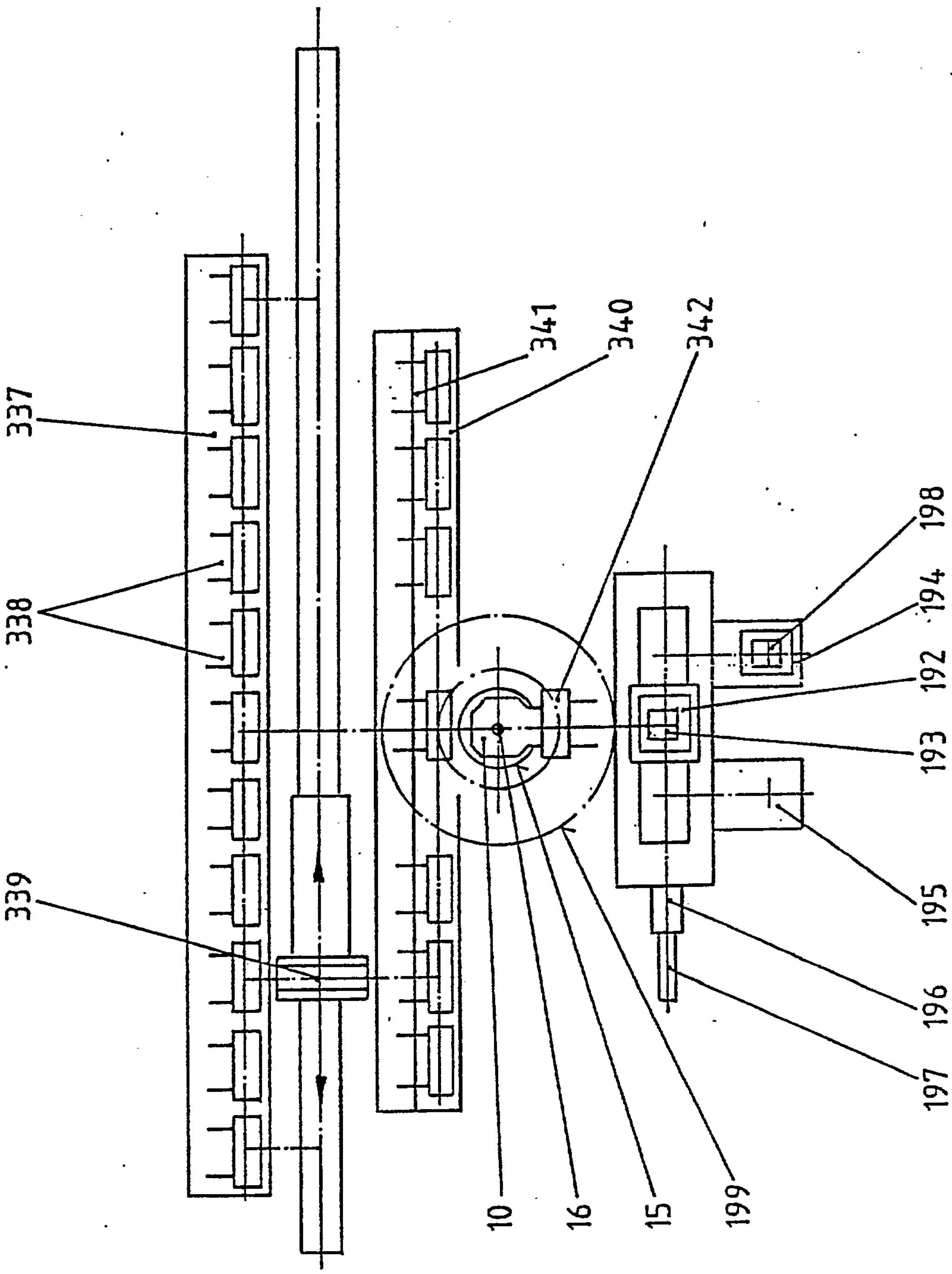


Fig. 40

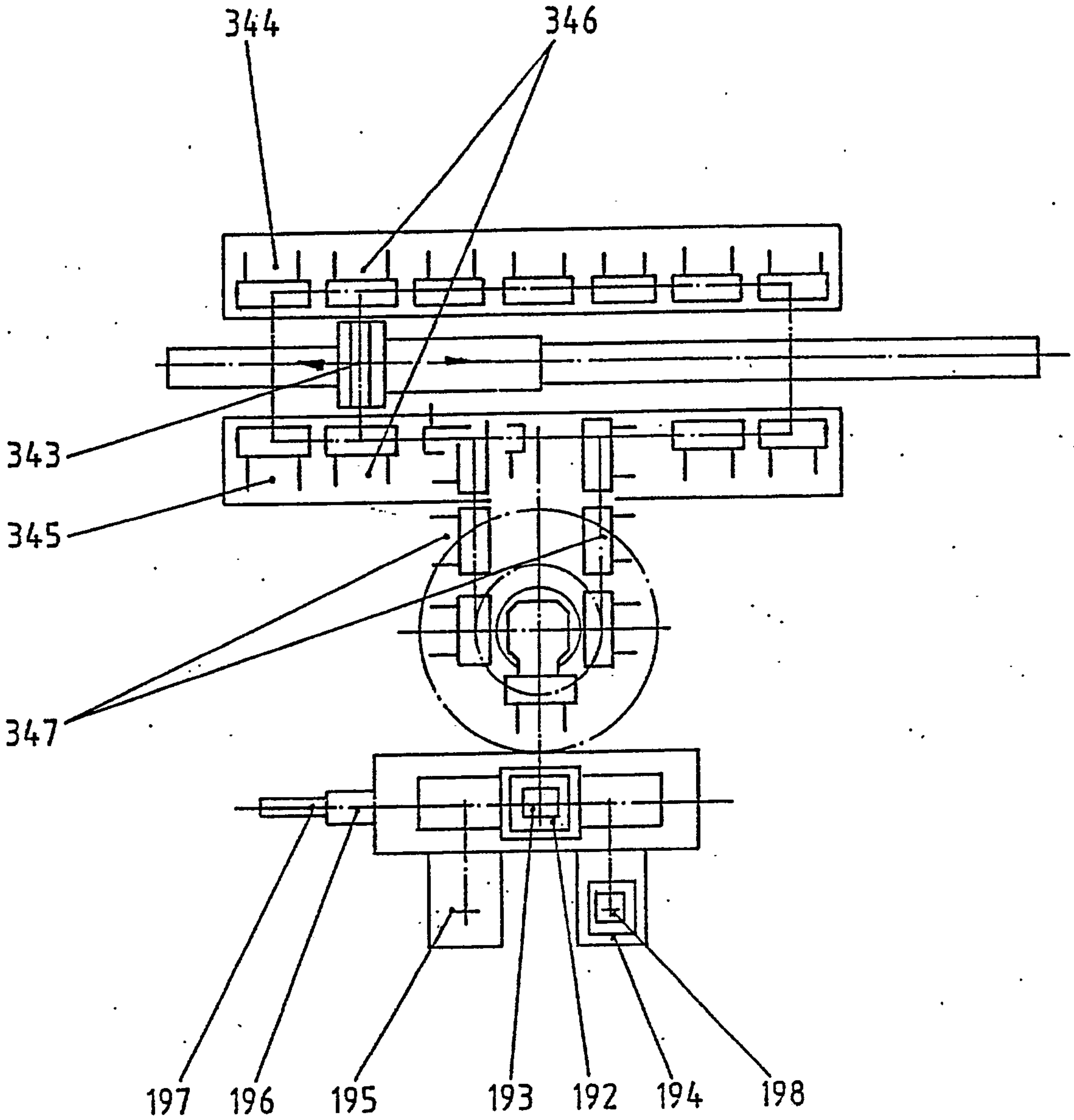


Fig. 41

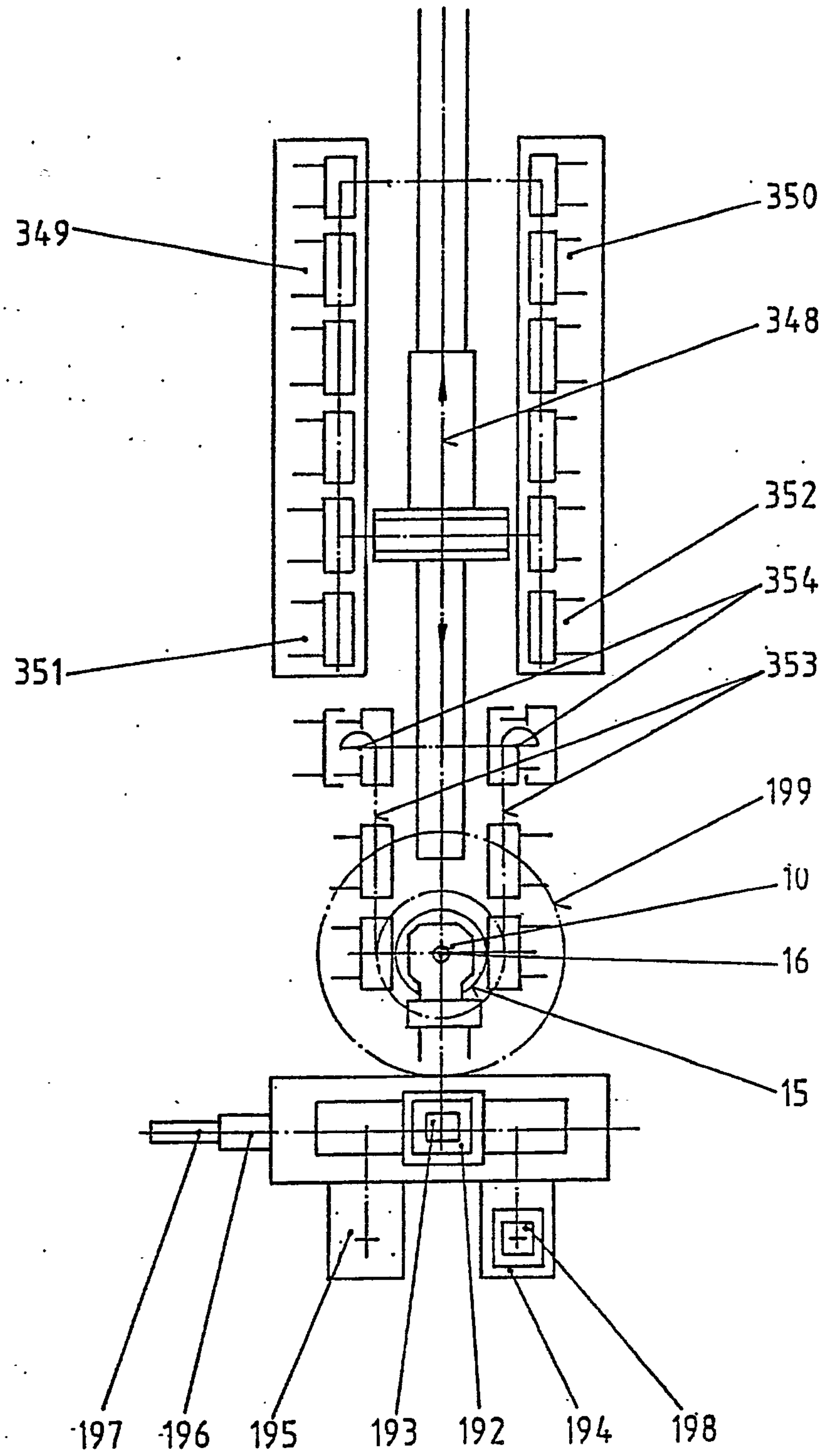
349
350
348
352
354
353
351
199
10
16
15
197
196
195
193
192
194
198

Fig. 42

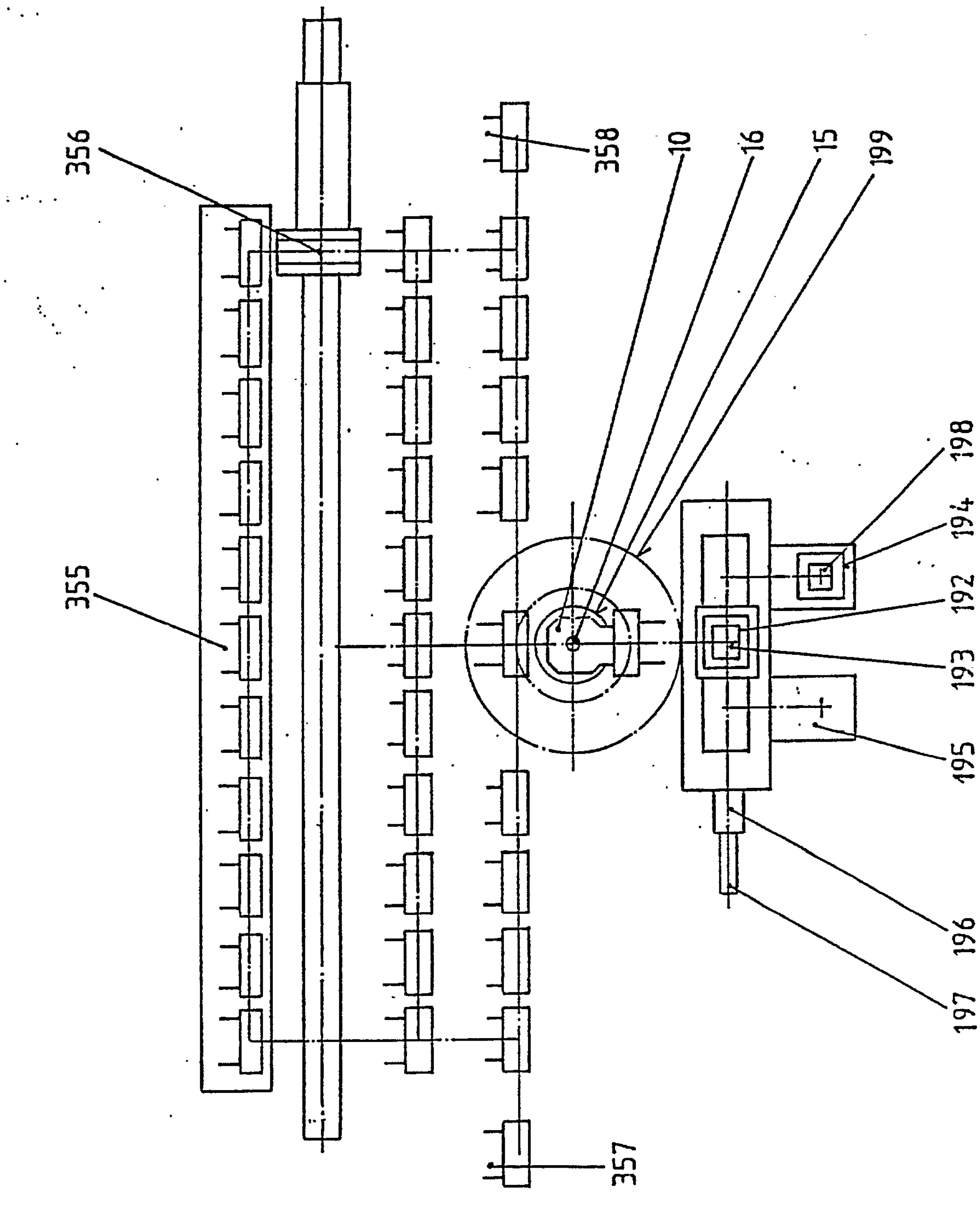


Fig. 43

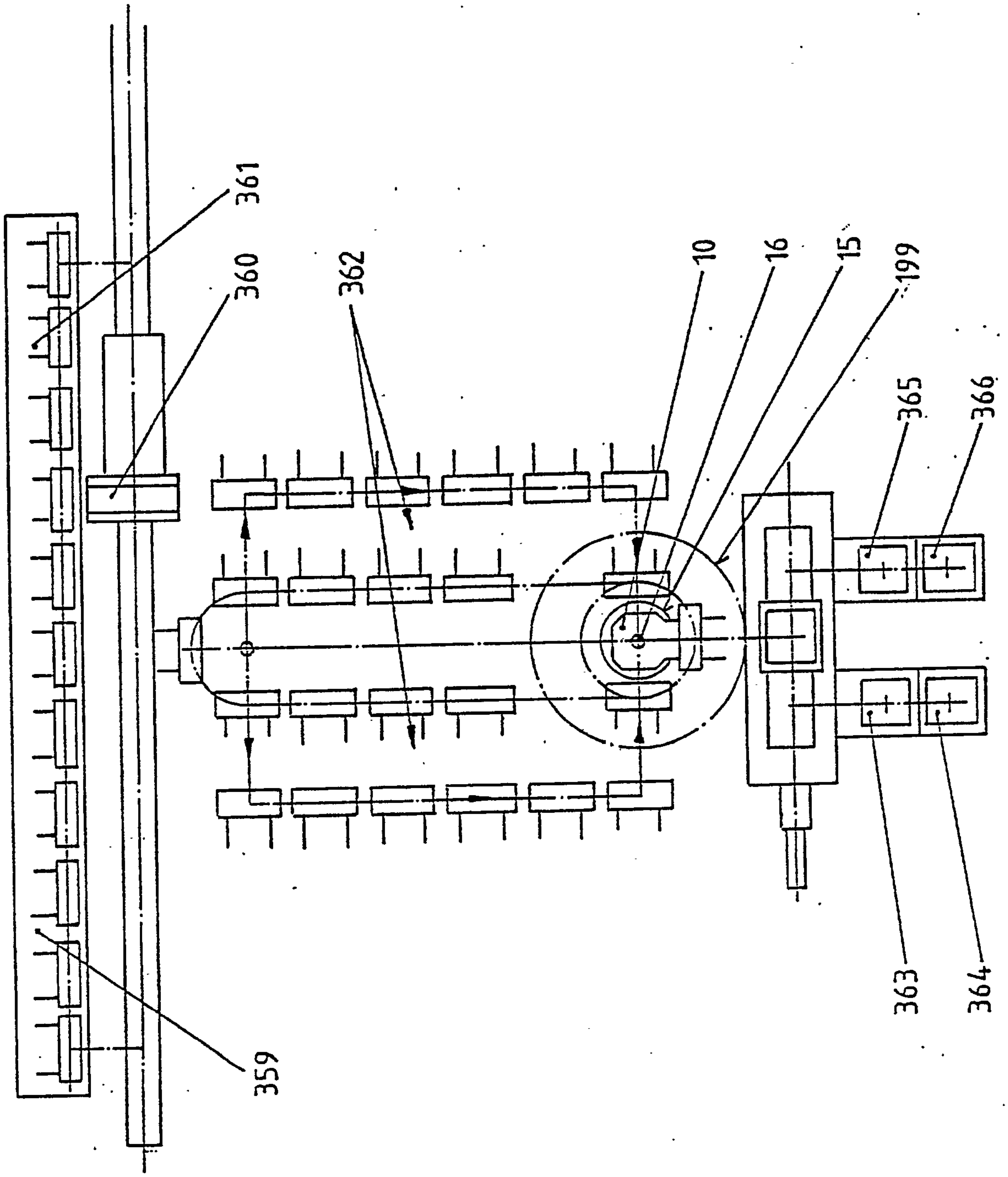


Fig. 44

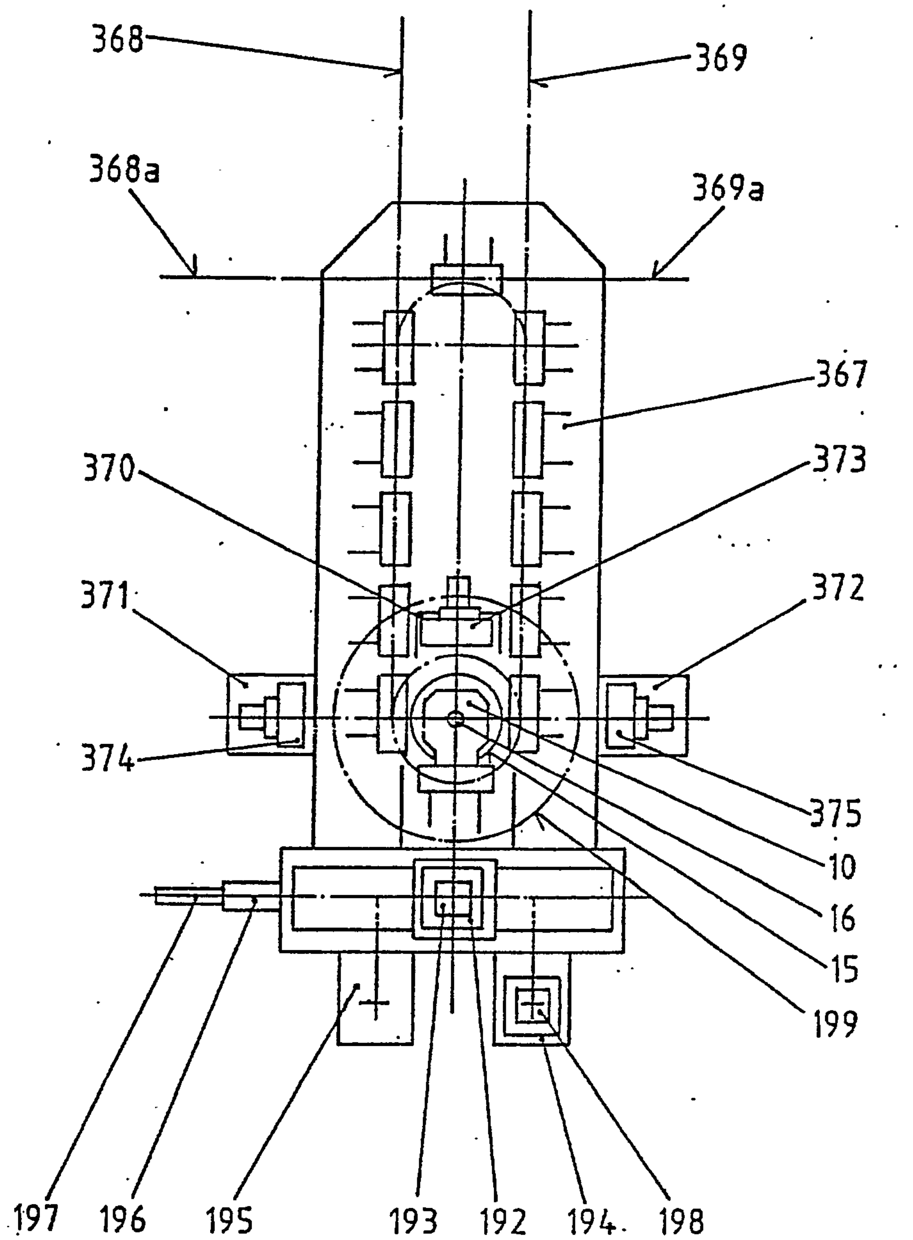
368
369
368a
369a
367
370
373
371
372
374
375
10
16
15
199
197
196
195
193
192
194
198

Fig. 45

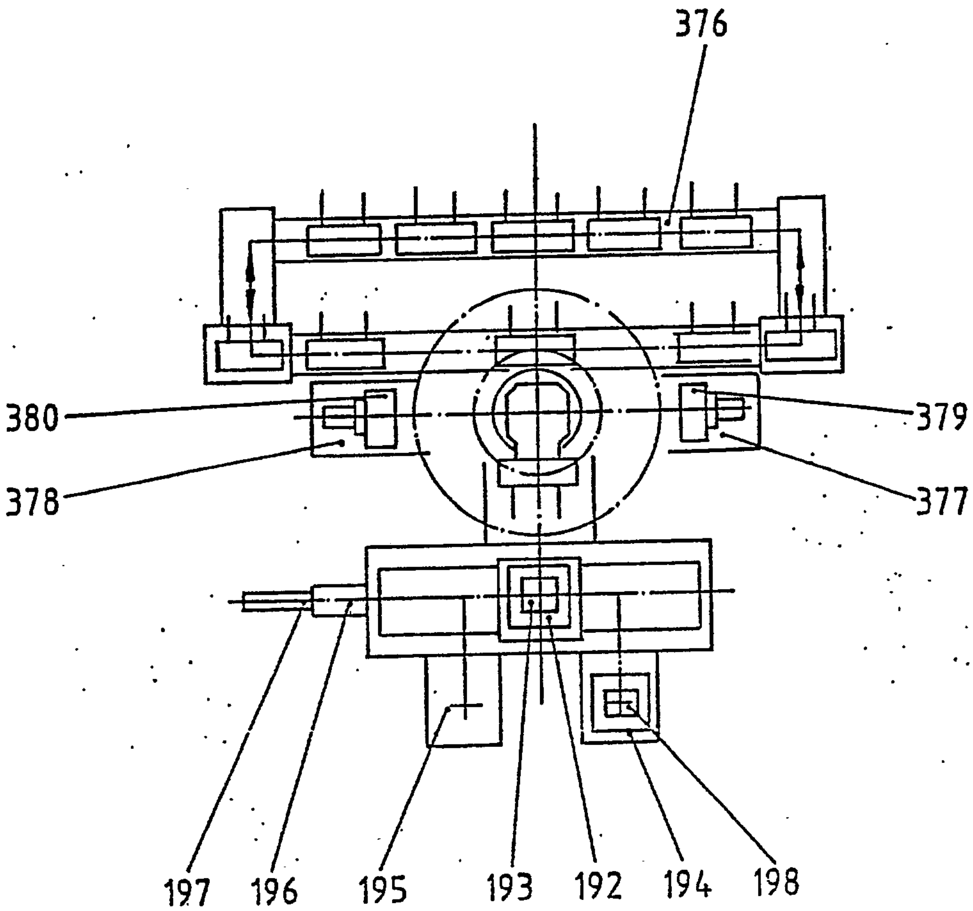


Fig. 46